# EUROPEAN PATENT APPLICATION

(11) **EP 1 816 766 A2**
(43) Date of publication of application: **08.08.2007**
(21) Application number: 07002210.8
(22) Date of filing: 01.02.2007
(51) Int. Cl.: H04H 1/00

(54) **Method and apparatus for transmitting and receiving notification message in a mobile broadcast system**

(30) Priority: 01.02.2006 KR 20060009870; 22.02.2006 KR 20060017456; 11.04.2006 KR 20060033008; 09.06.2006 KR 20060052225; 30.06.2006 KR 20060061114; 16.08.2006 KR 20060077359; 22.09.2006 KR 20060092506
(71) Applicant: Samsung Electronics Co., Ltd., Suwon-si, Gyeonggi-Do (KR)
(72) Inventor: Song, Jae-Yeon c/o Samsung Electronics Co., Ltd.,, Suwon-si Gyeonggi-do (KR); Lee, Kook-Heui c/o Samsung Electronics Co., Ltd.,, Suwon-si Gyeonggi-do (KR); Lee, Jong-Hyo c/o Samsung Electronics Co., Ltd.,, Suwon-si Gyeonggi-do (KR); Jung, Bo-Sun c/o Samsung Electronics Co., Ltd.,, Suwon-si Gyeonggi-do (KR); Hwang, Sung-Oh c/o Samsung Electronics Co., Ltd.,, Suwon-si Gyeonggi-do (KR)
(74) Representative: Grünecker, Kinkeldey, Stockmair & Schwanhäusser Anwaltssozietät

(57) **Abstract**

Disclosed is a method for transmitting a notification message in a mobile broadcast system that includes transmitting common notification message channel information necessary for receiving a common notification message for all users capable of receiving broadcast services, along with an Electronic Service Guide (ESG) for the broadcast services or a control signal for the broadcast services; transmitting specific notification message channel information necessary for receiving a specific notification message for a specific user group to a terminal in the specific user group along with the ESG; generating at least one of the common notification message and the specific notification message; and transmitting the generated notification message to the terminal using the corresponding channel information.

## Description

### BACKGROUND OF THE INVENTION

### 1. Field of the Invention

The present invention relates generally to a system supporting a mobile broadcast service, and, in particular, to a method and apparatus for transmitting a notification message indicating a change in system and service to one terminal or one group of terminals.

### 2. Description of the Related Art

Generally, a mobile broadcast system includes a process of discovering a service by a terminal apparatus capable of receiving mobile broadcast, subscribing to the service by the terminal, providing various control information for receiving the service, and transmitting the service, and receiving the service by the terminal. In the mobile broadcast system, the terminal, while in the mobile broadcast process, basically receives a notification message including a variety of information on the broadcast service while receiving the broadcast service.

In this system, while the terminal is receiving broadcast, changes may occur in the broadcast system due to several causes, and some of the changes can be the information that should necessarily be notified to the terminal. Such information may include, for example, a change in mobile broadcast service time, a change in information for reception of the mobile broadcast service, and the like.

The information essential for service discovery by the terminal in the mobile broadcast process is an Electronic Service Guide (ESG) having information on the mobile broadcast service. Terminals should necessarily receive the ESG to start receiving the mobile broadcast service.

Some of the ESG information is subject to change at any time, and every time the corresponding information changes, an ESG for the corresponding service should be continuously and repeatedly transmitted. In addition, if the advent of a new terminal is taken into account due to the characteristic of the mobile broadcast, an ESG for the mobile broadcast service should be repeatedly transmitted even though it may not undergo any change. That is, for example, if the user powers-on the terminal to newly receive the mobile broadcast, or if a terminal newly comes from a neighbor cell due to movement of the user, then the terminal should receive an ESG separately from the terminals that have already been receiving the mobile broadcast. Therefore, even though the terminal has already received the ESG for the mobile broadcast service, it continuously receives the ESG for the mobile broadcast service and constantly monitors whether the ESG is updated. In the conventional broadcast system, in order to detect the update of the ESG or the change in the service and system, the terminal should constantly monitor the session where corresponding information is transmitted, thereby unnecessarily consuming power consumption and wasting system resources.

### SUMMARY OF THE INVENTION

An aspect of the present invention is to address at least these problems and/or disadvantages and to provide at least the advantages described below. Accordingly, an aspect of the present invention is to provide a method and apparatus for generating and transmitting a notification message in a mobile broadcast system supporting a broadcast service.

Another aspect of the present invention is to provide a method and apparatus for transmitting a notification message to a mobile terminal that is sleeping or accessing an interactive network in a mobile broadcast system supporting a broadcast service.

According to one aspect of the present invention, there is provided a method for transmitting a notification message in a mobile broadcast system. The message transmission method includes transmitting common notification message channel information necessary for receiving a common notification message for all users capable of receiving broadcast services, along with an Electronic Service Guide (ESG) for the broadcast services or a control signal for the broadcast services; transmitting specific notification message channel information necessary for receiving a specific notification message for a specific user group to a terminal in the specific user group along with the ESG; generating at least one of the common notification message and the specific notification message; and transmitting the generated notification message to the terminal using the corresponding channel information.

According to another aspect of the present invention, there is provided a method for receiving a notification message in a mobile broadcast system. The message reception method includes receiving a control signal for broadcast services via a broadcast network; receiving an Electronic Service Guide (ESG) for the broadcast services; extracting, from the ESG or the control signal, common notification message channel information necessary for receiving a common notification message for all users capable of receiving the broadcast services; extracting, from the ESG, specific notification message channel information necessary for receiving a specific notification message for a specific user group; and receiving at least one of the common notification message and the specific notification message depending on the channel information.

According to further another aspect of the present invention, there is provided an apparatus for transmitting a notification message in a mobile broadcast system. The message transmission apparatus includes a common notification message channel information generator for generating common notification message channel information necessary for receiving a common notification message for all users capable of receiving broadcast services; a specific notification message channel information generator for generating specific notification message channel information necessary for receiving a specific notification message for a specific user group; an Electronic Service Guide (ESG) generation/delivery unit for transmitting at least one of the common notification message channel information and the specific notification message channel information to a terminal along with an ESG; a control signal generator for including the common notification message channel information in a control signal for the broadcast services, and transmitting the control signal to the terminal via a broadcast network; a notification message generator for generating at least one of the common notification message and the specific notification message; and a notification message transmitter for transmitting the generated notification message to the terminal using the corresponding channel information.

According to still another aspect of the present invention, there is provided an apparatus for receiving a notification message in a mobile broadcast system. The message reception apparatus includes a control signal receiver for receiving a control signal for broadcast services via a broadcast network; an Electronic Service Guide (ESG) receiver for receiving an ESG for the broadcast services; a notification message channel parser for extracting, from the ESG or the control signal, common notification message channel information necessary for receiving a common notification message for all users capable of receiving the broadcast services, and extracting, from the ESG, specific notification message channel information necessary for receiving a specific notification message for a specific user group; and a notification message receiver for receiving at least one of the common notification message and the specific notification message depending on the channel information.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating a functional configuration for delivering a notification broadcast message in a mobile broadcast system according to the present invention;
FIG. 2 is a block diagram illustrating a data model of an ESG according to the present invention;
FIG. 3 is a diagram illustrating an ESG delivery structure according to the present invention;
FIG. 4 is a flowchart illustrating the overall flow according to the present invention;
FIG. 5 is a flowchart illustrating an operation of transmitting notification message channel information according to the present invention;
FIG. 6 is a flowchart illustrating an operation of receiving notification message channel information according to the present invention;
FIG. 7 is a diagram illustrating an ESG delivery structure for delivering notification message channel information according to the present invention;
FIG. 8A is a flowchart illustrating an operation of transmitting notification message channel information through an ESG bootstrap descriptor according to an embodiment of the present invention;
FIG. 8B is a flowchart illustrating an operation of receiving notification message channel information in an ESG bootstrap descriptor by a terminal according to the present invention;
FIG. 9A is a flowchart illustrating an operation of transmitting notification message channel information through an ESG acquisition fragment according to the present invention;
FIG. 9B is a flowchart illustrating an operation of receiving notification message channel information in an ESG acquisition fragment by a terminal according to the present invention;
FIG. 10A is a flowchart illustrating an operation of generating and transmitting notification message channel information through a PSI/SI signal according to another embodiment of the present invention;
FIG. 10B is a flowchart illustrating an operation of receiving notification message channel information in a PSI/SI signal by a terminal according to the present invention;
FIG. 11 is a flowchart illustrating an operation of transmitting a common notification message in a broadcast system according to the embodiments of the present invention;
FIG. 12 is a flowchart illustrating an operation of receiving a notification message by a notification client function block of a terminal in a mobile broadcast system according to the embodiments of the present invention;
FIG. 13 is a flowchart illustrating an operation of receiving a notification message by a notification client function block of a terminal connected to an interactive network according to the present invention;
FIG. 14 is a flowchart illustrating an operation of delivering a notification message in a broadcast system according to another embodiment of the present invention;
FIG. 15 is a flowchart illustrating an operation of receiving a notification message through a PSI/SI signal by a terminal according to the present invention;
FIG. 16 is a flowchart illustrating an operation of receiving a notification message through a PSI/SI signal by a terminal in a sleeping state according to the present invention;
FIG. 17 is a flowchart illustrating an operation of delivering a notification message in a broadcast system according to another embodiment of the present invention;
FIG. 18 is a flowchart illustrating an operation of receiving a notification message by a terminal according to the present invention;
FIG. 19 is a flowchart illustrating an operation of receiving and processing a notification message by a terminal according to the present invention;
FIG. 20 is a flowchart illustrating an operation of receiving and processing a notification message by a terminal in a sleeping state according to the present invention;
FIG. 21 is a flowchart illustrating a procedure for receiving and processing a notification message by a terminal according to another embodiment of the present invention;
FIG. 22 is a flowchart illustrating a procedure for generating and delivering a notification message in a mobile broadcast system according to the present invention;
FIG. 23 is a flowchart illustrating a procedure for receiving and processing a notification message by a terminal in a mobile broadcast system according to another embodiment of the present invention;
FIG. 24 is a flowchart illustrating a procedure for generating and delivering a notification message in a mobile broadcast system according to the present invention;
FIG. 25 is a block diagram illustrating architecture of a system in which a terminal receiving a notification message used for the purpose of advertisement or its similar purpose provides previously stored advertisement content or data to the user, according to an embodiment of the present invention;
FIG. 26 is a flowchart illustrating a procedure for receiving and processing a notification message by a terminal according to another embodiment of the present invention;
FIG. 27 is a flowchart illustrating another procedure for receiving and processing a notification message by a terminal according to the present invention;
FIG. 28 is a flowchart illustrating an operation of receiving and processing a notification message by a terminal according to another embodiment of the present invention;
FIGs. 29A and 29B provide a flowchart illustrating an operation of receiving and processing a notification message upon detecting a problem or a change in service delivery in a network according to of the present invention;
FIGs. 30A and 30B provide a flowchart illustrating an operation of receiving and processing a notification message by a terminal according to of the present invention;
FIG. 31 is a block diagram illustrating a broadcast system and a terminal for transmitting/receiving a notification message according to the present invention;
FIG. 32 is a block diagram illustrating a mobile broadcast system and a terminal for transmitting/receiving a notification message according to the present invention;
FIG. 33 is a block diagram illustrating a detailed structure of a terminal according to the present invention; and
FIG. 34 is a block diagram illustrating a broadcast system and a terminal for transmitting/receiving notification message channel information according to the present invention.

### DETAILED DESCRIPTION OF THE PREFFERED EMBODIMENTS

Preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for clarity and conciseness.

The present invention generates and transmits a notification message to a terminal receiving a mobile broadcast service, if there is a change in service or system, or if there is a need to make an emergency notification. The notification message can be delivered, regardless of whether the terminal is receiving or not receiving the broadcast service.

For convenience of description, after a description of a configuration of the mobile broadcast system is given, a detailed description will be made of a format of a notification message according to the present invention, and an operation of the system according thereto. For convenience, although the present invention is described herein using the names of the entities defined in, for example, 3rd Generation Partnership Project (3GPP) which is the asynchronous mobile communication standard, or Digital Video Broadcasting-Handheld (DVB-H), the present invention is not be limited to the standards and the names of the entities and can be applied to any system having similar technical background.

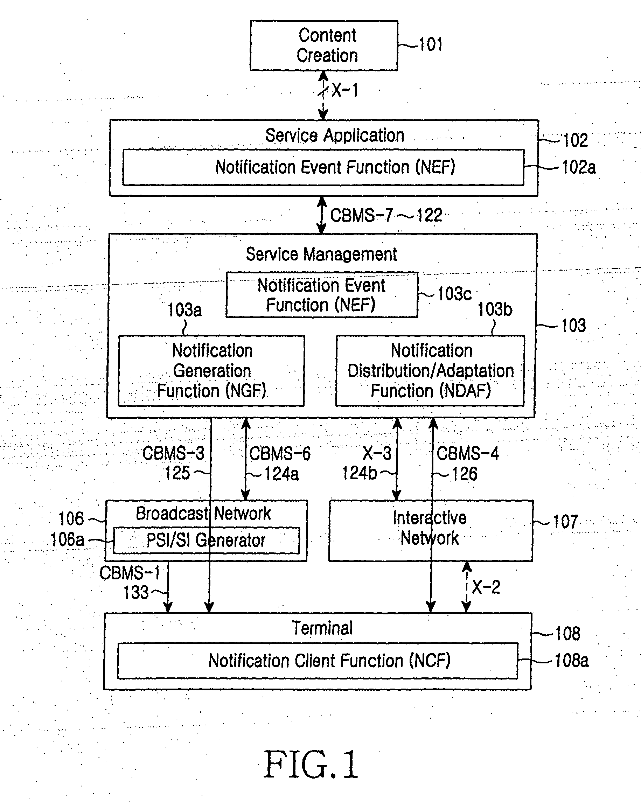

FIG. 1 is a diagram illustrating a functional configuration for delivering a notification broadcast message in a mobile broadcast system according to the present invention. The illustrated entities are logical entities which can be physically separated or cannot be separated, and the logical entities can be merged into one or more physical entities. Herein, only the interfaces associated with transmission of the notification message are shown, as the interfaces relate to the present invention.

The system shown in FIG. 1 is for Digital Video Broadcasting - Convergence of Broadcasting and Mobile Service (DVB-CBMS), which is one of the mobile broadcast terminal standard organizations. For convenience, although a notification broadcast configuration of DVB-CBMS will be described herein by way of example, the following description can be similarly applied to other mobile broadcast systems having the notification message function.

Referring to FIG. 1, a content creation block (CC) 101 is a provider of a broadcast service, and the broadcast service can be the conventional audio/video broadcast service, file (music file or data file) download service, and the like. If there is a problem or a change in providing the broadcast service, the content creation block 101 notifies the change to a notification event function block (NEF) 102a in a service application block (SA) 102 via an X-1 interface. The notification event function block 102a transmits a notification message event to a notification generation function block (NGF) 103a located in a service management block (SM) 103 based on the received event. In addition, even in the service management block 103, a notification event may spontaneously occur as occasion demands. In this case, a notification event function (NEF) 103c is included even in the service management block 103. In the service application block 102, a notification event related to a specific service generally occurs, and in the service management block 103, a common notification event generally occurs.

The service application block 102 takes charge of generating broadcast service data by processing content data of the broadcast service provided from the content creation block 101 into the format (for example, streaming audio/video, or file) suitable for a broadcast network, generating standardized metadata necessary for an ESG, and generating charging information for a user. In addition, the service application block 102 receives a notification indicating the change in the broadcast service from the content creation block 101, delivers a notification event to the notification generation function block 103a, and provides ESG attribute information used for generation of the notification message to the notification generation function block 103a.

The service management block 103 takes charge of determining transmission schedule of the broadcast service provided from the Service Application block (SA) 102 and generating an ESG, and is connected to a DVB-H network 106 capable of providing the broadcast service and an interactive network 107 supporting interactive communication. In addition, the service management block 103, which includes a Notification Distribution/Adaptation Function block (NDAF) 103b therein, receives a notification message transmitted from the service management block 103, and delivers the notification message to one terminal or one group of terminals via the broadcast network 106 or the interactive network 107. The service management block 103 has session information needed by the notification generation function block 103a for generating a notification message for terminal use, and the NDAF block 103b transmits the session information to the notification generation function block 103a.

The service management block 103 manages subscriber information for receipt of the broadcast service, service provisioning information such as the information indicating whether the subscriber has purchased the contents concerned, and device information for the terminals receiving the broadcast service, transmits user charging information to the service application block 102, and provides the subscriber information, the service provisioning information and the device information to the broadcast network 106 and the interactive network 107. In particular, upon receipt of a notification event indicating an addition or change of a new function from the content creation block 101, the service application block 102, the service management block 103 and the broadcast network 106, the service management block 103, as it includes the notification generation function block 103a, generates a notification message for the notification event, or generates a notification message for its own event indicating that contents will be provided in the broadcast service, i.e. the corresponding broadcast will be provided after a lapse of a predetermined time.

The broadcast network 106 is a network for transmitting a broadcast service, and DVB-H will be described herein as an example thereof. If there is a change in transmitting the broadcast service, the broadcast network 106 takes charge of notifying the change to the service management block 103 via a CBMS-6 interface 124a or an X-3 interface 124b.

Interactive network 107 transmits the broadcast service on a one-to-one basis, or bidirectionally exchanges control information and additional information related to receipt of the broadcast service, and can be the existing cellular network such as Code Division Multiple Access 2000 (CDMA2000) network or 3GPP Wideband Code Division Multiple Access (WCDMA) network.

Terminal 108 is a terminal device capable of receiving the broadcast service, and has a function capable of connecting with an interactive network using an interactive channel according to capability of the terminal device. It is assumed herein that terminal 108 can be connected to the cellular network as an example of the interactive network. Terminal 108, under the control of a notification client function block 108a, performs an appropriate operation on the received notification message transmitted via a CBMS-5 interface 125, or performs an appropriate operation on the received notification message transmitted via a CBMS-4 interface 126.

A description is now provided of interfaces between block elements of the mobile broadcast system.

CBMS-7 interface 122 is an interface from notification event function block 102a located in the service application block 102 to the notification generation function block 103a of the service management block 103, and carries information (for example, ESG attribute information) necessary for notification of an event or for generation of a notification message so that the notification generation function block 103a may generate a notification message.

CBMS-3 interface 125 is an interface used when a notification message transmitted from the NDAF block 103b of the service management block 103 is directly transmitted to the terminal 108 over a broadcast channel via the broadcast network 106, and is used for transmitting a notification message to one or a plurality of terminals.

CBMS-4 interface 126 is an interface used when a notification message transmitted from the NDAF block 103b of the service management block 103 is directly transmitted to the terminal 108 over a dedicated channel to the terminal 108 or a broadcast channel provided in the interactive network 107 or via the interactive network 107, and is used for transmitting a notification message to one or a plurality of terminals.

CBMS-6 interface 124a is an interface between the service management block 103 and the broadcast network 106, used for establishment of a transmission path to be used in the broadcast network 106 by the service management block 103, or a reception path of event information generated in the broadcast network 106.

X-3 interface 124b is an interface used for establishment of a transmission path to be used between the service management block 103 and the interactive network 107.

CBMS-1 interface 133 is an interface for delivering a control signal of the broadcast network 106, and the control signal corresponds to a control signal such as Program Specific Information/Service Information (PSI/SI) of, for example, the DVB-H network.

The notification event function block 102a takes charge of delivering the information necessary for generating a notification message to the notification generation function block 103a, and if the notification event function block 102a perceives occurrence of a notification-required event, it delivers information on the event to the notification generation function block 103a. The notification generation function block 103a takes charge of generating a notification message using the information and event necessary for generation of a notification message, received from the notification event function block 102a, or generating a notification message upon receipt of a notification event of the broadcast network 106 via the NDAF block 103b, and delivering the generated notification message to the NDAF block 103b. The notification generation function block 103a can generate the notification message either (i) when there is a need to renotify start of the service, (ii) when there is a need for transmitting a new ESG as it receives a notification indicating a change in the service information from the Content Creation block 101, or (iii) when a particular event occurs in the broadcast network 106.

The NDAF block 103b takes charge of delivering a notification message via the CBMS-3 125 or the CBMS-4 126, and upon receiving, from the broadcast network 106, the information indicating a change in the information on a particular mobile broadcast service, for example, the information indicating impossibility of data rate control or service impossibility due to the wireless network environment, the NDAF block 103b takes charge of delivering the corresponding notification event to the notification generation function block 103a.

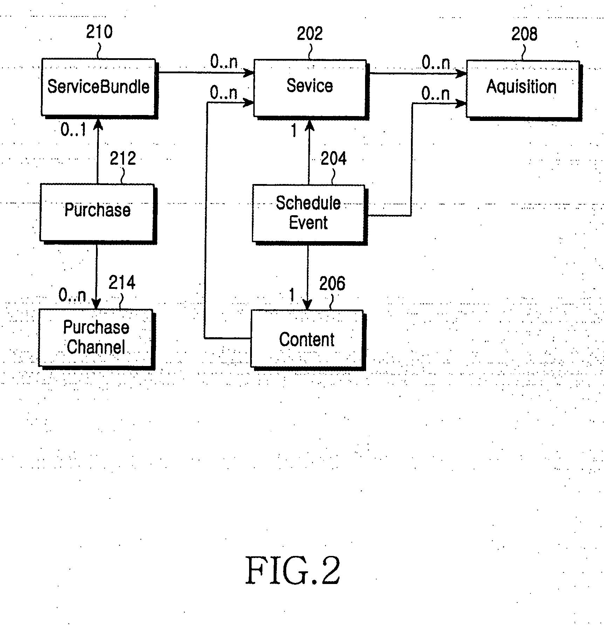

FIG. 2 illustrates a data model of an ESG according to the present invention. Herein, an ESG data model based on DVB-CBMS Phase I spec (ETSI TS 102 471) is provided as an example. Referring to FIG. 2, each of the illustrated blocks indicates a fragment of ESG data. That is, the ESG data model includes a service fragment 202, a schedule event fragment 204, a content fragment 206, an acquisition fragment 208, a Service Bundle fragment 210, a purchase fragment 212, and a purchase channel fragment 214.

The service fragment 202 includes a description of the overall service, the schedule event fragment 204 indicates information on the service classified by time, the acquisition fragment 208 includes service access information needed for receiving service data, the service bundle fragment 210 includes information indicating that several services are bundled into one service bundle, the purchase fragment 212 provides price information for purchasing the service bundle, and the purchase Channel fragment 214 provides information on the system that should be used for acquiring a right for the purchase.

Each of the fragments of the data model can make reference to other fragments, and an arrow between the fragments indicates the reference relationship. The term "reference" refers to an operation in which the current fragment provides its own associated information using information transmitted from another fragment. That is, when one service is composed of several contents, the service fragment 202 includes only a description of the entire service, for example, name of the service, language of the service, and the like, and does not include a description of the content itself transmitted through the service, and the content fragment 206 of the corresponding content makes reference to a service fragment of the corresponding service. In addition, in order to acquire a variety of information necessary for receiving the service, for example, session information used for a transmission protocol, the terminal can receive and demodulate the acquisition fragment 208 to which the service fragment 202 makes reference.

The ESG data is transmitted to the terminal using a specific Internet Protocol (IP) stream at a specific time, and the specific IP stream and the specific time are independent of those of the actual data stream. Therefore, the service provider can provide, before service delivery, the information that the user should previously have before receiving the service using the ESG data model. By receiving the ESG stream, the terminal acquires the information necessary for receiving the service provided by the service provider, and when the user selects a specific service, the terminal accesses the data stream on which the service is transmitted, using the acquired information, and then receives data on the data stream. The information needed by the terminal to access the service data stream is transmitted through the acquisition fragment, as described in FIG. 1.

The ESG data models are bundled for each individual fragment and contained in one container, and each container is regarded as one object in a File Delivery over Unidirectional Transport protocol (FLUTE) session during its transmission.

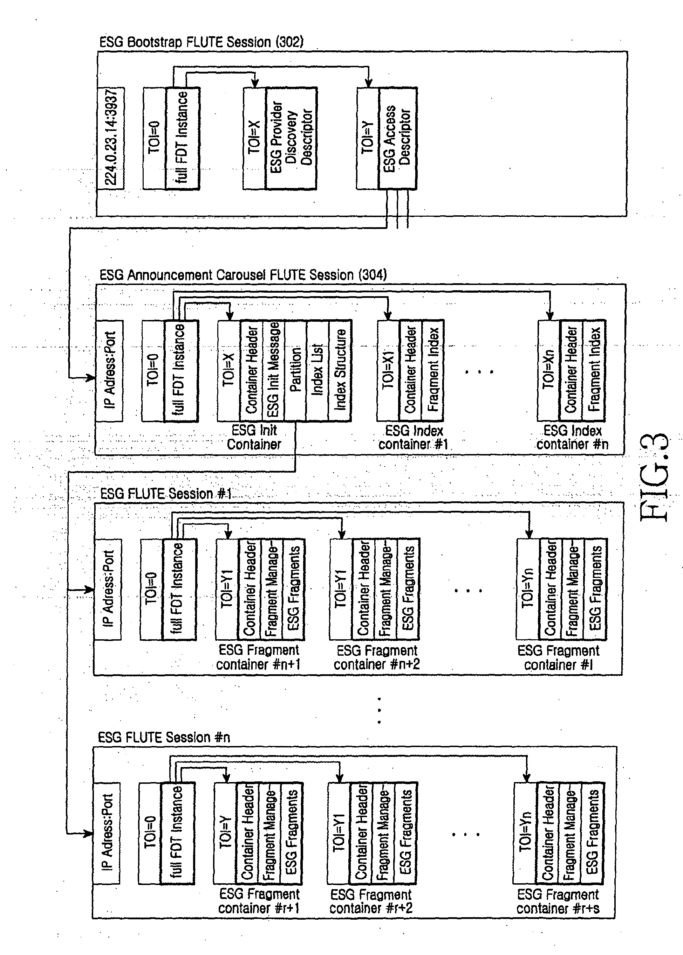

FIG. 3 illustrates an ESG delivery structure in DVB-CBMS according to the present invention. Referring to FIG. 3, for transmission of an ESG, a transmitter provides channel information of a bootstrap session 302 of the ESG to a terminal through a PSI/SI signal. If the terminal accesses a channel based on the channel information, it receives bootstrapping information, and the bootstrapping information is composed of ESG provider discovery descriptor and ESG access descriptor. The ESG provider discovery descriptor includes information related to ID, name and logo of an ESG provider, and the ESG access descriptor includes channel information for an announcement carousel session 304 of the ESG, and information on the number of and addresses of IP sessions where the ESG is transmitted.

In the announcement carousel session 304 of the ESG, ESG init container (ESG initialization container) and index information of the ESG, and information transmitted through the ESG init container is as follows. An ESG init message (ESG initialization message) includes an option of a decoder for paring of the ESG Partition information includes separation criterion information for each individual session and channel information of each session for the case where the ESG is transmitted over a plurality of sessions. Index list and index structure include mapping information between fragments of a transmission ESG and containers.

The ESG is contained in several containers during its transmission as described in FIG. 3, and each container is composed of fragment management information indicating information on the fragments constituting the corresponding container, and the ESG fragments are shown in FIG. 2.

Before providing a detailed description of an operation of receiving a notification message according to the present invention, types of the notification messages are described. The notification message can be roughly divided into two types.

First, a common notification message is delivered to all users on a general-purpose basis, and is used for disaster broadcast or system change. General notices of a service provider, an IP platform provider, an ESG provider, and/or a network provider correspond to the common notification message, and the common notification message includes the information that all users should have, regardless of their subscription to the services. The service provider, IP platform provider, the ESG provider and the network provider can be identical to or different from each other according to the network configuration and each business model. The IP platform provider is an entity for managing specific IP addresses, and the IP platform provider may not be mapped to the ESG provider on a one-to-one basis according to its configuration. In addition, this can be distinguished from the network provider that manages use of the network.

Second, a specific notification message is restrictively used for a specific service, and can be used for notifying a change and start of the service to the users receiving the specific service. The specific notification message can be generated and transmitted not only for each individual service, but also for each individual specific user group. The specific user group can be a user group formed through notification service subscription, or a user group formed when a network desires to transmit a notification message to a specific area. However, when it is desired to deliver a notification message to a user group formed through the serving subscription, the notification message can be transmitted on a point-to-point basis because individual subscriber information is managed. When a notification message is to be sent to a specific area, a user group located in the specific area is not separately managed.

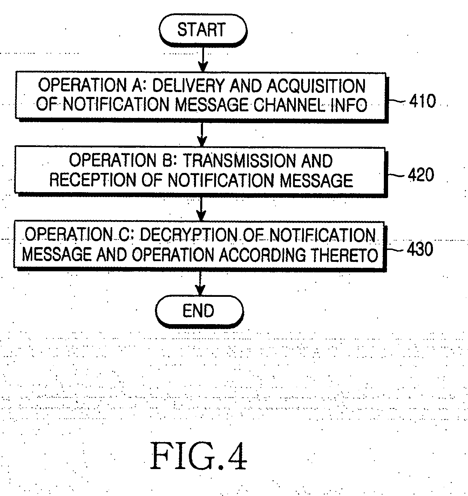

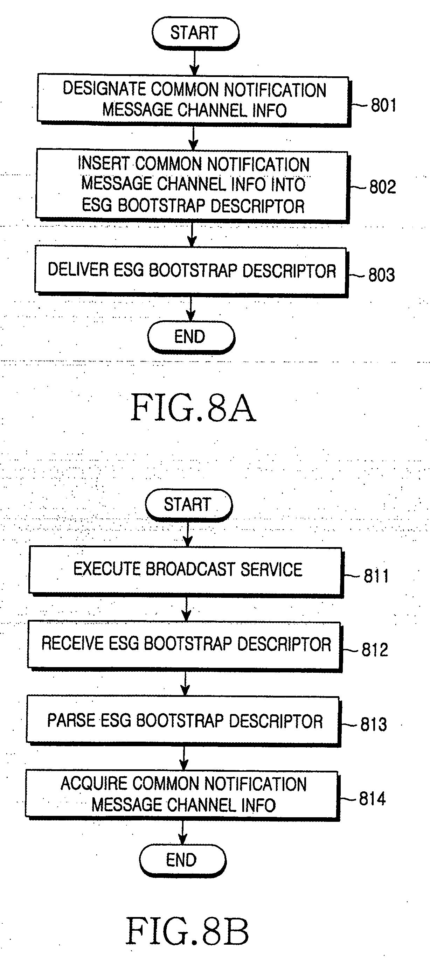

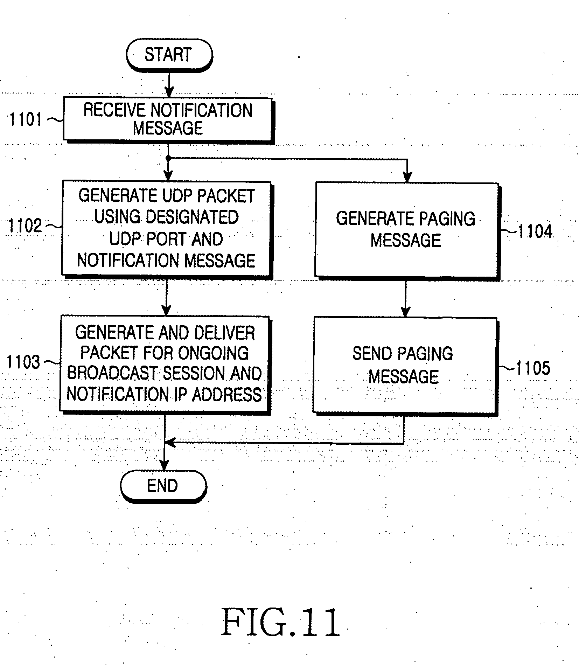

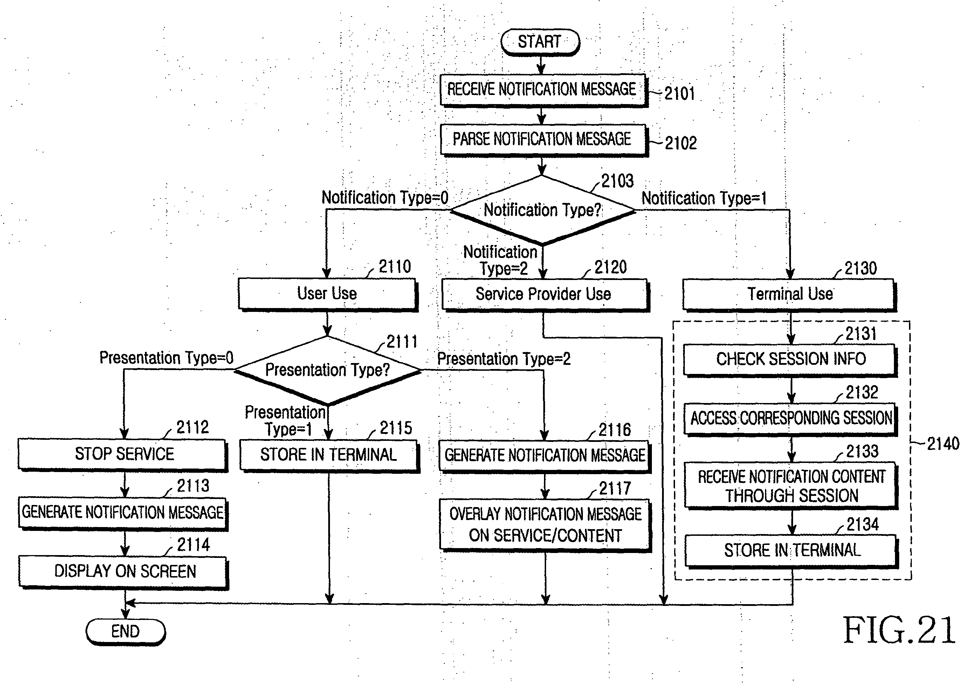

In transmission and reception of a notification message, the overall flow according to the present invention is shown in FIG. 4. As shown in FIG. 4, the present invention roughly includes Operation A 410 of delivering and acquiring notification message channel information, Operation B 420 of transmitting and receiving a notification message, and Operation C 430 of parsing, by a terminal, a received notification message and responding thereto. Operation A 410 is described with reference to FIGs. 8A through 20 Operation B 420 is described with reference to FIGs. 11 to 20, and Operation C 430 is described with reference to FIGs. 21-30.

### I. Operation A 410

In one embodiment, notification message channel information is transmitted to a terminal using an ESG delivery mechanism, and the terminal receives a packet including a notification message using the channel information. In another embodiment, notification message channel information is transmitted to a terminal with PSI/SI signaling, and the terminal detects that a received packet includes a notification message, using the channel information. In another embodiment, a notification message is transmitted to a terminal with PSI/SI signaling. In this case, because the PSI/SI signaling is a control signal that the terminal basically receives when accessing the DVB-H system, there is no need for transmission of the notification message channel information. In another embodiment, a notification message is transmitted to a terminal on an ESG. This embodiment transmits a notification message by extending the ESG data model of FIG. 2, and has no need for transmitting the notification message channel information through a separate path.

With reference to Table 1, a description is provided of notification message channel information corresponding to FIGs. 8-13, using one of Tables 1A, to 1G. Although a description of Operation B 420 and Operation C 430 will herein be made using Table 1A for convenience, it will be recognized that the other formats can also be used. In addition, channel information of any one of Tables 1 to 1G can be used for both the common notification message and the specific notification message.

Particularly, Table 1B and Table 1C are preferably used when notification message channel information is inserted, for example, in an acquisition fragment of the ESG. Table 1A includes only the basic channel information for receiving a notification message. Because Table 1B and Table 1C include information indicating what type of a notification message a terminal can receive when it should receive several types of notification messages, they can be used when there is an intention to provide the user with channel information for the notification messages which are inserted in the acquisition fragment of the ESG and associated with the specific service.

All formats of Table 1 can be applied to common notification message channel information and transmitted through an ESG bootstrap session or an announcement carousel session. A detailed example for transmission of the common notification message channel information is presented in Table 2. For the common notification message, one transmission channel is used basically, but a plurality of transmission channels can also be used. Tables 1B through 1G can be used when a plurality of notification messages having different types are transmitted in a notification message transmission channel identified by one IP address. That is, for one IP address, several notification message types can be defined.

Table 1G shows an exemplary case where a Session Description Protocol (SDP) file is used as notification message channel information, the SDP file including other information such as notification message session as well as IP address and port number. The SDP file includes therein general information, such as the IP address, the port number, type of used media, used transport protocol, timing information of session, etc. For identification of the notification message and filtering of the notification message in the terminal, the IP address and the port number are the most basic, but the other informations can be acquired by the terminal using the general SDP file. As shown in Table 1G, at least one of 'SDPRef and 'inlinedSDP' is used for containing the notification message channel information. 'SDPRef' indicates URI information, to which reference is made for a location of the SDP file, and 'inlinedSDP' is used for directly transmitting the information of the SDP file in the channel information.

**Table 1A**

| Name | Type | Category | Description |
|---|---|---|---|
| NotificationEntry | E | M | An entry for Notification message |
| NotificationPort | A | M | Port of Notification Message delivery |
| NotificationAddress | A | O | IP address of Notification Message delivery |

**Table 1B**

| Name | Type | Category | Description |
|---|---|---|---|
| NotificationEntry | E | M | An entry for Notification message |
| NotificationType | A | M | Notification Event Type |
| NotificationPort | A | M | Port of Notification Message delivery |
| NotificationAddress | A | O | IP address of Notification Message delivery |

**Table 1C**

| Name | Type Category | | Description |
|---|---|---|---|
| NotificationEntry | E | M | An entry for Notification message |
| NotificationType | A | M | Notification Type |
| NotificationEventType | A | M | Notification Event Type |
| NotificationPort | A | M | Port of Notification Message delivery |
| NotificationAddress | A | O | IP address of Notification Message delivery |

**Table 1D**

| Name | Type | Category | Description |
|---|---|---|---|
| NotificationEntry | E | M | An entry for Notification message |
| NotificationType | A | M | Notification Event Type |
| NotificationPort | A | O | Port of Notification Message delivery |
| NotificationAddress | A | M | IP address of Notification Message delivery |

**Table 1E**

| Name | Type | Category | Description |
|---|---|---|---|
| NotificationEntry | E | M | An entry for Notification message |
| NotificationType | A | M | Notification Type |
| NotificationEventType | A | M | Notification Event Type |
| NotificationPort | A | O | Port of Notification Message delivery |
| NotificationAddress | A | M | IP address of Notification Message delivery |

**Table 1F**

| Name | Type | Category | Description |
|---|---|---|---|
| NotificationEntry | E | M | An entry for Notification message |
| NotificationPort | A | O | Port of Notification Message delivery |
| NotificationAddress | A | M | IP address of Notification Message delivery |

**Table 1G**

| Name | Type | Category | Description |
|---|---|---|---|
| NotificationEntry | E | M | An entry for Notification message |
| SDPRef | A | O | Notification session description information including IP address and Port number |
| inlinedSDP | A | O | Notification session description information including IP address and Port |

In Table 1, the Name column indicates names of elements and attributes constituting the corresponding message, and the Type column indicates the type (element or attribute) of the corresponding name. The elements have values E1, E2, E3 and E4, where E 1 indicates an upper element for the entire message, E2 is a sub-element of E1, E3 indicates a sub-element of E2, and E4 indicates a sub-element of E3. The attribute is denoted by "A", and A indicates an attribute of the corresponding element. For example, A under E1 indicates an attribute of E1. In addition, the Category column is used for determining whether the corresponding element or attribute is mandatory or optional, with "M" being a mandatory value when the corresponding element or attribute is mandatory, and has an "O" being an optional value when the corresponding element or attribute is optional.

'NotificationEntry' is an information element that has two attributes of 'NotificationPort' and 'NotificationAddress'. The 'NotificationPort' and the 'NotificationAddress' indicate information on the channel over which the terminal can receive a notification message. In most mobile broadcasts, use of an IP as data transmission technology is discussed, and on the assumption of the use of the IP, the system provides the terminal with information on the IP address to which a notification message will be delivered, and also provides information on the port number so that an upper layer of the IP layer may distinguish each Internet applications. When the IP protocol is used, the information that the terminal can use in order to distinguish each application includes an IP address and a port number of the transport protocol. The port number is determined according to the transport protocol through which the notification message is delivered. That is, assuming that a User Datagram Protocol (UDP) is used, a UDP port number is notified. Then the terminal can receive a notification message according to the IP address and the UDP port number. The reason why the UDP is used is because the UDP is small in header overhead of a UDP transmission protocol and is suitable for the characteristic of the broadcast service that does not support reception acknowledgement and is unidirectionally achieved.

When the notification message is transmitted on a point-to-point basis, Transmission Control Protocol (TCP) can be used instead of the UDP. Therefore, it should be understood that for point-to-point transmission, a TCP port is used as a notification message port, unless stated otherwise. Although it will be assumed herein that a UDP port is used as a notification message port for convenience, the TCP port is used for point-to-point transmission. In addition, when Real Time Protocol (RTP) and/or File Delivery over Unidirectional Transport (FLUTE) protocol are additionally used over UDP as a transport protocol, ports of the corresponding protocols are notified. A format of detailed channel information therefor is shown in Table 1.

'NotificationPort' has a UDP port number previously allocated such that a network provider or a service provider may use it when sending a notification message. A terminal receiving a message transmitted through the UDP port designated for use of a notification message can immediately recognize the corresponding packet as a notification message and process the notification message because it has knowledge of the UDP port for notification message.

An operation of generating a notification message as a delivery message can be achieved in the notification event function block 102a or the NDAF block 103b of FIG. 1. Herein, an entity that generates the delivery message has information on all the ongoing session. That is, the entity can attach a notification message to the existing transport session for the message transmission without generation of a separate new session. A basic identification unit of the session is composed of an IP address, and the notification message uses an IP address of the ongoing session. The ongoing session can be a session associated with a specific ongoing service connected to the notification-required acquisition fragment.

If the entity delivers a notification message over the ongoing IP session with only a UDP port number being different, the terminal can immediately receive the notification message (common notification message or specific notification message associated with a service on the ongoing session) without the need for monitoring a separate session. The 'NotificationPort' can be used when the terminal is receiving a mobile broadcast service and there is a desire to deliver the notification message through an IP flow over which the mobile broadcast service is transmitted.

The 'NotificationAddress' is used for allocating a dedicated IP address for notification message delivery, and delivering a notification message through a transmission flow (or transmission path) having the IP address. The 'NotificationAddress' provides an IP address in order to deliver a general or specific notification message to the terminals receiving the mobile broadcast service, or the terminals in an idle mode for power saving rather than receiving the mobile broadcast service. The terminal receives a notification message according to a destination address for the notification message of the entity that desires to transmit the terminal condition or the notification message, using the 'NotificationPort' and the 'NotificationAddress'.

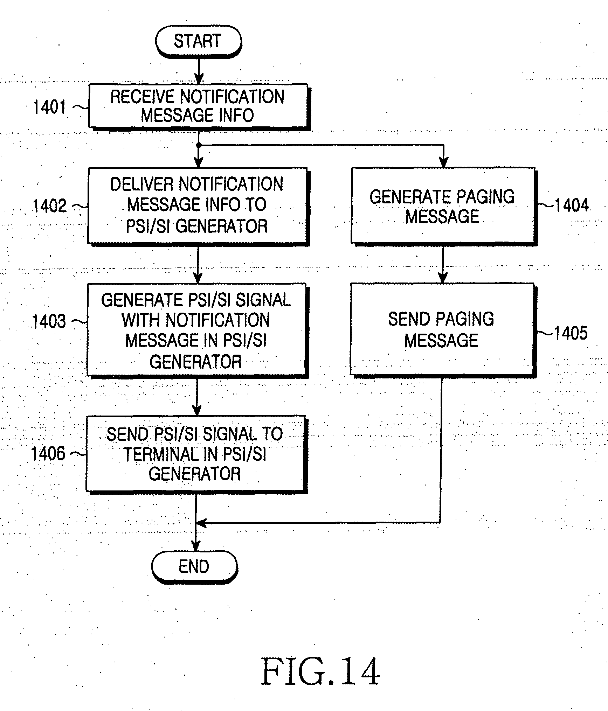

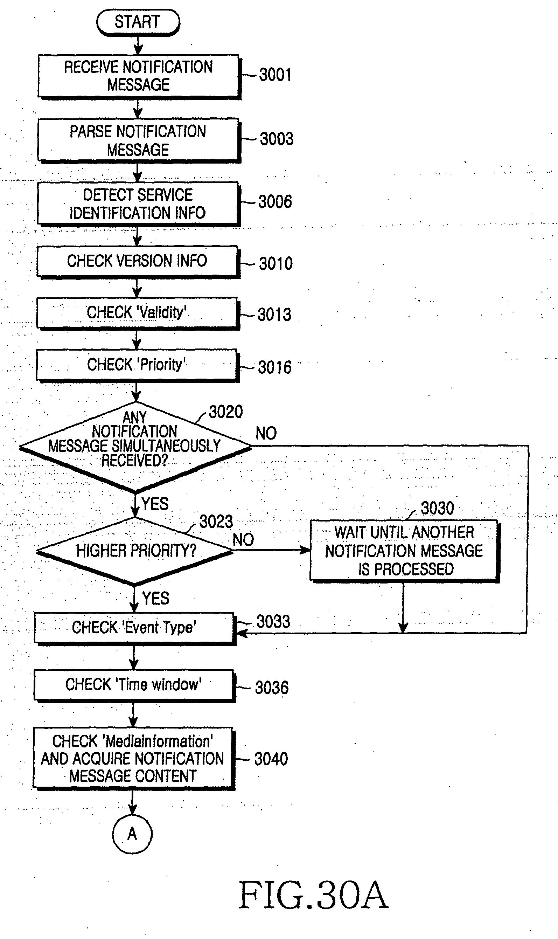

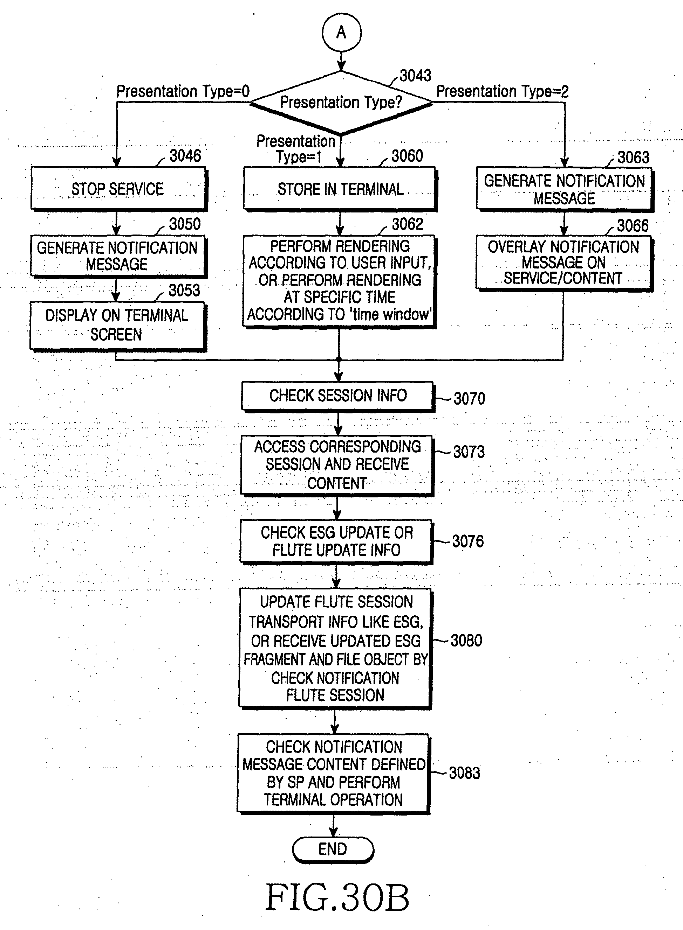

'NotificationType' of Table 1B indicates an event type of the notification message, as further described below in regard to FIG. 30 and associated description. 'NotificationType' of Table 1C is information indicating whether the corresponding information is a type for the purpose of the notification message, i.e. information for the terminal, or information for the user, as described in regard to FIGs. 14-16 and 30, and associated description. 'NotificationEventType' indicates an event type regarding whether the corresponding message is a notification message for notifying update of the ESG, or a notification message for delivering real-time traffic information, as described in FIG. 30 and associated description.

When notification message channel information is included in the acquisition fragment of the ESG and there are several types of notification messages that should be shown, a plurality of NotificationTypes and NotificationEventTypes can be used in Tables 1B and 1C.

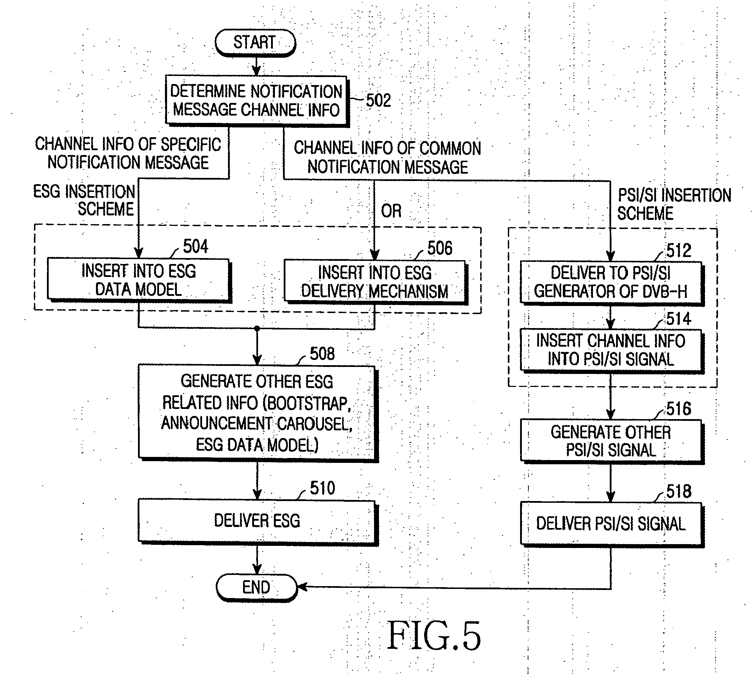

FIG. 5 is a flowchart illustrating an operation of transmitting notification message channel information according to the present invention. Herein, both an ESG-based scheme and a PSI/SI-based scheme are shown, and schemes for specific notification message channel information and common notification message channel information are shown separately.

Referring to FIG. 5, in step 502, a transmitter determines notification message channel information indicating a transmission scheme and a reception scheme of a notification message as stated, for example, in Table 1.

If the notification message channel information is for a specific notification message, the channel information is inserted into a predetermined fragment of an ESG data model, for example, into an acquisition fragment or a dedicated notification fragment in step 504. If the notification message channel information is for a common notification message and the channel information is transmitted using an ESG, the channel information is inserted into a descriptor of an ESG bootstrap session or a container of an ESG announcement carousel session in step 506.

The transmitter generates an ESG with the other ESG data model information, the ESG bootstrap session information and the announcement carousel session information in step 508, and transmits the ESG in step 510.

If the notification message channel information is for a common notification message, the channel information is transmitted using PSI/SI signaling. That is, in step 512, the channel information is transmitted to a PSI/SI generator of a DVB-H network. The PSI/SI generator inserts the channel information into a PSI/SI signal to be used in the DVB-H network in step 514, inserts the other PSI/SI information into the PSI/SI signal in step 516, and then transmits the PSI/SI signal to the terminal in step 518.

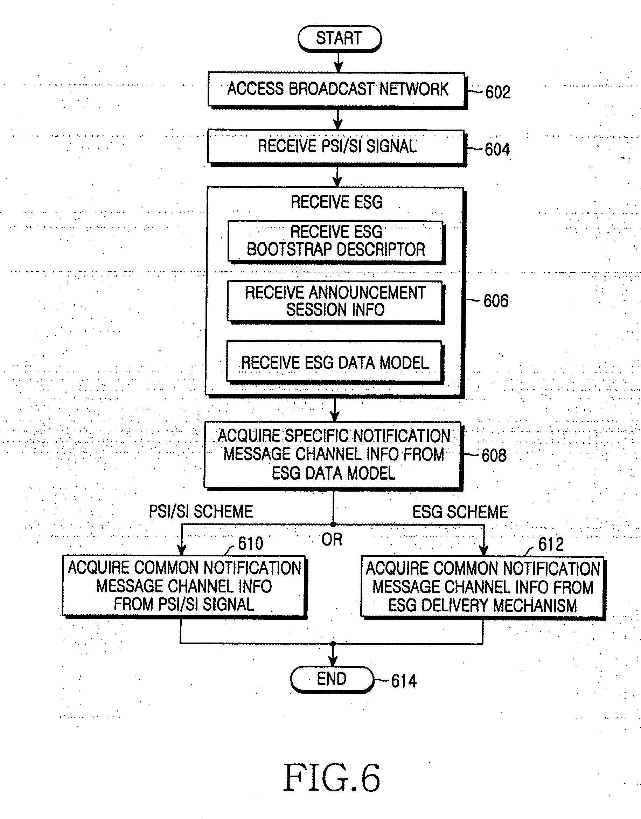

FIG. 6 is a flowchart illustrating an operation of receiving notification message channel information according to the present invention. Referring to FIG. 6, a terminal accesses a broadcast network in step 602, and then receives a PSI/SI signal and detects access information of an ESG bootstrap session from the PSI/SI signal in step 604. In step 606, the terminal accesses an ESG bootstrap session and an ESG announcement carousel session depending on the access information, and receives corresponding information and ESG data model information. The ESG can be transmitted with a multistream scheme that uses several IP addresses, or can be transmitted with a single-stream scheme that uses one IP address. In the single-stream scheme, an independent ESG announcement carousel session is not allocated, but the information transmitted through the ESG is equal to that in the multistream scheme.

In step 608, the terminal acquires specific notification message channel information from a specific ESG fragment based on the ESG data model. The common notification message channel information is transmitted with a PSI/SI scheme or an ESG scheme. When the PSI/SI scheme is used, the terminal acquires, in step 610, common notification message channel information from the PSI/SI signal received in step 604. When the ESG scheme is used, the terminal detects, in step 612, common notification message channel information from the ESG bootstrap session or ESG Announcement Carousel session information received in step 606.

As described in FIGs. 5 and 6, in order to generate and receive common notification message channel information, a method for transmitting in a bootstrap session of an ESG, a method for transmitting in an Announcement Carousel session of the ESG, and a method for transmitting in PSI/SI can be used. Referring to the network configuration of FIG. 1, the common notification message can be generated in each of the IP platform, ESG provider, and network provider. For example, the common notification message related to each IP platform is transmitted through an ESG bootstrap session, which is a first phase of the ESG transport mechanism, the common notification message related to each individual ESG provider is transmitted through the ESG Announcement Carousel session, which is distinguished for each individual ESG provider, and the common notification message related to each network is transmitted using a PSI/SI signal. When one IP platform has one ESG provider and an ESG provided by the ESG provider is transmitted via a single network, the common notification messages generated in the several sources are all transmitted in the same manner without discrimination.

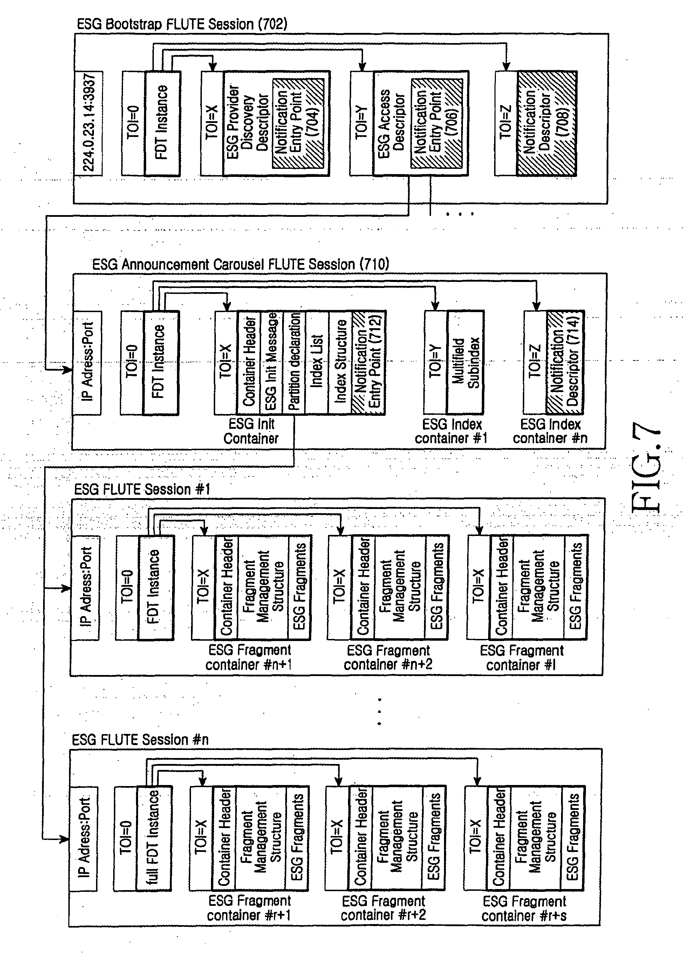

With reference to FIG. 7, a description will now be made of a method for delivering notification message channel information according to the present invention.
For a common notification message, a transmitter inserts the channel information of Table 1 into at least one of descriptors 704, 706 and 708 transmitted through an ESG bootstrap session 702, or inserts the channel information of Table 1 into at least one of containers 712 and 714 transmitted over an ESG announcement carousel session 710. In the ESG bootstrap session 702, the channel information is inserted into an ESG provider discovery descriptor 704 or an ESG access descriptor 706, or is transmitted using a dedicated notification descriptor 708. In the ESG announcement carousel session 710, the channel information is inserted into an ESG init container 712, or is transmitted using a dedicated ESG index container 714 containing a notification descriptor.

Table 2A to Table 2D provide exemplary formats when notification message channel information is transmitted using an ESG delivery mechanism.

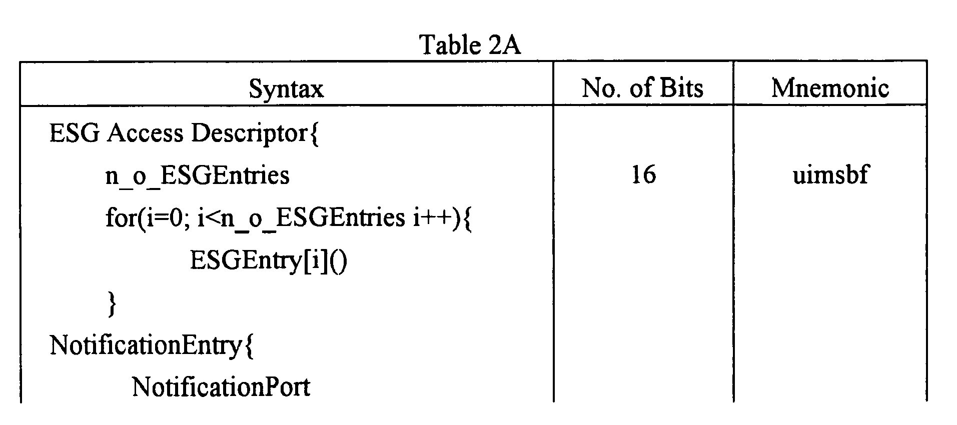

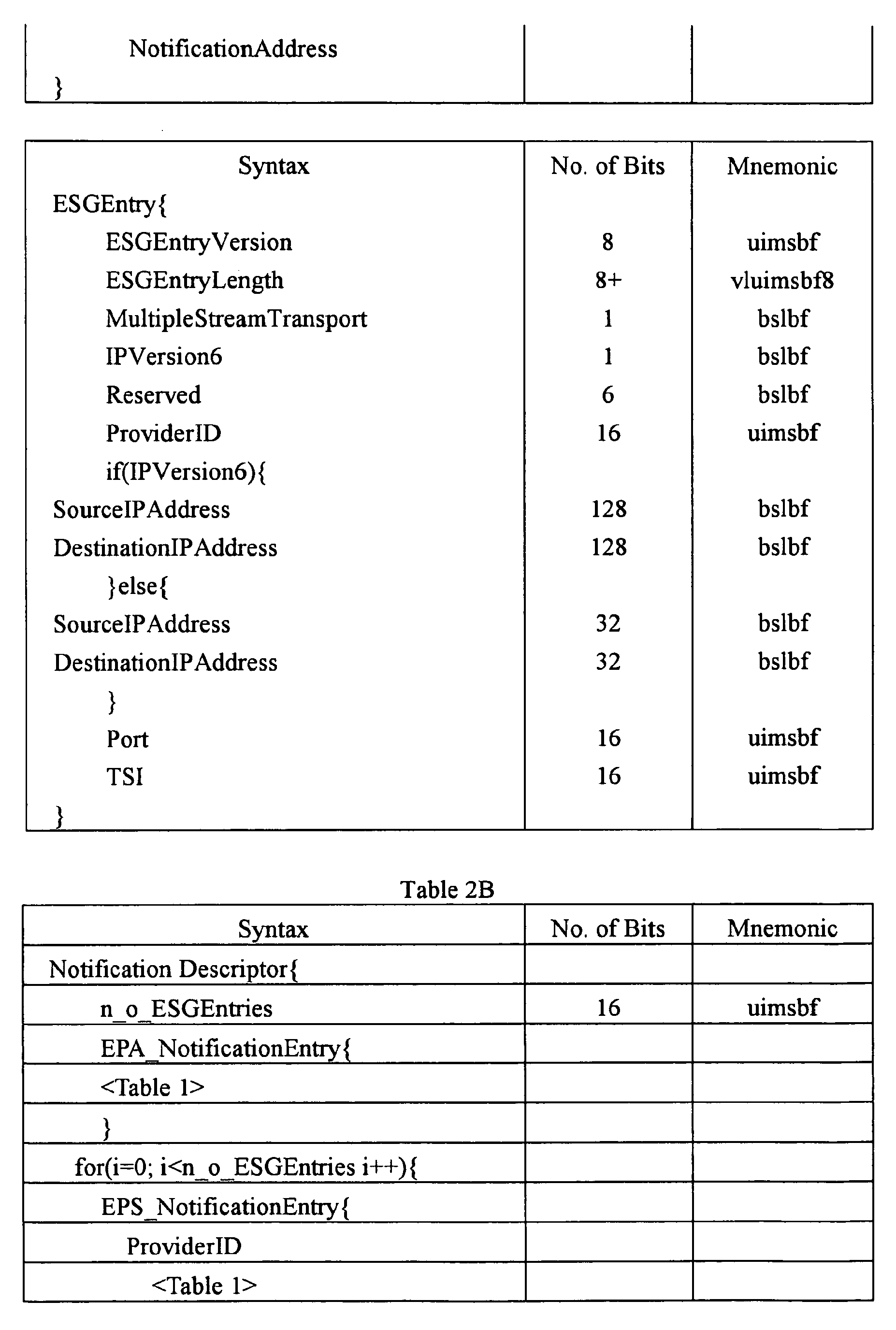

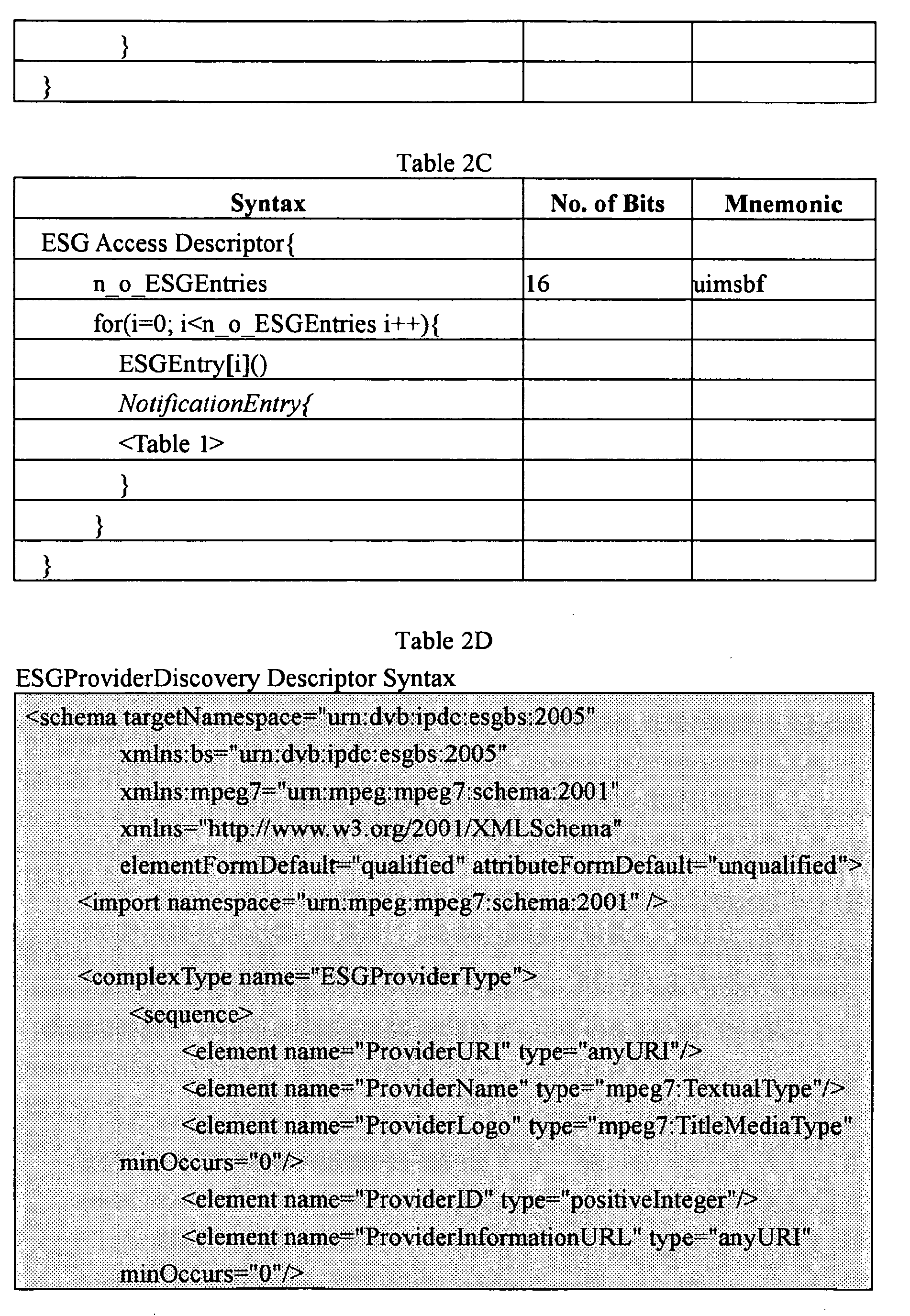

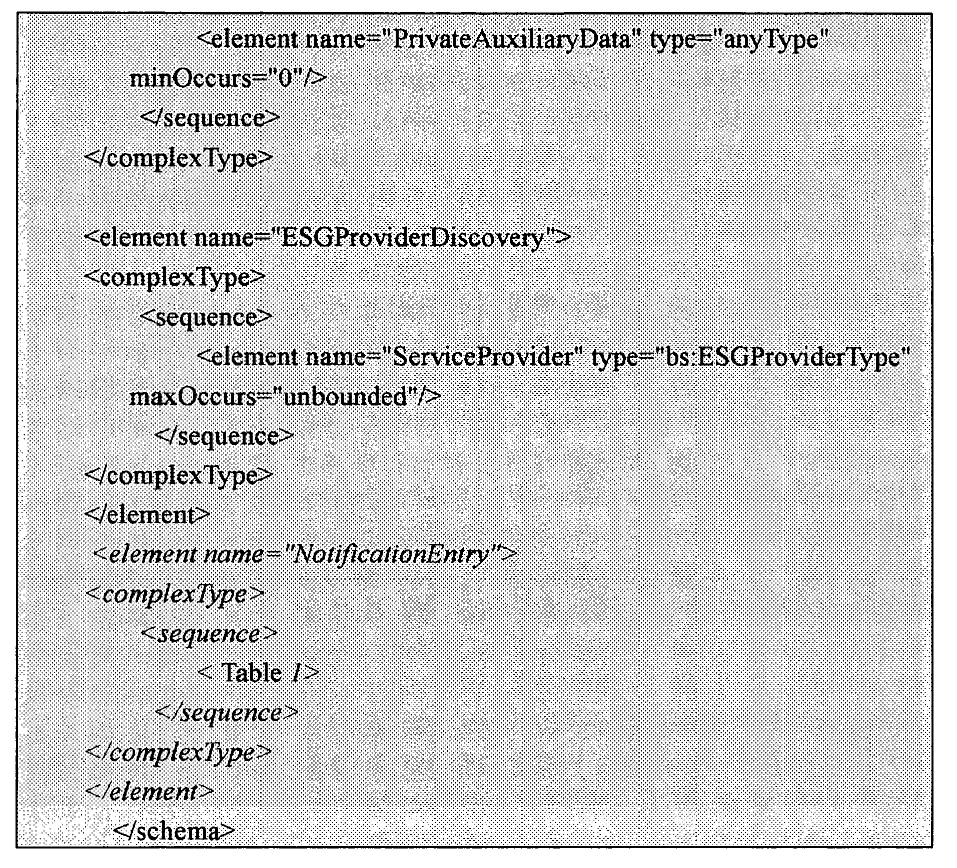

Table 2A shows the NotificationEntry included in ESGAccessDescriptor. Because NotificationEntry is inserted regardless of ESGEntry[i], a notification message corresponding thereto includes information common to every ESG provider, i.e. emergency information.

Table 2B shows the NotificationEntry included in NotificationDescriptor 708, and any one of EPA_NotificationEntry and EPS_NotificationEntry can be used for including channel information. Because the NotificationDescriptor is transmitted through the ESG bootstrap session or the ESG Announcement Carousel session, EPA_NotificationEntry and EPS_NotificationEntry are transmitted through the ESG bootstrap session and the ESG Announcement Carousel session, respectively.

EPA_NotificationEntry indicates that corresponding channel information is notification message channel information common to every ESG provider. The information common to the ESG provider can be the emergency information as described above, and this can be divided in units of platform providers in the service management block 103. The platform provider is an entity for managing a series of IP addresses, and each of them can have a plurality of ESG providers.

EPS_NotificationEntry indicates that the corresponding channel information is notification message channel information provided for each individual ESG provider. Through the corresponding notification message is common to all terminals and users receiving the ESG, it is independent for each individual ESG provider. For example, the corresponding notification message can include a notification message for notifying of a specific ESG update. In all of Table 1A to Table 1F is possible for a format of EPA_NotificationEntry. When EPS_NotificationEntry is transmitted in the ESP bootstrap session, it further includes ProviderID together with the information shown in Table 1. ProviderID indicates by which ESG provider the notification message is designated. In addition, when the EPS_NotificationEntry is transmitted in the ESG Announcement Carousel session, ProviderID is not transmitted together. This is because there is no need to distinguish the ESG Announcement Carousel session using the ProviderID, as the ESG Announcement Carousel session is generated for each individual ESG provider.

Table 2C shows the case where notification message channel information is included in ESGAccessDescriptor for each individual ESGentry[i], and is used for setting common notification message channel information for each individual ESG provider as described in Table 2B.

Table 2D shows the case where notification message channel information is included in ESGProviderDescriptor, and channel information for a notification message common to ESG providers corresponds thereto.

For a specific notification message, the transmitter inserts channel information into an acquisition fragment of the ESG data model of FIG. 2 before transmission.

In the description relating to FIGs. 8A-9B of present invention, transmission of notification message channel information will be described mainly with reference to an ESG bootstrap descriptor. However, the following description can be applied even to the case where NotificationEntry is included in an ESG init container during its transmission.

With reference to FIGs. 8A and 8B, a description will now be made of transmission and reception of notification message channel information through the ESG bootstrap descriptor according to the present invention. This description is limited to the common notification message channel information.

FIG. 8A is a flowchart illustrating an operation of generating and transmitting notification message channel information through an ESG bootstrap descriptor according to an embodiment of the present invention. Referring to FIG. 8A, in step 801, NDAF block 103b designates elements and attributes of common notification message channel information as ESG bootstrap information to be transmitted to terminal 108. For example, in step 801, the above-described 'NotificationEntry', 'NotificationPort', and 'NotificationAddress' are designated. Herein, the elements and attributes of the common notification message channel information are predetermined according to broadcast provider or system environment. After completion of step 801, the NDAF block 103b generates an ESG bootstrap descriptor including the common notification message channel information in step 802. Thereafter, in step 803, the NDAF block 103b transmits the generated ESG bootstrap descriptor to the terminal 108. Although the generation of the common notification message channel information is performed herein by the NDAF block 103b in a service management block 103, this operation can also be performed in a notification event function block 102a.

FIG. 8B is a flowchart illustrating an operation of receiving notification message channel information in an ESG bootstrap descriptor by a terminal according to the present invention.

Referring to FIG. 8B, the terminal 108 executes a broadcast service by a user in step 811, and receives an ESG bootstrap descriptor transmitted from the NDAF block 103b in step 812. After receiving the ESG bootstrap descriptor, the terminal 108 parses the ESG bootstrap descriptor in step 813, and acquires 'NotificationEntry', 'NotificationPort' and 'NotificationAddress', which are channel information necessary for receipt of a common notification message, in step 814. Thereafter, the terminal 108 proceeds to Operation B 420 of FIG. 4.

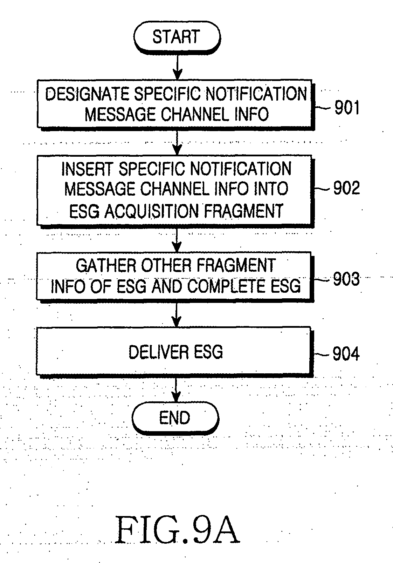

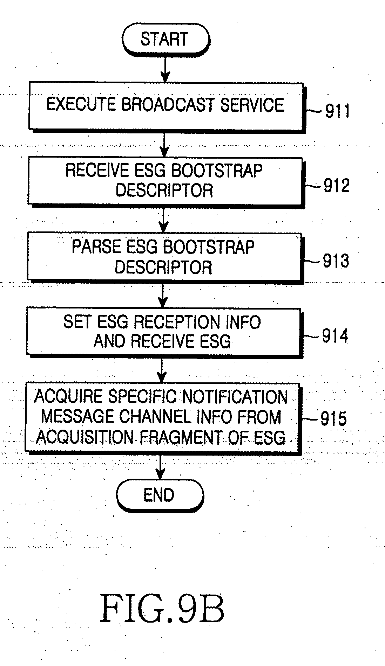

With reference to FIGs. 9A and 9B, a description will now be made of transmission and reception of notification message channel information through the ESG acquisition fragment according to the present invention. Herein, the description will be limited to the specific notification message channel information.

FIG. 9A is a flowchart illustrating an operation of generating and transmitting notification message channel information through an ESG acquisition fragment according to the present invention. Referring to FIG. 9A, in step 901, NDAF block 103b designates elements and attributes of specific notification message channel information as ESG acquisition fragment information to be transmitted to terminal 108. For example, in step 901, the above-described 'NotificationEntry', 'NotificationPort' and 'NotificationAddress' are designated. Herein, the elements and attributes of specific notification message channel information are predetermined according to broadcast provider or system environment. After completion of step 901, the specific notification message channel information is inserted into an acquisition fragment of an ESG in step 902. Thereafter, the NDAF block 103b completes the ESG by adding the acquisition fragment of the ESG to other fragments in step 903, and transmits the ESG to the terminal 108 in step 904. Although the generation of the specific notification message channel information is performed herein by the NDAF block 103b, this operation can also be performed in a notification event function block 102a.

FIG. 9B is a flowchart illustrating an operation of receiving notification message channel information in an ESG acquisition fragment by a terminal according to the present invention. Referring to FIG. 9B, the terminal 108 executes a broadcast service by a user in step 911, and receives an ESG bootstrap descriptor transmitted from the NDAF block 103b in step 912. After receiving the ESG bootstrap descriptor, the terminal 108 parses the ESG bootstrap descriptor in step 913, and acquires reception information of the ESG, performs hardware and software setup for receipt of the ESG using the reception information, and then immediately receives the ESG in step 914. In step 915, the terminal 108 acquires 'NotificationEntry', 'NotificationPort' and 'NotificationAddress', which are channel information necessary for receipt of specific notification message, included in the acquisition fragment of the ESG. Thereafter, the terminal 108 proceeds to Operation B 420 of FIG. 4.

As another example, the terminal can recognize a specific service connected to a notification message by receiving the notification message and then parsing a service ID inserted in the notification message, instead of acquiring specific notification message channel information through the acquisition fragment of the ESG. The service ID preferably has the same meaning and value as that of the service ID in the ESG. A notification message format for this case will be described in detail below.

Next, a description will be made of a method for delivering notification message channel information in another embodiment of the present invention. For a common notification message, a transmitter inserts the channel information of Table 1 into an PSI/SI signal transmitted via the CBMS-1 interface 133 of FIG. 1 before transmission. For a specific notification message, the transmitter inserts the channel information of Table 1 into the PSI/SI signal for each individual service, before transmission.

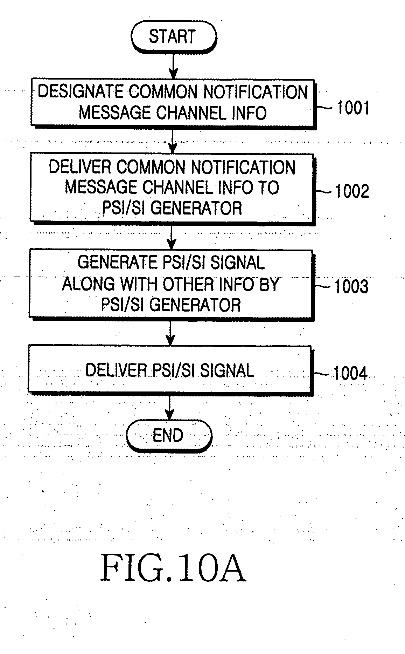

FIG. 10A is a flowchart illustrating an operation of generating and transmitting notification message channel information through a PSI/SI signal according to the present invention. Herein, the description will be limited to the common notification message channel information.

Referring to FIG. 10A, in step 1001, NDAF block 103b designates elements and attributes of notification message channel information to be transmitted to terminal 108. For example, in step 1001, the above-described channel information of 'NotificationEntry', 'NotificationPort' and 'NotificationAddress' is designated. Herein, the elements and attributes of the notification message channel information are predetermined according to broadcast provider or system environment. After completion of step 1001, the NDAF block 103b transmits the generated notification message channel information to a PSI/SI generator 106a in a broadcast network 106 via a CBMS-6 interface 124a in step 1002. In step 1003, the PSI/SI generator 106a generates a PSI/SI signal using the notification message channel information together with other information. In step 1004, the PSI/SI generator 106a transmits the generated PSI/SI signal to the terminal 108 via the CBMS-1 interface 133

Although not described in detail in FIG. 10A, for the specific notification message, the channel information of Table 1 is inserted into a Service Description Table (SDT) in the PSI/SI signal defined in DVB-CBMS, for each individual service. As another example, a new table for the specific notification message channel information can be included in the PSI/SI signal.

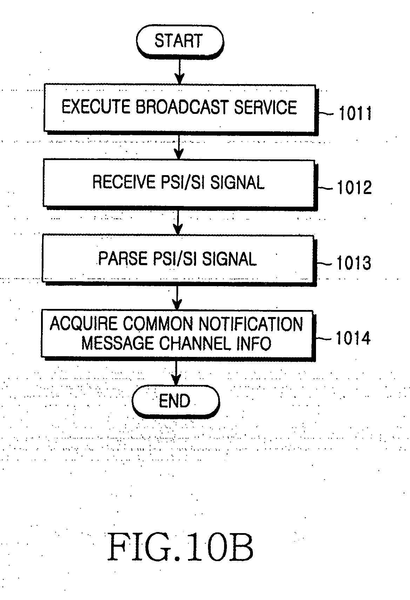

FIG. 10B is a flowchart illustrating an operation of receiving notification message channel information in a PSI/SI signal by a terminal according to the present invention. Herein, the description will be limited to the common notification message channel information.

Referring to FIG. 10B, terminal 108 executes a broadcast service by a user in step 1011, and receives a PSI/SI signal from the PSI/SI generator 106a in step 1012. After receiving the PSI/SI signal, the terminal 108 parses the PSI/SI signal in step 1013, and acquires 'NotificationEntry', 'NotificationPort' and 'NotificationAddress', which are channel information necessary for receipt of the notification message, in step 1014. Although not described in detail herein, for the specific notification message, the terminal 108 can acquire channel information of the specific notification message for each individual service by checking a Service Description Table (SDT) in the PSI/SI signal. Thereafter, the terminal proceeds to Operation B 420 of FIG. 4.

Although the description has been made of various embodiments for transmitting the specific notification message channel information and the common notification message channel information, the specific notification message channel information and the common notification message channel information are preferably delivered to terminals using different means or transmission paths due to their characteristics. Accordingly, in the foregoing embodiments, the specific notification message channel information is preferably transmitted using an acquisition fragment of the ESG or a different means in the ESG. In addition, the common notification message channel information is preferably transmitted through ESG bootstrap session, announcement carousel session, or PSI/SI.

### II. Operation B 420

With reference to FIG. 11, a description is provided of transmission of notification message according to the first and second embodiments. Because transmission methods of the common notification message and the specific notification message are equal to each other, the transmission method of the common notification message will be described in FIG. 11 by way of example.

FIG. 11 is a flowchart illustrating an operation of transmitting a common notification message in a broadcast system according to the embodiments of the present invention. Referring to FIG. 11, NDAF block 103b receives in step 1101 a common notification message containing notification content (i.e. notification event) from a notification event function block 102a. Then the NDAF block 103b generates in step 1102 a UDP packet using a predetermined UDP port and the common notification message, and performs packet generation and transmission for the ongoing broadcast session and notification IP address in step 1103. Because a format of the common notification message is defined by a service provider and is not directly related to the transmission, the common notification message is directly generated into a UDP packet.

In a service area, there may exist terminals which are connected to an interactive network 107, or are in the state, i.e. sleep state, where they can receive a paging message while their broadcast receivers are powered off. For the terminals in this state, the system should wake up the sleeping broadcast receivers (not shown) of the terminals by performing paging through an interactive channel of the interactive network 107 or by similar action. To this end, the system generates a paging message for waking up the sleeping broadcast receivers in step 1104, and sends the paging message to the terminals through the interactive channel of the interactive network 107 or the similar action in step 1105, thereby waking up the sleeping broadcast receivers of the terminals.

A previously designated UDP port number for notification delivery, i.e. 'NotificationPort', is used for generation of a packet for sending the common notification message. This is to allow terminal 108 to recognize a received packet as a common notification message. The UDP packets are generated as IP packets using an IP address of the ongoing session or an IP address, i.e. 'NotificationAddress', for sending the common notification message. The IP address of the ongoing session can be acquired because the NDAF block 103b where a notification delivery message is generated is located in the service management block 103 that takes charge of every delivery. The completed IP packets are delivered to a transmission unit of a lower layer. The common notification message can be repeatedly transmitted to the transmission unit of the lower layer according to the need of a network provider or a service provider, taking into account the situation where there is a packet loss or the recipient cannot receive the packet.

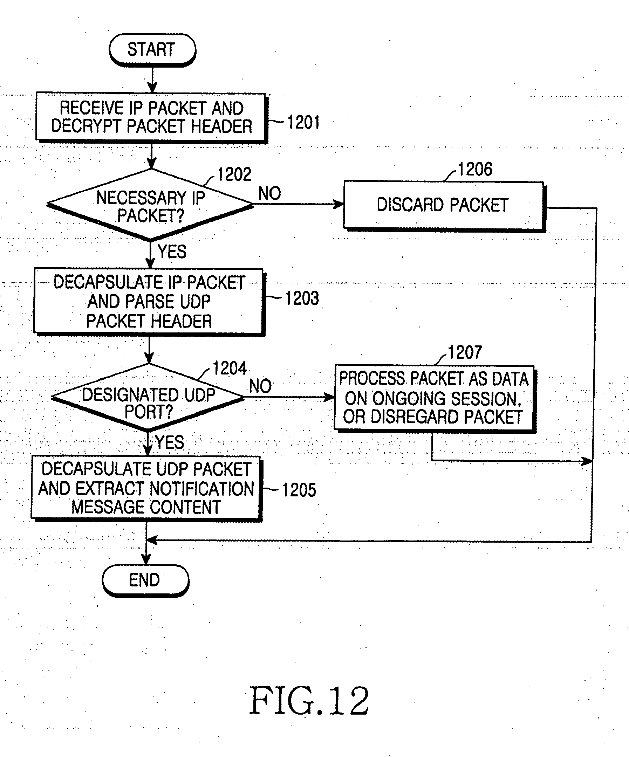

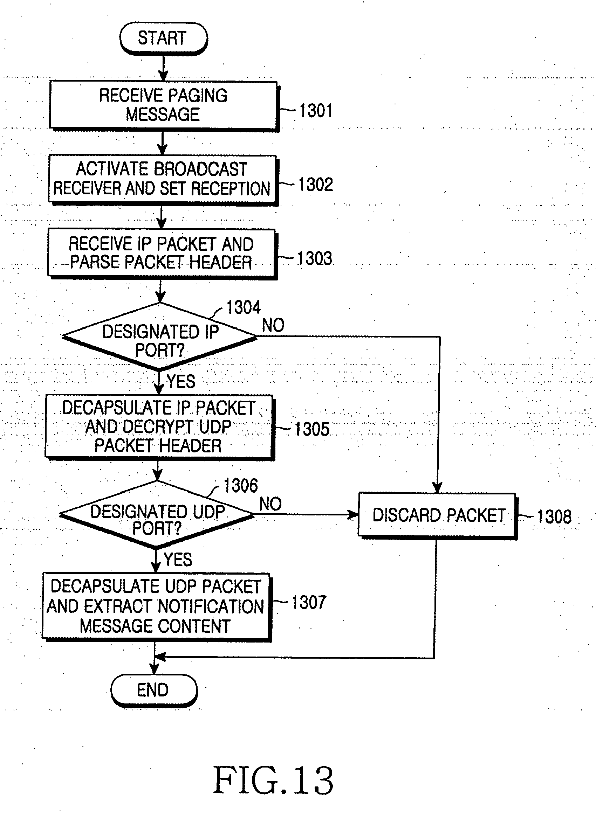

With reference to FIGs. 12 and 13, a description is provided of an operation of receiving a notification message in the broadcast system according to the above-described embodiments. Because transmission methods of the common notification message and the specific notification message are equal to each other, the transmission method of the common notification message will be described herein by way of example.

FIG. 12 is a flowchart illustrating an operation of receiving a notification message by a notification client function block 108a of a terminal in a mobile broadcast system according to the present invention. Referring to FIG. 12, after receiving the notification message channel information in Operation A 410 of FIG. 4, the notification client function block 108a receives in step 1201 an IP packet and parses a header of the IP packet. By parsing the header, the notification client function block 108a monitors in step 1202 whether an IP address of the IP packet is its necessary IP address. The term "necessary IP address" refers to an IP address of the ongoing session (i.e. the currently received broadcast service) or a specific IP address (i.e. 'NotificationAddress') allocated for the notification message. Therefore, if it is determined that the IP address in the header is not a necessary IP address, the notification client function block 108a proceeds to step 1206 where it discards the IP packet.

However, if the IP address of the IP packet is a necessary IP address, the notification client function block 108a proceeds to step 1203 where it acquires a UDP packet through decapsulation of the IP packet and parses a header of the UDP packet. Thereafter, the notification client function block 108a determines in step 1204 whether a UDP port number obtained by parsing the header of the UDP packet is a port number (i.e. 'NotificationPort') of predetermined notification message channel information previously obtained through an ESG bootstrap descriptor or a PSI/SI signal. That is, the notification client function block 108a determines if the received packet is a common notification message or a packet on the general broadcast session.

In step 1204, if the port number of the UDP packet header is identical to a UDP port number designated to receive the notification message, the notification client function block 108a acquires in step 1205 a common notification message included in its body by decapsulating the UDP packet, and parses the notification message, then proceeds to Operation C 430 of FIG. 4 to perform a necessary operation. However, if the port number of the UDP packet is different from the previously designated UDP port number, the notification client function block 108a performs in step 1207 a procedure for the broadcast service, regarding the UDP packet as a packet on the existing broadcast session, or discards the UDP packet, regarding that the corresponding notification message is not a notification message that it should receive.

FIG. 13 is a flowchart illustrating an operation of receiving a notification message by a notification client function block 108a of a terminal connected to an interactive network according to the present invention. The following operation can be applied to terminals connected not only to the interactive network but also to every kind of system that can manage a sleeping terminal.

Referring to FIG. 13, after receiving the notification message channel information in Operation A 410 of FIG. 4, the notification client function block 108a receives in step 1301 a paging message according to a paging mechanism of the interactive network or different system. Through the paging message, the notification client function block 108a activates in step 1302 a sleeping broadcast receiver and allows the sleeping broadcast receiver to prepare for reception. Reception preparation is an operation of generating a session using the 'NotificationPort' and 'NotificationAddress' transmitted in the method described above, and entering a reception ready state. After entering the reception ready state, the notification client function block 108a receives in step 1303 an IP packet from a NDAF block 103b and parses a header of the received IP packet.

Then the notification client function block 108a determines in step 1304 whether an address of the IP packet is identical to an IP address designated from the 'NotificationAddress'. If it is determined that the address in an IP header of the IP packet is different from the 'NotificationAddress', the notification client function block 108a proceeds to step 1308 where it discards the packet. However, if it is determined that the IP address of the IP packet is identical to the 'NotificationAddress', the notification client function block 108a extracts in step 1305 a UDP packet through decapsulation of the IP packet and parses a header of the UDP packet.

The notification client function block 108a compares in step 1306 a UDP port number obtained by parsing the header of the UDP packet with the 'NotificationPort', in order to determine if the received packet is a common notification message or a wrongly transmitted packet.

If the port number of the received UDP packet header is identical to the 'NotificationPort', i.e. UDP port number designated to receive a common notification message in step 1306, the notification client function block 108a obtains in step 1307 a notification message included in its body by decapsulating the UDP packet and parses the notification message, then proceeding to Operation C 430 of FIG. 4 to perform a necessary operation. However, if the port number of the UDP packet is different from the 'NotificationPort', the notification client function block 108a discards the packet in step 1308, regarding that the UDP packet is a wrongly transmitted packet. Thereafter, the terminal proceeds to Operation C 430 of FIG. 4.

With reference to FIG. 14, a description will now be made of an operation of delivering a notification message through a PSI/SI signal according to another embodiment of the present invention. Referring to FIG. 14, a NDAF block 103b receives in step 1401 a common notification message containing notification content from a notification event function block 102a. Then the NDAF block 103b delivers in step 1402 the common notification message to a PSI/SI generator 106a. In step 1403, the PSI/SI generator 106a generates a PSI/SI signal using the common notification message together with other information. In step 1406, the PSI/SI signal generated by the PSI/SI generator 106a is delivered to the terminal.

In a service area, there may exist terminals which are connected to an interactive network 107, or are in the state, i.e. sleep state, where they can receive a paging message but their broadcast receivers are powered off. For the terminals in this state, the system should wake up the sleeping broadcast receivers (not shown) of the terminals by performing paging through an interactive channel of the Interactive Network 107 or by similar action. To this end, the system generates a paging message for waking up the sleeping broadcast receivers in step 1404, and sends the paging message to the terminals through the interactive channel of the Interactive Network 107 or the similar action in step 1405, thereby waking up the sleeping broadcast receivers of the terminals.

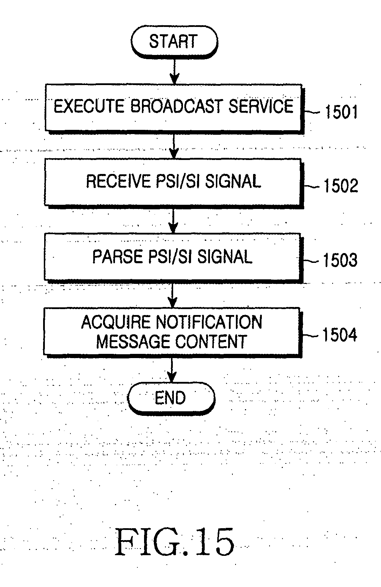

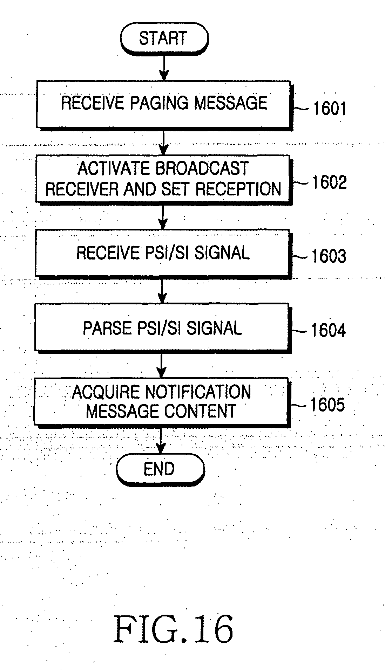

With reference to FIGs. 15 and 16, a description will now be made of an operation of receiving a notification message by a terminal according to the present invention. Referring to FIG. 15, terminal 108 executes a broadcast service by a user in step 1501, and then receives a PSI/SI signal transmitted from the PSI/SI generator 106a in step 1502. After receiving the PSI/SI signal, the terminal 108 parses the PSI/SI signal in step 1503, and receives a notification message included in the PSI/SI signal in step 1504. The specific notification message exists in an SDT included in the PSI/SI signal of DVB-CBMS. As described above, the specific notification message can be included in a table or a descriptor for a specific notification message in the PSI/SI signal, instead of the SDT.

FIG. 16 is a flowchart illustrating an operation of receiving a notification message by a notification client function block 108a of a terminal connected to an interactive network according to the present invention. The following operation can be applied to terminals connected not only to the interactive network but also to every kind of system that can manage a sleeping terminal.

Referring to FIG. 16, a notification client function block 108a receives in step 1601 a paging message according to a paging mechanism of the interactive network or different system. Through the paging message, the notification client function block 108a activates in step 1602 a sleeping broadcast receiver and allows the sleeping broadcast receiver to prepare for reception. The notification client function block 108a receives a PSI/SI signal in step 1603, parses the PSI/SI signal in step 1604, and detects notification message content in the PSI/SI signal in step 1605. Thereafter, the terminal proceeds to Operation C 430 of FIG. 4.

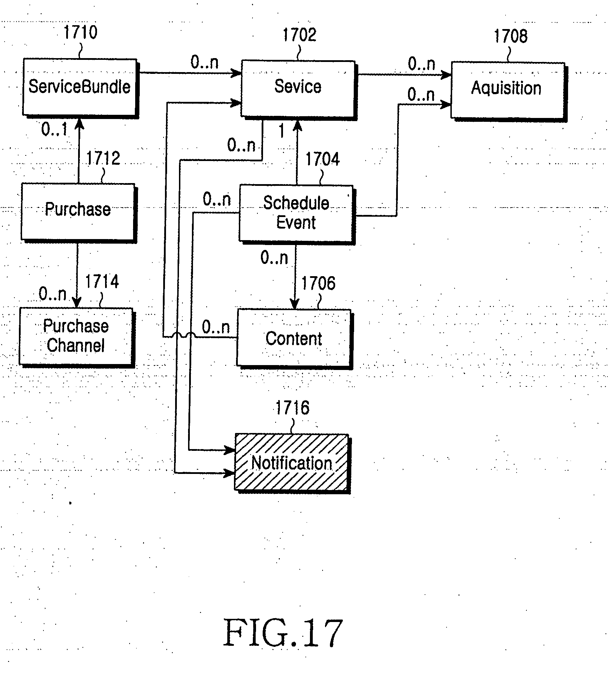

Finally, with reference to FIG. 17, a description will be made of an ESG data model for delivering a notification message according to another embodiment of the present invention. FIG. 17 shows an ESG data model extended from that of FIG. 2, and the extended ESG data model includes a notification fragment 1716 newly added according to this embodiment of the present invention, in addition to a service fragment 1702, a schedule event fragment 1704, a content fragment 1706, an acquisition fragment 1708, a service bundle fragment 1710, a purchase fragment 1712 and a purchase Channel fragment 1714. The structure of the other fragments 1702 to 1714 has a backward compatible relationship with that of the ESG data model of FIG. 2, except for the reference relationship between the notification fragment 1716 and fragments 1702 and 1704.

Attributes and elements of the notification fragment 1716 are equal to those described in regard to FIGs. 21-30 below. In addition, the reference relationship between the notification fragment 1716, the service fragment 1702, the schedule Event fragment 1704, and the acquisition fragment 1708 is 0..n, which indicates that each notification information element of the notification fragment 1716 may have no relation to a specific service or may be information related to a plurality of services, that there may be no notification message which should be shown in one schedule event or there may be a plurality of notification messages which should be shown in one schedule event, and that there may be no session or a plurality of sessions which should necessarily be accessed from the notification message.

When the notification fragment 1716 is in a reference relationship with the service fragment 1702, it means that the corresponding notification message is connected to a specific service. When reference is made to the schedule event fragment 1704 by the notification fragment 1716, it means that rendering of the corresponding message should be performed within the time indicated by the corresponding schedule event information. That is, when a valid time of the notification message is longer than that of the single schedule event, reference can be continuously made to a plurality of schedule events by one notification message.

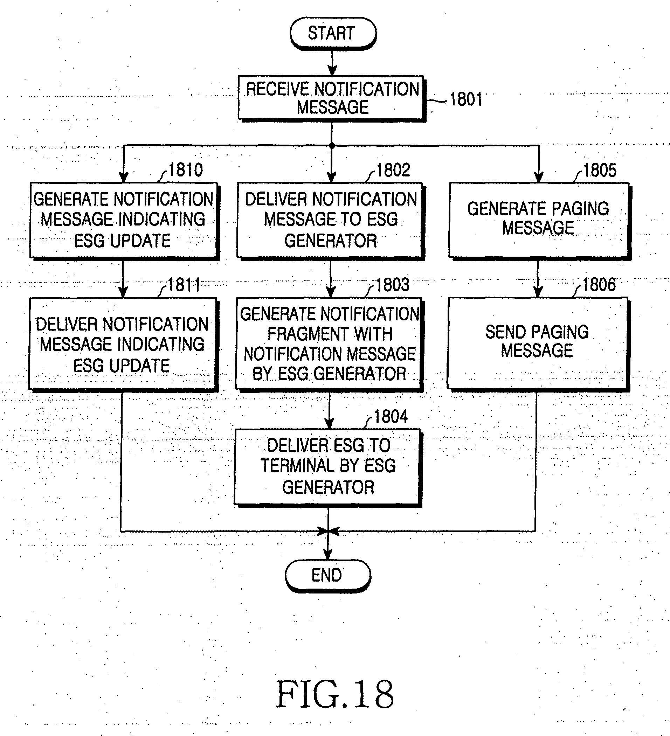

With reference to FIG. 18, a description will now be made of an operation of delivering a notification message through an ESG data model according to the present invention. Referring to FIG. 18, a NDAF block 103b receives in step 1801 a common notification message containing notification content from a notification event function block 102a. Then the NDAF block 103b delivers in step 1802 the common notification message to an ESG generator (not shown). At the same time, the NDAF block 103b delivers a notification message indicating ESG update in step 1810. The format and information elements of the notification message in step 1810 can follow the message format described in regards to FIGs. 8-9 of the present invention. Herein, the ESG generator is a physical or logical entity existing in the mobile broadcast system, and can be included in at least one of other entities shown in FIG. 1, or can be implemented as a separate entity.

The notification message indicating ESG update serves to indicate that ESG content is updated as actual notification message content is included in the ESG during its transmission. Whether to deliver the notification message indicating ESG update is an option of the service provider. When the NDAF block 103b sends the notification message indicating ESG update independently, the terminal can rapidly detect update of the ESG due to the notification message content. As a result, the terminal has no need to constantly monitor ESG update to receive the notification message content included in the ESG at a correct time.

In step 1811, the notification message indicating ESG update is delivered to the terminal. In step 1803, the ESG generator generates an ESG signal including the foregoing fragments based on the ESG data model using the common notification message together with the other information. In step 1806, the ESG signal generated in the ESG generator is delivered to the terminal. Detailed container encapsulation and compression of the ESG data model follows DVB-CBMS Phase I (ETSI TS 102 471V.1.1.1 so a detailed description thereof not necessary herein.

interactive network 107, or are in the state, i.e. sleep state, where they can receive a paging message while their broadcast receivers are powered off. For the terminals in this state, the system should wake up the sleeping broadcast receivers (not shown) of the terminals by performing paging through an interactive channel of the Interactive Network 107 or by similar activity. To this end, the system generates a paging message for waking up the sleeping broadcast receivers in step 1804, and sends the paging message to the terminals through the interactive channel of the interactive network 107 or the similar activity in step 1805, thereby waking up the sleeping broadcast receivers of the terminals.

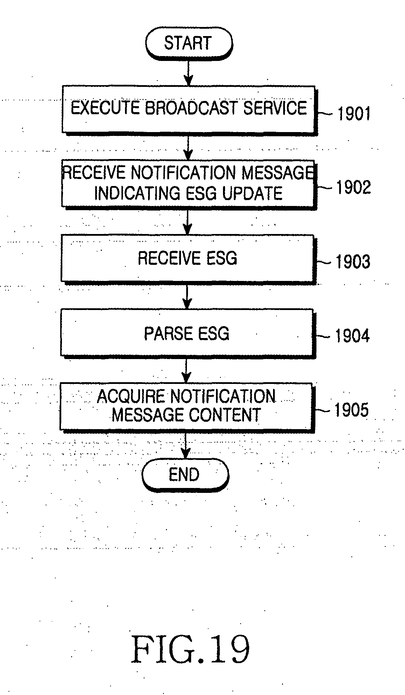

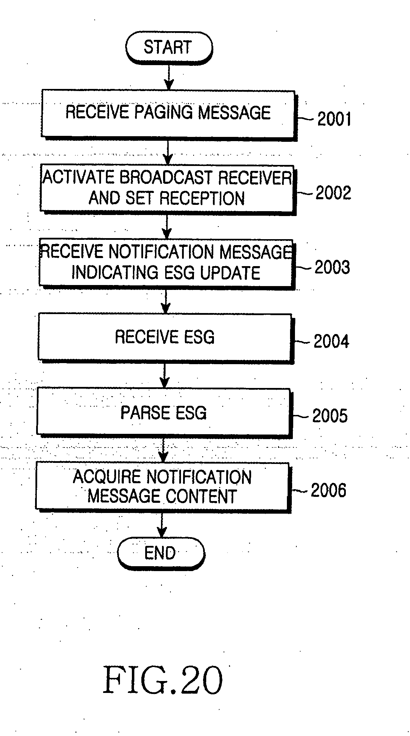

With reference to FIGs. 19 and 20, a description will now be made of an operation of receiving a notification message by a terminal according to the present invention. Referring to FIG. 19, terminal 108 executes a broadcast service by a user in step 1901, and then receives a notification message indicating ESG update (hereinafter referred to as an "ESG update notification message") in step 1902. The notification message is delivered according to the description related to FIGs. 8-9 of the present invention, and includes the information elements described below in regard to FIGs. 20-29 of the present invention. In step 1903, the terminal 108 receives the ESG signal including the fragments based on the ESG data model, transmitted from the ESG generator. Terminal 108 may receive the fragments based on the ESG data model, included in the transmitted ESG update notification message, or may receive the fragments based on the ESG data model by accessing an ESG session using information in the ESG update notification message. After receiving the ESG signal, the terminal 108 parses the ESG signal in step 1904, and receives a notification message included in the ESG signal in step 1905. The specific notification message exists in a notification fragment included in an ESG signal of DVB-CBMS.

FIG. 20 is a flowchart illustrating an operation of receiving a notification message by a notification client function block 108a of a terminal connected to an interactive network according to the present invention. The following operation can be applied to terminals connected not only to the interactive network but also to every kind of system that can manage a sleeping terminal.

Referring to FIG. 20, the notification client function block 108a receives in step 2001 a paging message according to a paging mechanism of the interactive network (or different system). The notification client function block 108a activates in step 2002 a sleeping broadcast receiver through the paging message and allows the sleeping broadcast receiver to prepare for reception. In step 2003, the notification client function block 108a receives a notification message indicating ESG update. The notification client function block 108a receives an ESG signal in step 2004, parses the ESG signal in step 2005, and detects a notification fragment included in the ESG signal in step 2006. A detailed operation of the terminal in steps 2003, 2004, 2005 and 2006 is equal to that of FIG. 19. Thereafter, the terminal proceeds to Operation C 430 of FIG. 4.

### III. Operation C 430

With reference to Table 3, a description will now be made of the entire scheme for a notification message according to another embodiment of the present invention. Table 3 shows the entire scheme for a notification message. As shown by way of example, all elements and attributes accepting the scheme according to embodiments of the present invention can be defined in various data types according to their usages. Table 3 is divided into Tables 3A to Table 3E, for convenience, and a definition of items in each table will be given below.

**Table 3A**

| Name | Type | Category | Cardinality | Description | |
|---|---|---|---|---|---|
| Notification | E1 | O | 0..N | Notification Message Fragment It includes following attributes and elements. : | |
| | | | | Attributes: | |
| | | | | | Id |
| | | | | | NotificationType |
| | | | | | Validity |
| | | | | Elements: | |
| | | | | | Name |
| | | | | | Description |
| | | | | | PresentationType |
| | | | | | ExtensionURL |
| | | | | | SessionInformation |
| | | | | | MediaInformation |
| id | A | M | 1 | Notification message identifier | |
| NotificationType | A | M | 1 | Notification Type: | |
| | | | | | if 0. UserUse |
| | | | | | if 1. TerminalUse |
| | | | | ServiceProvider Definable | |
| Validity | A | O | 0..1 | Valid period of Fragment | |
| | | | | Name of Notification Fragment | |
| Name | E2 | M | 1..N | It has following attribute. | |
| | | | | | Lang |
| Lang | A | O | 0..1 | Language | |
| Description | E2 | M | 1..N | Notification Message content or description | |
| Lang | A | O | 0..1 | Language | |

In Table 3A, an information element 'Notification' indicates a format of a corresponding notification message, and is composed of attributes 'id', 'NotificationType' and 'Validity', and sub-elements 'Name' and 'Description', 'PresentationType' of Table 3B, 'ExtensionURL' and 'SessionInformation' of Table 3C, and 'MediaInformation' Table 3D. The attributes 'id', 'NotificationType' and 'Validity', and the elements 'Name', 'Description', 'PresentationType' and 'ExtensionURI' are commonly used for every type of notification message. 'Sessionlnformation' and 'MediaInformation' may not be included according to usage of the notification message.

'id', which is a unique identifier of a notification message fragment, is a mandatory (M) element. The corresponding identifiers help identify stored notification messages.

'NotificationType' indicates whether type or usage of a corresponding notification message is for user use (UserUse), for terminal use (TerminalUse), or for other uses, and is a mandatory element. 'NotificationType'='0' indicates UserUse, and 'NotificationType'='1' indicates TerminalUse. In addition, various values can be designated and defined according to purpose of the service provider.

'Validity' is an attribute indicating a valid time for the notification message, and is an optional value. After a lapse of the time defined in 'Validity', the notification message stored in the terminal is deleted.

'Name', which indicates a title or name of the notification message, is a mandatory element, and can be defined in various languages.

'Lang', which is an attribute for 'Name', is an optional value indicating a language of the content written in 'Name'. If there is no 'Lang' value, the terminal recognizes 'Name' as a Default value. Herein, the Default value can indicate a language of a corresponding search area or English.

'Description' is actual message content included in the notification message, or includes a description part for a multimedia message or a notification message for terminal use (hereafter referred to as a "terminal-use notification message"). 'Description' can be defined in various languages and is a mandatory value.

'Lang', which is an attribute for 'Description', is an optional value indicating a language of the content written in 'Description'. If there is no 'Lang' value, the terminal recognizes 'Description' as a Default value.

**Table 3B**

| Name | Type | Category | Cardinality | Description |
|---|---|---|---|---|
| PresentationType | E2 | M | 1 | Definition of Presentation type for notification message |

In Table 3B, 'PresentationType' is a value for defining a Presentation type for the notification message. The Presentation type indicates whether the terminal will stop all services and output the corresponding message to its display by giving priority to the notification message, whether it will store the message content in a designated device, i.e. memory, or whether it will overlay the content of the notification message on the currently received service and content. The 'PresentationType' can be defined in various types according to purpose of the service provider.

For example, a terminal receiving a notification message with 'PresentationType'='0' immediately provides the notification message to the user. A terminal receiving a notification message with 'PresentationType'='1' stores the notification message in a memory and provides the notification message later upon receipt of a user request. In addition, a terminal receiving a notification message with 'PresentationType'=2 overlays content of the notification message on the service currently displayed on the display for the user.

'PresentationType'='1' or '3' does not necessarily indicate that the terminal visually displays the notification message on the display. This is because the notification message, due to its characteristic, can be composed of various media such as text, image, audio, video and the like. That is, for an audio message, the system can request the terminal to stop the currently received service and send a voice message using 'PresentationType'='1', or can request the terminal to reproduce the audio message using 'PresentationType'='3'. For the notification message for terminal use (terminal-use notification message), 'PresentationType'='1' is used basically. In this case, the terminal simply stores the notification message. As another example, with use of 'PresentationType'='4', the system can indicate that the corresponding notification message is for terminal use.

**Table 3C**

| Name | Type | Category | Cardinality | Description | |
|---|---|---|---|---|---|
| ExtensionURL | E2 | O | 0..N | URL for additional information | |
| SessionInformation | E2 | O | 0..N | Session information for data | |
| | | | | Attributes: | |
| | | | | | ValidFrom |
| | | | | | ValidTo |
| | | | | | UsageType |
| | | | | Elements: | |
| | | | | | DeliverySession |
| | | | | | TransportObjectID |
| | | | | | Fragment |
| | | | | | AltermativeURI |
| ValidFrom | A | O | 0..1 | Start time of session | |
| ValidTo | A | O | 0..1 | End time of session | |
| UsageType | A | O | 0..1 | Session-used Type (Ex: Service Guide, File Delivery, etc) | |
| DeliverySession | E3 | M | 1 | Session information for content to be delivered | |
| | | | | Attributes: | |
| | | | | | SourceIP |
| | | | | | TransportSessionID |
| SourceIP | A | M | 1 | SourceIP address to be transported | |
| TransportSessionID | A | M | 1 | Session ID to be transported | |
| TransportObjectID | E3 | O | 0..N | Id for Transport Object | |

In Table 3C, 'ExtensionURL' is an optional value indicating a URL of a service or content server for additional information for the notification message.

'SessionInformation' is an optional value indicating session information for data reception. When the ESG is updated or file and content are received, 'SessionInformation' includes information on the session where there are the corresponding ESG or the file and content, and has, as its sub-elements, attributes 'ValidFrom', 'ValidTo' and 'UsageType', and elements 'DeliverySession' and 'TransportObjectID', and 'Fragment' and 'AlternativeURI' of Table 3D. The 'SessionInformation', although it can be used for non-notification, is mainly used for providing information for file or content reception.

'ValidFrom' indicates a start time where 'Sessionlnformation' is valid, and is an optional value. 'ValidTo' indicates an end time where 'SessionInformation' is valid, and is an optional value. 'UsageType' indicates a type in which 'SessionInformation' is used, and indicates whether the corresponding message is for ESG update use, or for file reception use. 'UsageType' can be defined in various types according to purpose of the service provider.

'DeliverySession' indicates a location of the session, at which an object such as ESG or file, will actually be transmitted, and has attributes 'SourceIP' and 'TransportSessionID'. 'SourceIP' is an IP address of a corresponding transport session, and is available as both a broadcast address and a multicast address. 'TransportSessionID' has an ID for a transport session. 'TransportObjectID' is a unique identifier for an object transmitted over the session.

**Table 3D**

| Name | Type | Category | Cardinality | Description | |
|---|---|---|---|---|---|
| Fragment | E3 | O | 0..N | Fragment information of Transport Object Attributes: | |
| | | | | | FragmentId |
| | | | | | FragmentVersion |
| FragmentId | A | O | 0..1 | Id value of Fragment | |
| FragmentVersion | A | O | 0..1 | Version information of Fragment | |
| AlternativeURI | E3 | O | 0..1 | Alternative URI Address capable of receiving Object | |
| MediaInformation | E2 | O | 0..1 | Media information for generation of Multimedia Notification Message Elements: | |
| | | | | | Picture |
| | | | | | Video |
| | | | | | Audio |
| Picture | E3 | O | 0..N | Picture information Attributes: | |
| | | | | | MIMEtype |
| | | | | | PictureURI |
| MIMEtype | A | O | 0..1 | MIMEtype | |
| PictureURI | A | O | 0..1 | URI indicating location of picture | |
| Video | E3 | O | 0..N | Picture information | |
| | | | | Attributes: | |
| | | | | | MIMEtype |
| | | | | | VideoURI |

In Table 3D, 'Fragment', which is a fragment of a transmission object, indicates specific fragment information updated for ESG, and the terminal can receive and store only the updated fragment by checking corresponding ID and Version information of the 'Fragment'. The 'Fragment' and its subordinate attributes are needed only when the notification message is used for notify ESG update, and are not included when the notification message is used for other uses.

'FragmentID' is a unique identification value of a fragment to be received. 'FragmentVersion' indicates version information of a fragment to be received, and for a fragment having the same 'FragmentID', corresponding version information is checked to determine whether the terminal has 'FragmentID' corresponding to the latest version. If there is the latest version in the session, the terminal receives and stores the latest version value from the session.

'AlternativeURI' indicates a URI value where the corresponding object is located, preparing for when transmission through the session fails or a corresponding channel is not a broadcast channel. The terminal can access a location of the corresponding URI through an interactive channel and receive a desired object therefrom.

'MediaInformation' indicates media information for generation of a notification message, and is needed for a notification message generated with Multimedia. 'Medialnformation' is composed of sub-elements 'Picture', 'Video', and 'Audio'.

'Picture' indicates picture or image information, 'MIMEtype' indicates a Multipurpose Internet Mail Extension (MIME) type for corresponding video, 'PictureURI' indicates a location of corresponding picture or image, and 'Video' indicates information on video.

**Table 3E**

| Name | Type | Category | Cardinality | Description | |
|---|---|---|---|---|---|
| MIMEtype | A | O | 0..1 | MIMEtype | |
| VideoURI | A | O | 0..1 | URI indicating location of video | |
| Audio | E3 | O | 0..N | Picture information | |
| | | | | Attributes: | |
| | | | | | MIMEtype |
| | | | | | AudioURI |
| MIMEtype | A | O | 0..1 | MIMEtype | |
| AudioURI | A | O | 0..1 | URI indicating location of audio | |

In Table 3E, 'MIMEtype' indicates a MIME type for video, and 'VideoURI' indicates a location of video. The term "location of video" refers to a location of a particular server, when the corresponding video is not included in a notification message during its transmission but is located in the particular server.

'Audio' indicates information on voice, music, bell sound, and the like, 'MIMEtype' indicates a MIME type for corresponding audio, and 'AudioURI' indicates a location of audio.

When 'PictureURI', 'AudioURI' and 'VideoURI' in the media information of Tables 3D and 3E are not included in a notification message during their transmission, it means that notification information generated with the media is included in the notification message itself. In this case, although not specifically illustrated in the notification message schema, notification information generated with the selected media is included in a message payload part following the above information.

Table 4 shows a format of a message generated with text, as a scheme of a notification message for user use (hereinafter referred to as a "user-use notification message") according to the present invention. A definition of each item is equal to that of Table 3, and a detailed description of the parts equal to those of Table 3 is accordingly omitted.

**Table 4**

| Name | Type | Category | Cardinality | Description | |
|---|---|---|---|---|---|
| Notification | E 1 | O | 0..N | Notification Message Fragment | |
| | | | | It includes following attributes and elements. | |
| | | | | Attributes: | |
| | | | | | Id |
| | | | | | NotificationType |
| | | | | | Validity |
| | | | | Elements: | |
| | | | | | Name |
| | | | | | Description |
| | | | | | PresentationType |
| | | | | | ExtensionURL |
| id | A | M | 1 | Notification message identifier | |
| NotificationType | A | M | 1 | Notification Type: | |
| | | | | | if 0. UserUse |
| | | | | | if 1. TerminalUse |
| | | | | ServiceProvider Definable | |
| Validity | A | O | 0..1 | Valid period of Fragment | |
| Name | E2 | M | 1..N | Name of Notification Fragment | |
| | | | | It has following attribute. | |
| | | | | | Lang |
| Lang | A | O | 0..1 | Language | |
| Description | E2 | M | 1..N | Notification Message content or description | |
| Lang | A | O | 0..1 | Language | |
| PresentationType | E2 | M | 1 | **Definition of Presentation Type for Message** | |
| | | | | **PresentationType=0,** terminal immediately displays notification message on screen. | |
| | | | | **PresentationType=1,** terminal stores notification message in memory so that user can later read the message (default value). | |
| | | | | **PresentationType=2,** terminal overlay notification message on the currently displayed service. **PresentationType** can be additionally designated as occasion demands | |
| ExtensionURL | E2 | O | 0..N | URL for additional information | |

As shown in Table 4, a user-use notification message proposed in this embodiment of the invention can be used for reception of notice, advertisement message, charging information and payment information from a service provider or a content provider, and 'ExtensionURL', serving as CallbackURL, can receive additional information through an interactive channel. The notification message shown in Table 4 is composed of attributes 'id', 'NotificationType' and 'Validity', and elements 'Name', 'Description', 'PresentationType' and 'ExtensionURL'. All subordinate attributes and elements constituting the notification message are equal to those of Table 3, so a detailed description thereof is accordingly omitted herein.

With reference to Table 5, a description will now be made of a structure of a message generated with multimedia, as a scheme of a user-use notification message according to the present invention. A definition of each item in Table 5 is equal to that of Table 3, and a detailed description of the parts equal to those of Table 3 is accordingly omitted.

**Table 5**

| Name | Type | Category | Cardinality | Description | |
|---|---|---|---|---|---|
| Notification | E1 | O | 0..N | Notification Message Fragment | |
| | | | | It includes following attributes and elements. | |
| | | | | Attributes: | |
| | | | | | Id |
| | | | | | NotificationType |
| | | | | | Validity |
| | | | | Elements: | |
| | | | | | Name |
| | | | | | Description |
| | | | | | PresentationType |
| | | | | | ExtensionURL |
| | | | | | MediaInformation |
| id | A | M | 1 | Notification message identifier | |
| NotificationType | A | M | 1 | Notification Type: | |
| | | | | | if 0. UserUse |
| | | | | | if 1. TerminalUse |
| | | | | ServiceProvider Definable | |
| Validity | A | O | 0..1 | Valid period of Fragment | |
| Name | E2 | M | 1..N | Name of Notification | |
| | | | | Fragment It has following attribute. | |
| | | | | | Lang |
| Lang | A | O | 0..1 | Language | |
| Description | E2 | M | 1..N | Notification Message content or description | |
| Lang | A | O | 0..1 | Language | |
| PresentationType | E2 | M | 1 | **Definition of Presentation Type for Message** | |
| | | | | **PresentationType=0,** terminal immediately displays notification message on screen. | |
| | | | | **PresentationType=1,** terminal stores notification message in memory so that user can later read the message (default value). | |
| | | | | **PresentationType=2**, terminal overlay notification message on the currently displayed service. | |
| | | | | **PresentationType** can be additionally designated as occasion demands | |
| ExtensionURL | E2 | O | 0..N | URL for additional information | |
| MediaInformation | E2 | O | 0..1 | Media information for generation of Multimedia Notification Message : | |
| | | | | Elements | |
| | | | | | Picture |
| | | | | | Video |
| | | | | | Audio |
| Picture | E3 | O | 0..N | Picture information | |
| | | | | Attributes: | |
| | | | | | MIMEtype |
| | | | | | AudioURI |
| MIMEtype | A | O | 0..1 | MIMEtype | |
| PictureURI | A | O | 0..1 | URI indicating location of picture | |
| Video | E3 | O | 0..N | Picture information | |
| | | | | Attributes: | |
| | | | | | MIMEtype |
| | | | | | VideoURI |
| MIMEtype | A | O | 0..1 | MIMEtype | |
| VideoURI | A | O | 0..1 | URI indicating location of video | |
| Audio | E3 | O | 0..N | Picture information | |
| | | | | Attributes: | |
| | | | | | MIMEtype |
| | | | | | AudioURI |
| MIMEtype | A | O | 0..1 | MIMEtype | |
| AudioURI | A | O | 0..1 | URI indicating location of audio | |

As shown in Table 5, the notification message proposed by the present invention can be generated with various multimedia files such as image, video, audio, and the like, and the system can use the notification message as an advertisement message for service and content, and a message for public good, such as missing child search. The notification message of Table 5 is composed of attributes 'id', 'NotificationType' and 'Validity', and elements 'Name', 'Description', 'PresentationType', 'ExtensionURL' and 'MediaInformation'. All subordinate attributes and elements constituting the notification message of Table 5 are similar to those of Table 3, so a detailed description thereof is omitted herein. With reference to Table 6, a description will now be made of a format of a message including session information, as a scheme of a terminal-use notification message according to the present invention. A definition of each item in Table 6 is similar to the definitions for Table 3.

**Table 6**

| Name | Type | Category | Cardinality | Description | |
|---|---|---|---|---|---|
| Notification | E1 | O | 0..N | Notification Message Fragment | |
| | | | | It includes following attributes and elements. | |
| | | | | Attributes: | |
| | | | | | Id |
| | | | | | NotificationType |
| | | | | | Validity |
| | | | | Elements: | |
| | | | | | Name |
| | | | | | Description |
| | | | | | PresentationType |
| | | | | | ExtensionURL |
| | | | | | SessionInformation |
| id | A | M | 1 | Notification message identifier | |
| NotificationType | A | M | 1 | Notification Type: | |
| | | | | | if 0. UserUse |
| | | | | | if 1. TerminalUse |
| | | | | ServiceProvider Definable | |
| Validity | A | O | 0..1 | Valid period of Fragment | |
| Name | E2 | M | 1..N | Name of Notification Fragment | |
| | | | | It has following attribute. | |
| | | | | | Lang |
| Lang | A | O | 0..1 | Language | |
| Description | E2 | M | 1..N | Notification Message content or description | |
| Lang | A | O | 0..1 | Language | |
| PresentationType | E2 | M | 1 | **Definition of Presentation Type for Message** | |
| | | | | **PresentationType=0,** terminal immediately displays notification message on screen. | |
| | | | | **PresentationType=1,** terminal stores notification message in memory so that user can later read the message (default value). | |
| | | | | **PresentationType=2,** terminal overlay notification message on the currently displayed service. | |
| | | | | **PresentationType** can be additionally designated as occasion demands | |
| ExtensionURL | E2 | O | 0..N | URL for additional information | |
| Sessionlnformation | E2 | O | 0..N | Session information for data | |
| | | | | Attributes: | |
| | | | | | ValidFrom |
| | | | | | ValidTo |
| | | | | | UsageType |
| | | | | Elements: | |
| | | | | | DeliverySession |
| | | | | | TransportObjectID |
| | | | | | Fragment |
| | | | | | AltermativeURI |
| ValidFrom | A | O | 0..1 | Start time of session | |
| ValidTo | A | O | 0..1 | End time of session | |
| UsageType | A | O | 0..1 | Session-used Type (Ex: Service Guide, File Delivery, etc) | |
| DeliverySession | E3 | M | 1 | Session information for content to be delivered | |
| | | | | Attributes: | |
| | | | | | SourceIP |
| | | | | | TransportSessionID |
| SourceIP | A | M | 1 | SourceIP address to be transported | |
| TransportSessionID | A | M | 1 | Session ID to be transported | |
| TransportObjectID | E3 | O | 0..N | ID for Transport Object | |
| Fragment | E3 | O | 0..N | Fragment information of Transport | |
| | | | | Object | |
| | | | | Attributes: | |
| | | | | | FragmentId |
| | | | | | FragmentVersion |
| FragmentID | A | O | 0..1 | ID value of Fragment | |
| FragmentVersion | A | O | 0..1 | Version information of Fragment | |
| AlternativeURI | A | O | 0..1 | | |

The typical usage of the terminal-use notification message shown in Table 6 is to help a terminal store an updated ESG by providing ESG update information to the terminal. In addition, the terminal-use notification message can be used, for example, for service start for service or content, download start for a file, and delivery of a multimedia notification message transmitted over a separate session. Although the typical usage of the notification message is assumed herein to provide ESG update information to the terminal, another usage can replace the typical usage.

The term "separate session" refers to another session other than the session already established to the terminal to receive a content service. Generally, in order to transmit content, a mobile broadcast system opens a session with a multicast address and transmits the corresponding content to a terminal, and when the terminal is already receiving the content service from the mobile broadcast system with a specific session, it can receive additional information by opening a separate session other than the previously established session.

As shown in Table 6, the terminal-use notification message of the present invention is composed of attributes 'id', 'NotificationType' and 'Validity', and elements 'Name',' 'Description', 'PresentationType', 'ExtensionURL' and 'SessionInformation'. All subordinate attributes and elements constituting the notification message of Table 6 are similar to those of Table 3, so a detailed description thereof is accordingly omitted herein.

FIG. 21 is a flowchart illustrating a procedure for receiving and processing a notification message by a terminal according to the present invention. Attributes and elements of the notification message have been described above. Referring to FIG. 21, in step 2101, a terminal receives a notification message from a mobile broadcast system in Operation B 420 of FIG. 4. In step 2102, the terminal parses the corresponding message according to a format of the notification message. If the notification message is configured in an eXtensible Markup Language (XML) form, the terminal parses the notification message using an XML parser included therein.

In step 2103, a controller of the terminal checks 'NotificationType' of the parsed notification message and performs a predetermined operation according to the check result, and a description thereof is provided below. If 'NotificationType' is '0' indicating user use, the terminal proceeds to step 2110. If 'NotificationType' is '1' indicating terminal use, the terminal proceeds to step 2130. If 'NotificationType' is '2' or greater, indicating a message service defined by the service provider, the terminal proceeds to step 2120 where it performs a specific operation defined by the service provider. Herein, for 'NotificationType' ≥ '2', the service provider can freely define and use the notification message according to the business model and service.

In step 2110, because the received notification message is for user use, the terminal can provide the user with the notification message through a display. The received user-use notification message can be a short message or a multimedia message. With the use of the user-use notification message, the service provider can provide various types of messages, such as service event notification, system failure or check notice, text or multimedia advertisement for service and content, disaster broadcast message, charging-related notice, and the like. Priority (or preference) is set depending on 'PresentationType' of the notification message, and if the received notification message is a high-priority notification message, the terminal outputs the received notification message through the display. Herein, the 'PresentationType' can be freely defined and used according to business model and service of the service provider.

In step 2111, the terminal determines whether to process the notification message, depending on 'PresentationType' of the notification message. If 'PresentationType' of the notification message is '0' in step 2111, it indicates that the corresponding message is a message that should be urgently provided to the user, and if 'PresentationType' is '1', it indicates that the corresponding message will be stored in a memory of the terminal. Finally, if 'PresentationType' is '2', it indicates that the terminal will overlay the notification message on the content in service.

If it is determined in step 2111 that 'PresentationType' of the notification message is '0' indicating that the corresponding message is a message that should be urgently shown to the user, the terminal stops the currently received service in step 2112, generates the notification message in step 2113 such that it can be directly provided to the user, and outputs the generated notification message to the display in step 2114. Herein, the phrase "generating the notification message" means that if the notification message is generated in the XML format, the terminal generates the notification message such that it can provide text, image, audio and video information included in the message to the user.

If it is determined in step 2111 that 'PresentationType' of the notification message is '1', the terminal stores the notification message in the memory in step 2115. Thereafter, the user can detect the notification message stored in the memory through an appropriate operation.

Finally, if it is determined in step 2111 that 'PresentationType' of the notification message is '2', the terminal proceeds to step 2116 where it reconfigures the notification message according to its supportable screen configuration scheme, in order to overlay the received notification message on the service/content currently provided through the display. In step 2117, the terminal overlays the notification message generated in step 2116 on the content currently provided to the user through the display.

However, if 'NotificationType' of the notification message is '1' in step 2103, the terminal determines in step 2130 that the notification message is for terminal use. Thereafter, the terminal checks session information of the notification message in step 2131, accesses a corresponding session based on content of the session information in step 2132, receives designated contents such as ESG, file, object and the like, through the session in step 2133, and stores or updates the received contents in the memory in step 2134. A process 2140 shown by a dotted line includes steps 2131 to 2134, and can optionally be performed according to setting of the terminal or operation of the user.

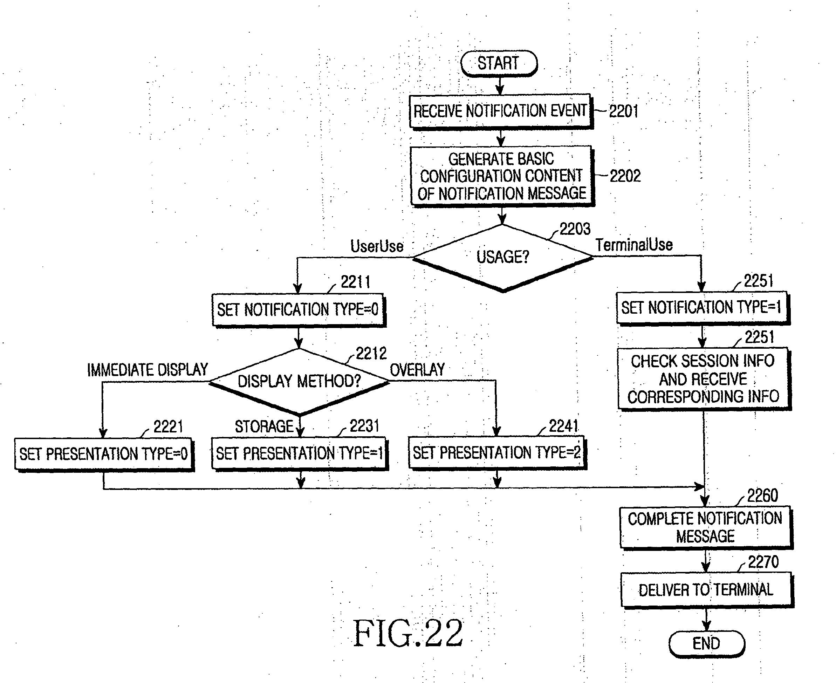

FIG. 22 is a flowchart illustrating a procedure for generating and delivering a notification message in a mobile broadcast system according to the present invention. Attributes and elements of the notification message described in FIG. 22 have been described through Table 3 to Table 6. The notification message is generated in the notification generation function block 103a described in FIG. 1, based on the notification event that is generated by a request of the content provider, service provider or network provider, or generated by the mobile broadcast service system.

Referring to FIG. 22, in step 2201, a notification generation function block 103a receives from a notification event function block 102a a notification message event such as a change in system and service, failure, change and delivery of ESG, delivery of contents, advertisement message, disaster message for emergency situation, and the like.

In step 2202, the notification generation function block 103a generates basic information of the notification message, i.e. attributes 'id' and 'Validity', and elements 'Name', 'Description', 'ExtensionURL' and 'MediaInformation', based on the received notification message event. After generating the basic information, the notification generation function block 103a determines in step 2203 whether the notification message is for user use or terminal use, and sets 'NotificationType' according to the determination result.

If it is determined in step 2203 that the notification message is for user use, the notification generation function block 103a proceeds to step 2211 where it sets 'NotificationType' to '0'. After setting 'NotificationType' to '0' in step 2211, the notification generation function block 103a determines in step 2212 whether it will immediately display the notification message on the user terminal, whether it will store the notification message in the terminal and later output the notification message to the user at the request of the user, or whether it will overlay the notification message on the content in service for the user.

After determining a display method of the notification message on the terminal in step 2212, if the notification generation function block 103a determines to allow the terminal to immediately display the notification message upon receipt of it, the notification generation function block 103a sets 'PresentationType' of the notification message to '0' in step 2221. However, if the notification generation function block 103a determines to allow the terminal to store the notification message and later output the notification message at the request of the user, it sets 'PresentationType' to '1' in step 2231. Finally, if the notification generation function block 103a determines to allow the terminal to overlay the notification message on the currently received content for the user, it sets 'PresentationType' in the notification message to '2' in step 2241.

However, if the notification message is determined to be for terminal use in step 2203, the notification generation function block 103a sets 'NotificationType' of the notification message to '1' in step 2251.

In step 2252, the terminal-use notification message, as described in the notification message format, is used as a message for notifying update and delivery of ESG, or delivery of service and content, and there is a need for session information for the corresponding notification message. Therefore, in order to generate the terminal-use notification message, the notification generation function block 103a needs corresponding session information. This session information is stored in a service management block 103, and as a NDAF block 103b of the service management block 103 transmits the session information to the notification generation function block 103a, the notification generation function block 103a checks the session information and then sets the associated information in the notification message. The session information is written in 'SessionInformation' of Table 3 in the present invention.

After completion of setting the user-use or terminal-use notification message in the foregoing manner, the notification generation function block 103a generates the notification message in the final format in step 2260. The generated notification message is delivered to the terminal via the NDAF block 103b in step 2270.

A description is now provided of a notification message format, a notification message transmission/reception method, and system thereof in a mobile broadcast system according to another embodiment of the present invention. The entire scheme for the notification message according to this embodiment of the present invention will be described with reference to Table 7 below.

Table 7 shows the exemplary entire scheme for the notification message according to this embodiment of the present invention, and it further includes 'NotificationVersion' indicating a version of the notification message, compared with that of the prior embodiment of the present invention regarding FIGs. 21-22 and associated description. 'Notification Version', like the 'id', 'NotificationType' and 'Validity' commonly used in the prior embodiment of the present invention, is a basic attribute used regardless of usage of the notification message. Only the 'NotificationVersion' is shown in Table 7, and the other elements and attributes not shown in Table 7 are equal to those described in the prior embodiment, so they are not separately shown.

**Table 7**

| Name | Type | Category | Cardinality | Description |
|---|---|---|---|---|
| NotificationVersion | A | M | 1 | Version information of notification message |

'NotificationVersion' of Table 7 indicates a version number of a notification message. In this embodiment of the present invention, the reason for inserting the version number of the notification message into the notification message is because the mobile broadcast system may repeatedly transmit the notification message when necessary. This is effective when the notification message is lost during its transmission, or when there is a need for notification of an updated version for a certain notified service. When the mobile broadcast system repeatedly delivers the notification message, the terminal needs a criterion used for determining whether the received notification message is a new message. Therefore, this embodiment of the present invention includes the attribute 'NotificationVersion' of Table 7 as a fragment attribute of 'Notification' which is an element of the notification message.

According to this embodiment of the present invention, the terminal receiving the notification message checks version information and repeated transmission of the notification message, using 'NotificationVersion' and 'id' together. That is, when the terminal receives the notification message repeatedly transmitted from the mobile broadcast system, the terminal determines novelty of the notification message using the above information.

An integer type version number or a time stamp using a Network Time Protocol (NTP) which is the Internet standard used for time synchronization between computers connected via a network can be used as 'Notification Version' according to the present invention, and other types can also be used. The system maintains the time stamp or integer type version number of 'Notification Version' included in the repeatedly transmitted message, at the value defined when the initial notification message is generated.

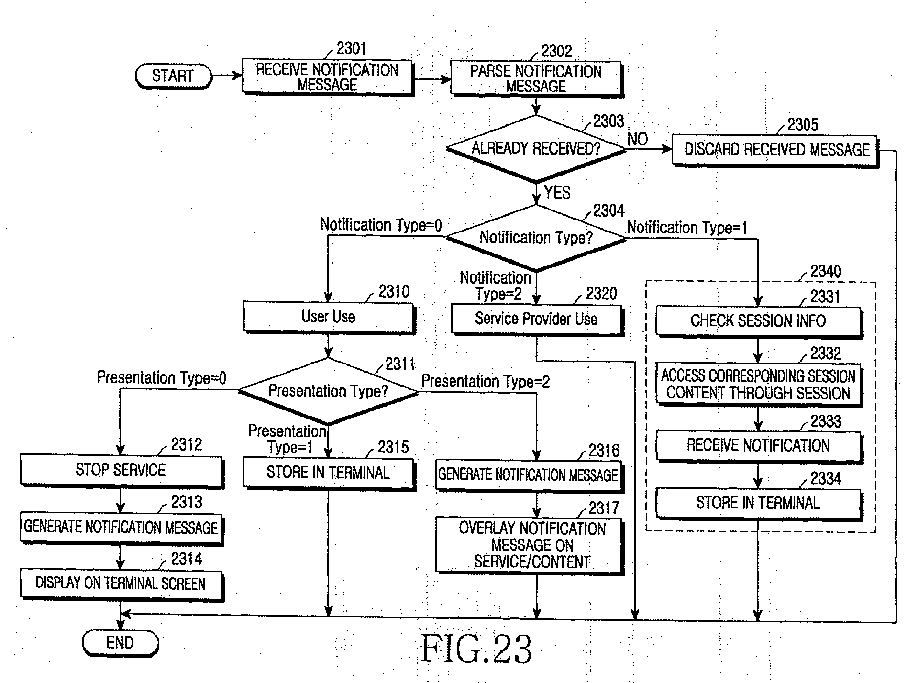

FIG. 23 is a flowchart illustrating a procedure for receiving and processing a notification message by a terminal according to the present invention. Attributes and elements of the notification message have been described above.

Referring to FIG. 23, in step 2301, a terminal receives a notification message from the mobile broadcast system in Operation B 420 of FIG. 4. In step 2302, the terminal parses the corresponding message according to a format of the notification message. If the notification message is configured in the XML format, the terminal parses the received message using an XML parser included therein.

In step 2303, a controller of the terminal determines whether the notification message is an already received message. In step 2303, the terminal compares the previously received notification message with the newly received notification message in terms of 'id' and 'Notification Version'. If the newly received notification message is equal to the previously received notification message in step 2303, the terminal discards the newly received notification message in step 2305, and then ends the procedure. However, if the notification message is a newly received message, the terminal proceeds to step 2304.

In step 2304, the terminal checks 'NotificationType' of the parsed notification message and performs a predefined operation according to the check result, and a description thereof will be given below. If 'NotificationType' is '0' indicating a user-use notification message, the terminal proceeds to step 2310. If 'NotificationType' is '1' indicating a terminal-use notification message, the terminal proceeds to step 2331. If 'NotificationType' is '2' or greater, indicating a message defined by the service provider, the terminal performs a specific operation defined by the service provider in step 2320. Herein, for 'NotificationType' ≥ '2', the service provider can freely define and use the notification message according to the business model and service.

In step 2310, because it is determined that the notification message is a received user-use notification message, the terminal can provide the user with the notification message through a display. The received user-use notification message can be a short message or a multimedia message. With the use of the user-use notification message, the service provider can provide various types of messages, such as service event notification, system failure or check notice, text or multimedia advertisement for service and content, disaster broadcast message, charging-related notice, and the like. As described above, priority is set depending on 'PresentationType' of the notification message, and if the received notification message is a high-priority notification message, the terminal outputs the received notification message through the display. Herein, the 'PresentationType' can be freely defined and used according to business model and service of the service provider.

In step 2311, the terminal determines whether to process the notification message, depending on 'PresentationType' of the notification message. If 'PresentationType' of the notification message is '0' in step 2311, it indicates that the corresponding message is a message that should be urgently provided to the user, and if 'PresentationType' is '1', it indicates that the corresponding message will be stored in a memory of the terminal. Finally, if 'PresentationType' is '2', it indicates that the terminal will overlay the notification message on the content in service.

If it is determined in step 2311 that 'PresentationType' of the notification message is '0' indicating that the corresponding message is a message that should be urgently shown to the user, the terminal stops the currently received service in step 2312, generates the notification message in an appropriate format in step 2313 such that it can be directly provided to the user, and outputs the generated notification message to the display in step 2314. If it is determined in step 2311 that 'PresentationType' of the notification message is '1', the terminal stores the notification message in the memory in step 2315. Thereafter, the user can detect the notification message stored in the memory through an appropriate operation. If it is determined in step 2311 that 'PresentationType' of the notification message is '2', the terminal proceeds to step 2316 where it reconfigures the notification message according to its defined screen configuration scheme, in order to overlay the received notification message on the service/content currently provided through the display. In step 2317, the terminal overlays the notification message generated in step 2316 on the content currently provided to the user through the display.

However, if 'NotificationType' of the notification message is '1' in step 2304, the terminal determines in block 2340 whether the notification message is for terminal use. Thereafter, the terminal checks session information content of the notification message in step 2331, accesses a corresponding session based on content of the session information in step 2332, receives designated contents such as ESG, file, object and the like, through the session in step 2333, and stores or updates the received contents in the memory in step 2334. Process 2340 shown in a block outlined by a dotted line that includes steps 2331 to 2334, and can optionally be performed according to setting of the terminal or operation of the user.

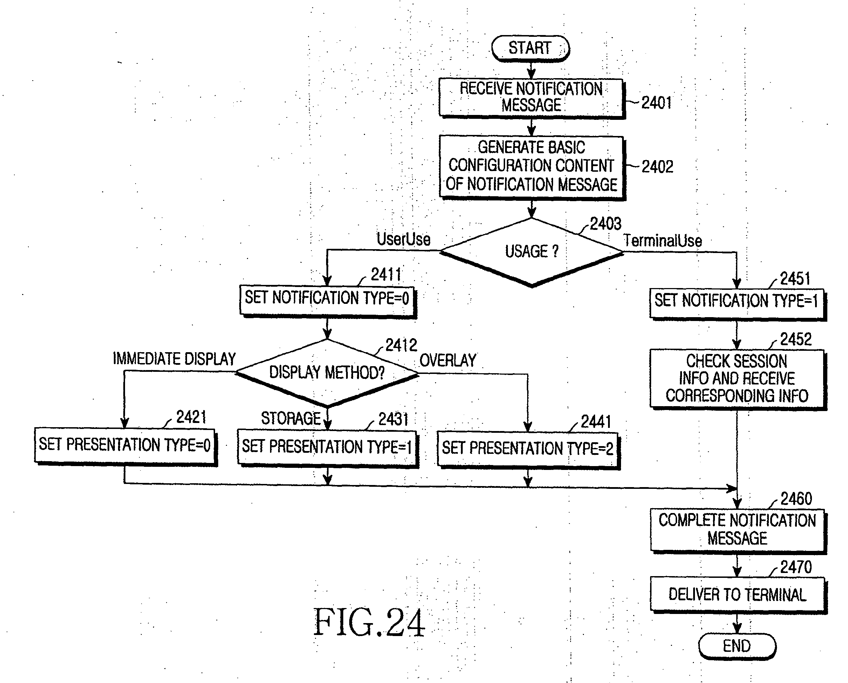

FIG. 24 is a flowchart illustrating a procedure for generating and delivering a notification message in a mobile broadcast system according to the present invention. Attributes and elements of the notification message described in FIG. 24 have been described in Tables 3 to 7. The notification message is generated in the notification generation function block 103a described in FIG. 1, based on the notification event that is generated by a request of the content provider, service provider or network provider, or generated by the mobile broadcast service system.

Referring to FIG. 24, in step 2401, a notification generation function block 103a receives from a notification event function block 102a a notification message event such as a change in system and service, failure, change and delivery of ESG, delivery of contents, advertisement message, disaster message for emergency situation, and the like.

In step 2402, the notification generation function block 103a generates basic information on the notification message, i.e. attributes 'id', 'NotificationVersion' and 'Validity', and elements 'Name', 'Description', 'ExtensionURL' and 'MediaInformation', based on the received notification message event. After generating the basic information, the notification generation function block 103a determines in step 2403 whether the notification message is for user use or terminal use, and sets 'NotificationType' according to the determination result.

If it is determined in step 2403 that the notification message is for user use, the notification generation function block 103a proceeds to step 2411 where it sets 'NotificationType' to '0'. After setting 'NotificationType' to '0' in step 2411, the notification generation function block 103a determines in step 2412 whether it will immediately display the notification message on the user terminal, whether it will store the notification message in a memory of the terminal and later output the notification message to the user at the request of the user, or whether it will overlay the notification message on the content in service for the user.

After determining a display method of the notification message on the terminal in step 2412, if the notification generation function block 103a determines to allow the terminal to immediately display the notification message upon receipt of it, the notification generation function block 103a sets 'PresentationType' of the notification message to '0' in step 2421. However, if the notification generation function block 103a determines to allow the terminal to store the notification message and later output the notification message at the request of the user, it sets 'PresentationType' to '1' in step 2431. Finally, if the notification generation function block 103a determines to allow the terminal to overlay the notification message on the currently received content for the user, it sets 'PresentationType' in the notification message to '2' in step 2441.

However, if the notification message is for terminal use in step 2403, the notification generation function block 103a sets 'NotificationType' of the notification message to '1' in step 2451. In step 2452, for the terminal-use notification message, the notification generation function block 103a checks session information provided from the NDAF block 103b of the service management block 103, and then sets the associated information in 'SessionInformation' of the notification message.

After completion of setting for the user-use or terminal-use notification message in the foregoing manner, the notification generation function block 103a generates a notification message in the final format in step 2460. The generated notification message is delivered to the terminal via the NDAF block 103b in step 2470.

Table 8 below is a notification message scheme table for a better understanding of the tables showing elements and attributes constituting a notification message.

**Table 8**

| | | | | | |
|---|---|---|---|---|---|
| Name | Type | Category | Cardinality | Description | DataType |

In Table 8, the Name column indicates names of elements and attributes constituting the corresponding fragment, and the Type column indicates the type (element or attribute) of the names of elements and attributes constituting the corresponding fragment. The elements have E, E1 and E2. The Category column is used for determining whether the corresponding element or attribute is mandatory or optional in the Network (N) or the Terminal (T), and has an M (Mandatory) value when the corresponding element or attribute is mandatory, and has an O (Optional) value when the corresponding element or attribute is optional. Therefore, the mandatory content in the network is denoted by 'NM', the mandatory content in the terminal is denoted by 'TM', the optional content in the network is denoted by 'NO', and the optional content in the terminal is denoted by 'TO'. The Cardinality column indicates a relationship between elements, and has values of "0", "0..1", "1", "0..n", and "1..n". "0" indicates option, "1" indicates mandatory, and "n" indicates the possibility of having a plurality of values. In addition, "0..n" indicates that the corresponding element can or cannot have n values. The Description column indicates meaning of the corresponding element or attribute, and the DataType column indicates data type for the corresponding elements or attributes, i.e. type of the program language used, for example, XML.

Table 9 shows a notification message according to another embodiment. The notification message shown in this embodiment is different from the notification message shown in the prior embodiment in that the Category content is denoted by Mandatory/Option in the network and terminal as described in Table 8, that 'Name' among the elements is changed to 'Title', that 'BootstrappingDescriptor' and 'Fragment' are added to be used for ESG update, and that the 'NotificationType' for user use or terminal use is used for each individual usage or for each individual event of the notification message. In addition, for the purpose of notifying ESG update, version information indicating ESG update can be inserted into an Index List of an Announcement Channel, or the updated fragment itself can be sent. The terminal can access a corresponding ™™™session through ID and version for announcement carousel, and session information, and detect information on the latest version corresponding to the ID notified with the index list, thereby updating the ESG.

The notification message of Table 9 basically includes attributes 'id', 'Notification Version', 'NotificationType' and 'Validity', and elements 'Title', 'Description', 'PresentationType' and 'ExtensionURL', and 'Sessionlnformation', 'Medialnformation', 'ServiceGuideDeliveryDescriptor' and 'Fragment' are added according to usage of the notification message. The other elements and attributes not shown in Table 9 are similar to those described in the prior embodiments, are a description thereof is accordingly omitted.

**Table 9**

| Name | Type | Category | Cardinality | Description | Data Type |
|---|---|---|---|---|---|
| BootstrappingDescriptor | E1 | NO/T M | 0..N | Bootstrapping descriptor information of ESG Attributes: - Id - Version Elements: - DescriptorEntry | |
| Id | A | NM/T M | 1 | ID of bootstrap descriptor | anyURI |
| Version | A | NM/T M | 1 | Version information | unsignedInt |
| DescriptorEntry | E2 | NM/T M | 1..N | Entry of descriptor Elements: - GroupingCriteria - AlternativeAccessURL - ServiceGuideDeliveryUnit | |
| GroupingCriteria | E3 | NO/T M | 0..1 | Grouping Criteria in ServiceGuide Elements: - TimeGroupingCriteria - GenreGroupingCriteria - ServiceProviderCriteria | |
| TimeGroupingCriteria | E4 | NO/ TM | 0..1 | Sepecifies the period of time this DescriptorEntry describes. (For example: declares a certain subgroup of valid Service Guide fragments for next 2 hours) Contains the following attributes: - StartTime. - EndTime | |
| StartTime | A | NM/ TM | 1 | Start of the time period this DescriptorEntry declares fragments for. (Note this is different than fragment validity time) | int(32bit) expressed as NTP time |
| EndTime | A | NM/ TM | 1 | End of the time period this DescriptorEntry declares fragments for. (Note this is different than fragment validity time) | int(32bit) expressed as NTP time |
| GenreGrouping Criteria | E4 | NO/ TM | 0..1 | Specifies the classification of the services/content associated with the fragments in this Service Guide Delivery Unit. (e.g. comedy, action, drama) | string |
| ServiceProvider Criteria | E4 | NO/ TM | 0..1 | Specifies the each service provider by unlque name. | string |
| Transport | E3 | NO/ TM | 0..1 | The pointer to the transport session delivering the Service Guide fragments within Service Guide Delivery Units announced in this DescriptorEntry. Contains the following attributes: - IpAddress, - Port, - SrcipAddress, - SessionID | |
| IPaddress | A | NM/ TM | 1 | Destination IP address of the target delivery session | string |
| Port | A | NM/ TM | 1 | Destinaion port of target delivery session | unsignedShort (16 bits) |
| SrcipAddress | A | NM/ TM | 0..1 | Source IP address of the delivery session | string |
| SessionID | A | NM/ TM | 1 | Identifier of target delivery session | unsignedShort (16 bits) |
| AltermativeAcc essURL | E3 | NO/ TM | 0..N | Altermative URL for retrieving the Service Guide delivery units via the interactive channel | anyURI |
| ServiceGuide DeliveryUnit | E3 | NM/ TM | 1..N | A group of fragments. Contains the following attributes: - transportObjectID, - validFrom, - validTo Contains the following sub-element: - Fragment | |
| transportObjectI | A | NO/ TM | 0..1 | The transport object ID of the Service Guide Delivery Unit carrying the declared fragments within this group. | unsignedInt (32 bits) |
| validFrom | A | NO/ TM | 0..1 | The first moment of time this group of Service Guide fragments is valid. The format is NTP. Note: If this attribute is not present, "validFrom" attribute MUST be present in the "Fragment" sub-element. | int(32bit) expressed as NTP time |
| validTo | A | NO/ TM | 0..1 | The last moment of time this group of Service Guide fragments is valid. The format is NTP. Note: If this attribute is not present, "validTo" attribute MUST be present in the "Fragment" sub-element. | int(32bit) expressed as NTP time |
| Fragment | E4 | NM/ TM | 1..N | Declaration of Service Guide fragment that is available over broadcast channel. Contains the following attributes: - transported, - id, - version, - vaildFrom, - validTo, - type | |
| transportID | A | NM/ TM | 1 | The identifier of the announced Service Guide fragment to be used in the Service Guide Delivery Unit header. | unsignedInt (32 bits) |
| id | A | NM/ TM | 1 | The identifier of the announced Service Guide fragment. | anyURI |
| version | A | NM/ TM | 1 | The version of the announced Service Guide fragment. Note: The scope of the version is limited to the given transport session. The value of version turn over from 2^32-1 to 0. | unsignedInt (32 bits) |
| validFrom | A | NO/ TM | 0..1 | The first moment when this fragment is valid. If not given, the validity is assumed to have started at some time in the past. Note: If this attribute is present and "validFrom" attribute of "ServiceGuideDeliveryUnit" is also present, the value of this attribute overrides the value of "Service GuideDeliveryUnit"attribiut e "validFrom" | int(32bit) expressed as NTP time |
| validTo | A | NO/ TM | 0..1 | The last moment when this fragment is valid. If not given, the validity is assumed to end in undefined time in the future. Note: If this attribute is present and "validTo" attribute of "ServiceGuideDeliveryUnit" is also present, the value of this attribute overrides the value of "Service GuideDeliveryUnit"attribute "validTo" | int(32bit) expressed as NTP time |
| type | A | NM/ TM | 1 | Enumeration value designating the schema or MIME type for fragment. | string |
| Fragment | E1 | NO/ TM | 0..N | This element SHALL be present when the Notification Message carries Service Guide fragment. This element may carry any Service Guide fragment. | <TBD> |

Table 10 shows a notification message according to a further embodiment. As for the notification message according to this embodiment, the terminal determines whether the notification message is for user use or terminal use using 'NotificationType', and then operates according to the usage indicated by 'EventType' of the notification message. In addition, the notification message includes 'FilteringValue' to enable display of the contents stored in the user terminal or the contents existing in a specific session, and the contents corresponding to the 'FilteringValue', so each user can view different contents.

In this embodiment, a generic field of the notification message is composed of attributes 'id', 'Notificatioin Version', 'NotificationType', 'EventType', 'PresentationType' and 'Validity', and elements 'Title', 'Description' and 'ExtensionURL'. 'Filtering Value', 'SessionInformation', 'MediaInformation', 'ServiceGuideDeliveryDescriptior' and 'Fragment' can be configured together with the Generic field according to 'EventType'. This embodiment, compared with the previous embodiments, further includes an attribute 'EventType' and an element 'FilteringValue'. Table 10 shows elements and attributes in this embodiment, and the other elements and attributes not shown in Table 10 follow the previous embodiments, so a description thereof is not provided herein.

**Table 10**

| Name | Type | Category | Cardinality | Description |
|---|---|---|---|---|
| FilteringVlaue | E2 | NO/TO | 0..N | Definition of value necessary for filtering |
| FilteringType | A | NM/TM | 1 | Filtering Type, Ex) sex, age, name, location, etc. |
| EventType | A | NM/TM | 1 | Type of event delivered by notification message |

Table 11 shows combined exemplary values used in 'NotificationType' and 'EventType' described in regard to the above embodiments. A notification message format is subject to change according to 'EventType'.

For example, for 'EventType'='1', 'Generic Field + MediaInformation' is possible, and for 'EventType'='2', the notification message can be configured with 'Generic Field + FilteringValue' to show the associated advertisement or contents stored in the terminal through 'Filtering', the notification message can be configured with 'Generic Field + SessionInformation' to send advertisement contents in a specific session and allow the user to access the corresponding session and view the advertisement in real time, or the notification message can be configured with 'Generic Field + FilteringValue + SessionInformation' to allow the user to view user-specific advertisements through 'FilteringValue' during the corresponding session.

For 'EventType'='3', the notification message can be configured with 'Generic Field + SessionInformation' to indicate start of service or file transfer, and also to deliver the session together where the corresponding service or file will be transmitted. For 'EventType'='4', the notification message can be configured with 'Generic Field + Session Information' to indicate only the session where the updated ESG exists, or the corresponding Index List can be delivered through the notification message like 'Generic Field + Index List', or a modified fragment itself can be configured like 'Generic Field + Fragment'.

In addition, when there are several index lists in an ESG announcement carousel session, the notification message can be configured with ID of 'Generic Field+ Index List' and 'version + SessionInformation' to inform the terminal of a modified specific Index List in the session, thereby enabling update of the index list.

For 'EventType'='5', the notification message is configured only with 'Generic Field', and for 'EventType'='6', the notification message is configured with 'Generic Field + MediaInformation'. In addition, various definitions of the 'EventType' can be added according to usage. For example, although not shown in Table 11, 'EventType' of 'In advance download files', 'software download' and 'general information' can be added.

**Table 11**

| Event Type | Name | Description |
|---|---|---|
| 1 | Emergency notification | To announce emergency messages to users. |
| 2 | Advertisement | To signal advertisement insertion to terminals. |
| 3 | Service availability announcement | To announce service availability to users. |
| 4 | Service Guide update | To announce Service Guide updates to users. |
| 5 | Text message | To announce text-based notifications to users. |
| 6 | Multimedia message | To announce multimedia-based notification to users. |
| 7 | Service delivery problem | To announce Service delivery problem to users. |

Table 12 shows an exemplary format of a general notification message, and also shows configuration information for each individual 'EventType'. 'EventType' shown in Table 12 includes 'Emergency', 'ESG download/update', 'Event Trigger', 'File download/update' and 'informative'. Among them, an event type 'Event Trigger' instructs the terminal to receive a notification message and perform a specific operation other than ESG update and file download, and can have a restriction of performing within a predetermined time an operation associated with the service that the terminal or an application in the terminal is receiving. 'Service identification information' in Table 12 indicates service identification information where the notification message related to each service is delivered, and this can be one or both of the port number described in Operation A 410 and 'Service_id' described below. 'Specific Service discontinuity', which is one of 'use cases' shown in Table 12, can be configured according to a ninth embodiment, or can be distinguished into 'ESG download/update' or 'informative' message. When the port number is used as the service identification information, the message is regarded as an 'informative' message, and when the Service_id is used as the service identification information, it can be 'event type' of 'ESG download/update'.

**Table 12**

| Event Type | Use cases | Required information | Optional information |
|---|---|---|---|
| - | High priority message within specific area | Cell_id, priority | |
| - | Message within specific area | Cell id | |
| Emergency | Emergency message | MediaInformation (text, image, videoURL), PresentationType | SDP, ExtensionURL |
| ESG download/ update | ESG update available | ESGBootstrapDescriptor, ESGfragment | |
| ESG download/ update | Global service discontinuity | MediaInformation (text, image, videoURL), PresentationType | ExtensionURL, ESGBootstrap Descriptor, ESGfragment |
| ESG download/ update | New service availability | MediaInformation (text, image, videoURL), PresentationType, ESGBootstrapDescriptor, ESGfragment | |
| ESG download/ update or Informative | Specific service discontinuity | Service_identification information, MediaInformation (text, image, audio, videoURL), PresentationType | ExtensionURL |
| Event Trigger | Critical Software update material | Server URL, priority, time window | Description for the user |
| Event Trigger | FLUTE update | FLUTE session information, transport object | |
| Event Trigger | Message related to current service | MediaInformation (text, image, videoURL), PresentationType, time window | ExtensionURL |
| Event Trigger | Message related to current service(with timing requirements) | Service_identification information, time window, priority, MediaInformation (text, image, audio, videoURL), PresentationType | ExtensionURL |
| Event Trigger | Software update available (periodical installation) | Server URL, time window | Description for the user |
| Event Trigger | Urgent action to perform | SP defined field, time window, priority | SP defined field |
| Event Trigger | Urgent action to perform related to the service | Service delivery configuration, time window, priority, SP defined field | ESG bootstrap session, ESG fragment, SP defined field |
| File download/ update | In advance download of material | Server URL, time window, Service identification information | |
| Informative | Informative message | MediaInformation (text, image, audio, videoURL), audio, videoURL), PresentationType | ExtensionURL |
| Informative | Informative message with high priority | MediaInformation (text, image, audio, videoURL), PresentationType, priority | ExtensionURL |
| informative | Service scheduled for shut-down | MediaInformation (text, image, audio, videoURL), PresentationType | ExtensionURL |
| informative | Subscribed service is about to start | MediaInformation (text, image, audio, videoURL), PresentationType | |

In addition, when Service_id is used rather than the port number, the following is possible. That is, although not shown in Table 12, for an event type 'ESG download/update', Service_id can be used in the notification message to indicate whether the corresponding ESG update is related to a specific service. In addition, when Service_id is a predefined specific value, for example, "0x00", it indicates a notification message that is not related to a certain specific service but is related to all users. If all contents of the notification message are transmitted through the ESG as described in the fourth embodiment of the present invention and the Service_id is used in a notification message for use of ESG update, used for indicating the fact that the ESG was updated due to the notification message, then the terminal is allowed not to receive the ESG containing the notification message contents of the services to which the terminal is not related.

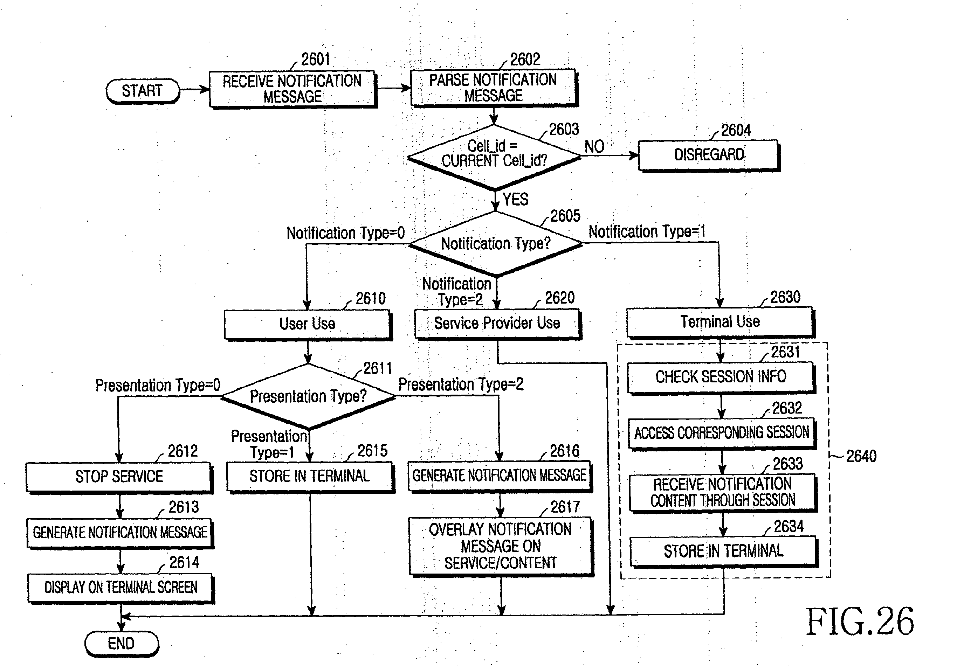

As an example related to the event type 'ESG download/update' of Table 12, an independent event type 'Service discontinuity' can be used. That is, taking into account the fact that information defined in regard to FIG. 26 is not transmitted in the independent event type and 'Service discontinuity' is information provided to the users, the system provides the users with a message indicating that a specific or all services will be stopped for a predetermined time, using the new 'MediaInformation', and using the event type 'ESG download/update' that reflects ESG update occurring due to the stop of the specific or all services for a predetermined time. In other words, in a single notification message, 'MediaInformation' can include the information for informing the user of the service stop, and the associated ESG update information together. In this case, ESG update information can be transmitted using the event type 'ESG download/update'.

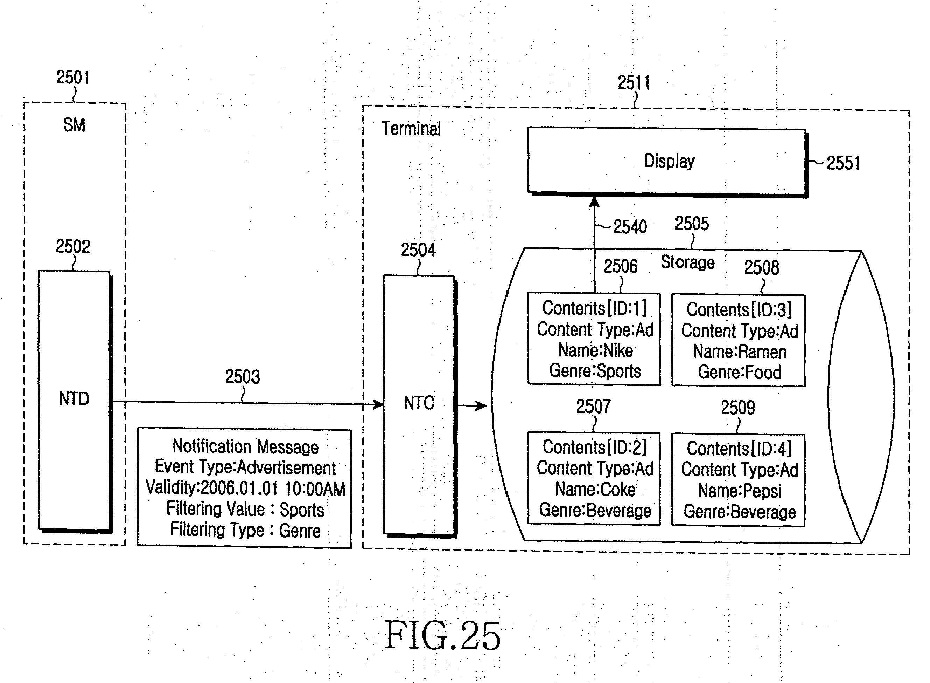

FIG. 25 is a block diagram illustrating architecture of a system in which a terminal receiving a notification message used for the purpose of advertisement or its similar purpose provides previously stored advertisement content or data to the user, according to an embodiment of the present invention. That is, the block diagram shows a process of displaying the advertisement content or its similar data or content stored in the user terminal on the screen of the terminal, in the case where an advertisement notification message with 'EventType'='2' includes 'FilteringValue'. Herein, a Service Management block (SM) 2501 is a network entity in charge of distribution in DVB-CBMS, and a Notification Transport Delivery block (NTD) 2502 is a component of a notification function for delivering a notification message in the Service Management block 2501.

Referring to FIG. 25, the NTD 2502 delivers a notification message 2503 with 'EventType'=Advertisement, 'FilteringType'=Genre and 'Filtering Value'=Sports to a Notification Client block (NTC) 2504 of a terminal 2511 via an interface defined between the service management block 2501 and the terminal 2511.

The NTC 2504 checks the notification message 2503 and detects content with Genre=Sports among the contents 2506 to 2509 stored in storage 2505 using an appropriate function in the terminal 2511. In this example, because the advertisement content matched to the 'Filtering Value' is Contents[ID:1] 2506, the contents 2506 is displayed on a display 2551 via an interface 2540 between the storage 2505 and the display 2551. Here, because 'Validity' in the notification message is "2006.01.01 10:00AM", the contents 2506 is automatically displayed at 10 o'clock in January 1, 2006.

'FilteringValue' and 'FilteringType' can be allocated various values according to their usage, and their major types can include user preference, user location, target group, service provider, user demographic profile, time of day, day of week, channel, and the like. If each of the types is used for the same purpose or content as the content such as element or attribute for describing a fragment associated with content or service of an ESG, it should be used with the same name. Elements and attributes used in the fragment associated to the content or service include 'Genre', 'ParentalRating', 'UserRating', 'TargetUserProfile' and 'BroadcastArea'.

In the foregoing, 'Title' and 'Description' can be used for the same purpose and function as the 'FilteringType' and 'FilteringValue'. In addition, the 'FilteringType' and 'FilteringValue' can be used as other functions except for the function of displaying some of the contents previously stored in the terminal. For example, for 'FilteringType'='User location', the terminal compares its current location with a 'FilteringValue' value in a notification message and can receive and process the notification message, only when they are coincident with each other, and this can be determined according to definition given by the service provider. For a DVB-H network, the location of the terminal can be indicated by Cell_id of DVB-H.

Table 13A is given for a description for the notification message that further includes 'Cell_id' in addition to the 'Generic field' of the notification message, which can be added in the above described embodiments, and is used for delivering a notification message to users in a specific area in the network, as an example of the specific notification message.

**Table 13A**

| Name | Type | Category | Cardinality | Description | Format |
|---|---|---|---|---|---|
| Cell_id | E2 | O | 0..N | Cell_id in TPS bit for notification message of a specific area. | integer |

When the network desires to deliver a notification message only into a specific cell, 'Cell_id' of the specific cell is included in the notification message. A Transmission Parameter Signaling (TPS) signal of DVB-H is transmitted along with cell identification information, and the terminal can detect its current cell depending on the TPS signal. Therefore, if there is a value valid for 'Cell id' in the received notification message, the terminal compares the value with Cell_id of its own cell acquired from the TPS signal and determines whether to process or discard the notification message. A plurality of 'Cell_id's can be included according to type of the notification message. Therefore, , in step 2202 of FIG. 22 and step 2402 of FIG. 24, 'Cell_id' is inserted into the notification message in the format of Table 13A.

The 'Cell_id' can be defined as one element of the notification message descried above, or can be defined as one of 'FilteringType' and 'FilteringValue' defined according another above-described embodiment. In this case, 'FilteringType' indicates location or cell, and 'FilteringValue' has a corresponding Cell_id value.

The key feature of this embodiment of the present invention is to carry regional information on a notification message. Therefore, in order to support a terminal that can correctly recognize its own position by receiving a Global Positioning System (GPS) signal, Table 13A can be modified into Table 13B. The regional information included in the notification message indicates a region smaller than the region that can be identified by the GPS signal of the terminal, i.e. indicates a region smaller than the cell identified by Cell_id. In Table 13B, 'area' includes 'Center_longitude', 'Center_latitude', 'radius' and 'dim_acc'. 'Center_longitude' indicates longitude for the central location of the target area of the notification message, 'Center_latitude' indicates latitude for the central location, 'radius' indicates radius from the central location, and 'dim_acc' indicates accuracy expressed in meters.

**Table 13B**

| Name | Type | Category | Cardinality | Description | Format |
|---|---|---|---|---|---|
| Area | E2 | O | 0..1 | a target area for this notification message. This element has its sub-elements. - Center_longitude - Center_latitude - radius - hor acc | float |
| Center_longitude | E3 | M | 1 | the center longitude of the target area | float |
| Center_latitude | E3 | M | 1 | the center latitude of the target area | float |
| Radius | E3 | M | 1 | the radius of the target area | float |
| dim_acc | E3 | M | 1 | the accuracy in meters | float |

FIG. 26 is a flowchart illustrating a procedure for receiving and processing a notification message by a terminal according to another embodiment of the present invention. Attributes and elements of the notification message have been described above. It is assumed herein that Cell_id is used as regional information.

Referring to FIG. 26, in step 2601, a terminal receives a notification message from a mobile broadcast system in Operation B 420 of FIG. 4. In step 2602, the terminal parses the notification message according to a format of the notification message. If the notification message is configured in the XML format, the terminal parses the received message using an XML parser included therein.

In step 2603, a controller of the terminal determines presence/absence of 'Cell_id' indicating regional information, in the parsed notification message. In the presence of the 'Cell_id', the terminal compares the 'Cell_id' value included in the notification message with its current location value. If the values are identical to each other, the terminal proceeds to step 2605. However, if they are not identical to each other, or if the terminal cannot determine its current Cell_id, the terminal can disregard the notification message in step 2604. Although not shown in the drawing, an operation performed after the case where the terminal does not have the current Cell_id can vary according to policy of each network.

In step 2605, the terminal checks 'NotificationType' of the parsed notification message and performs a predefined operation according to the check, and a description thereof will be given below. If 'NotificationType' is '0' indicating a user-use notification message, the terminal proceeds to step 2610. If 'NotificationType' is '1' indicating a terminal-use notification message, the terminal, the terminal proceeds to step 2630. If 'NotificationType' is '2' or greater, indicating a message defined by the service provider, the terminal proceeds to step 2620 where it performs a specific operation defined by the service provider. Herein, for 'NotificationType' ≥ '2', the service provider can freely define and use the notification message according to the business model and service.

In step 2610, because it is determined that the notification message is a received user-use notification message, the terminal can provide the user with the notification message through a display. The received user-use notification message can be a short message or a multimedia message. With the use of the user-use notification message, the service provider can provide various types of messages, such as service event notification, system failure or check notice, text or multimedia advertisement for service and content, disaster broadcast message, charging-related notice, and the like. As described above, priority is set depending on 'PresentationType' of the notification message, and if the received notification message is a high-priority notification message, the terminal outputs the received notification message through the display. Herein, the 'PresentationType' can be freely defined and used according to business model and service of the service provider.

In step 2611, the terminal determines whether to process the notification message, depending on 'PresentationType' of the notification message. If 'PresentationType' of the notification message is '0' in step 2611, it indicates that the corresponding message is a message that should be urgently provided to the user, and if 'PresentationType' is '1', it indicates that the corresponding message will be stored in a memory of the terminal. Finally, if 'PresentationType' is '2', it indicates that the terminal will overlay the notification message on the content in service.

If it is determined in step 2611 that 'PresentationType' of the notification message is '0' indicating that the corresponding message is a message that should be urgently shown to the user, the terminal stops the currently received service in step 2612, generates the notification message in an appropriate format in step 2613 such that it can be directly provided to the user, and outputs the generated notification message to the display in step 2614.

If it is determined in step 2611 that 'PresentationType' of the notification message is '1', the terminal stores the notification message in the memory in step 2615. Thereafter, the user can detect the notification message stored in the memory through an appropriate operation.

If it is determined in step 2611 that 'PresentationType' of the notification message is '2', the terminal proceeds to step 2616 where it reconfigures the notification message according to its defined screen configuration scheme, in order to overlay the received notification message on the service/content currently provided through the display. In step 2617, the terminal overlays the notification message generated in step 2616 on the content currently provided to the user through the display.

However, if 'NotificationType' of the notification message is '1' in step 2605, the terminal determines in step 2630 that the notification message is for terminal use. Thereafter, the terminal checks session information content of the notification message in step 2631, accesses a corresponding session based on content of the session information in step 2632, receives designated contents such as ESG, file, object and the like, through the session in step 2633, and stores or updates the received contents in the memory in step 2634. A process 2640 shown by a dotted line includes steps 2631 to 2634, and can optionally be performed according to setting of the terminal or operation of the user.

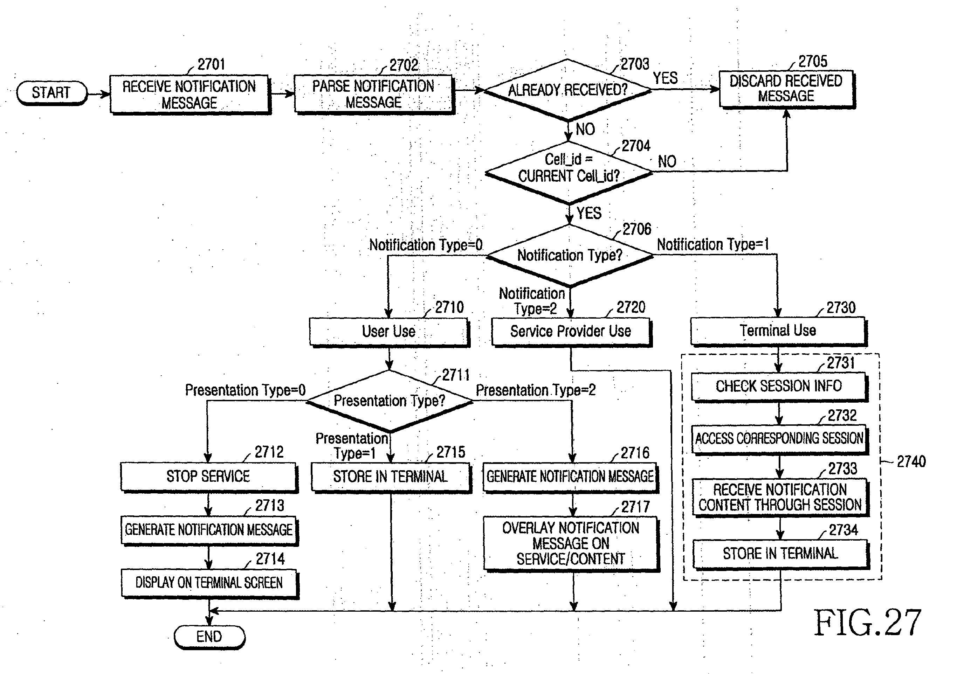

FIG. 27 is a flowchart illustrating another procedure for receiving and processing a notification message by a terminal according to the present invention. Attributes and elements of the notification message have been described above. Referring to FIG. 27, in step 2701, a terminal receives a notification message from a mobile broadcast system. In step 2702, the terminal parses the notification message according to a format of the notification message. If the notification message is configured in the XML format, the terminal parses the received message using an XML parser included therein.

In step 2703, a controller of the terminal compares the previously received notification message with the currently received notification message in terms of 'id' and 'NotificationVersion' in order to determine whether the notification message is an already received message. If the received message is equal to the already received notification message in step 2703, the terminal proceeds to step 2705 where it discards the notification message, and then ends the procedure. However, if the received message is a newly received message, the terminal proceeds to step 2704.

In step 2704, the terminal determines presence/absence of 'Cell_id' in the parsed notification message. In the presence of the 'Cell_id', the terminal compares 'Cell_id' included in the notification message with its current Cell_id. If the values are identical to each other, the terminal proceeds to step 2706. However, if they are not identical to each other, or if the terminal cannot determine its current Cell_id, the terminal can disregard the notification message in step 2705. Although not shown in the drawing, an operation performed after the case where the terminal does not have the current Cell_id can vary according to policy of each network.

In step 2706, the terminal checks 'NotificationType' of the parsed notification message and performs a predefined operation according to the check, and a description thereof will be given below. If 'NotificationType' is '0' indicating a user-use notification message, the terminal proceeds to step 2710. If 'NotificationType' is '1' indicating a terminal-use notification message, the terminal, the terminal proceeds to step 2730. If 'NotificationType' is '2' or greater, indicating a message defined by the service provider, the terminal proceeds to step 2720 where it performs a specific operation defined by the service provider. Herein, for 'NotificationType' ≥ '2', the service provider can freely define and use the notification message according to the business model and service.

In step 2710, because it is determined that the notification message is a received user-use notification message, the terminal can provide the user with the notification message through a display. The received user-use notification message can be a short message or a multimedia message. With the use of the user-use notification message, the service provider can provide various types of messages, such as service event notification, system failure or check notice, text or multimedia advertisement for service and content, disaster broadcast message, charging-related notice, and the like. As described above, priority is set depending on 'PresentationType' of the notification message, and if the received notification message is a high-priority notification message, the terminal outputs the received notification message through the display. Herein, the 'PresentationType' can be freely defined and used according to business model and service of the service provider.

In step 2711, the terminal determines whether to process the notification message, depending on 'PresentationType' of the notification message. If 'PresentationType' of the notification message is '0' in step 2711, it indicates that the corresponding message is a message that should be urgently provided to the user, and if 'PresentationType' is '1', it indicates that the corresponding message will be stored in a memory of the terminal. Finally, if 'PresentationType' is '2', it indicates that the terminal will overlay the notification message on the content in service.

If it is determined in step 2711 that 'PresentationType' of the notification message is '0' indicating that the corresponding message is a message that should be urgently shown to the user, the terminal stops the currently received service in step 2712, generates the notification message in an appropriate format in step 2713 such that it can be directly provided to the user, and outputs the generated notification message to the display in step 2714. Herein, the phrase "generating the notification message" means that if the notification message is generated in the XML format, the terminal generates the notification message such that it can provide text, image, audio and video information included in the message to the user.

If it is determined in step 2711 that 'PresentationType' of the notification message is '1', the terminal stores the notification message in the memory in step 2715. Thereafter, the user can detect the notification message stored in the memory through an appropriate operation.

Finally, if it is determined in step 2711 that 'PresentationType' of the notification message is '2', the terminal proceeds to step 2716 where it reconfigures the notification message according to its supportable screen configuration scheme, in order to overlay the received notification message on the service/content currently provided through the display. In step 2717, the terminal overlays the notification message generated in step 2716 on the content currently provided to the user through the display.

However, if 'NotificationType' of the notification message is '1' in step 2706, the terminal determines in step 2730 that the notification message is for terminal use. Thereafter, the terminal checks session information content of the notification message in step 2731, accesses a corresponding session based on content of the session information in step 2732, receives designated contents such as ESG, file, object and the like, through the session in step 2733, and stores or updates the received contents in the memory in step 2734. A process 2740 shown by a dotted line includes steps 2731 to 2734, and can optionally be performed according to setting of the terminal or operation of the user.

Table 14A, Table 14B and Table 14C show two exemplary notification message formats for 'Service Delivery problem' among the 'EventType's defined in Table 11. That is, for 'Service Delivery problem', any one of Table 14A to Table 14C can be used.

**Table 14A**

| Name | Type | Category | Cardinality | Description | Format |
|---|---|---|---|---|---|
| Service Delivery | E2 | NO/T M | 0..N | When there is problem or change in service delivery in network, corresponding information is transmitted along with notification message. It has the following Attribute: - UsageType It has the following Elements: - IP platform_ID - TS_ID - IP_Address - Service_ID - Time | |
| UsageType | A | NO/T M | 0..N | It is used for notifying whether usage is Network configuration or Service discontinuity. The UsageType is extendable according to service provider. | interger |
| IP latform_ID | E3 | NO/T M | 1 | ID of IP platform corresponding to the service indicated by following Service ID | unsigned byte |
| TS_ID | E3 | NO/T M | 1 | ID of TS corresponding to the service indicated by following Service ID | unsigned byte |
| IP_Address | E3 | NO/T M | 1 | IP Address to which the service indicated by following Service_ID is transmitted. | unsigned byte |
| Service_ID | E3 | NO/T M | 1 | Same value as the value allocated in ESG with Service ID | unsigned byte |
| Time | E3 | NO/TM | 1 | Time the corresponding Event continues, when there is problem in service delivery It has the following Elements: - StartTime - EndTime | |
| StartTime | E4 | NO/TM | 1 | Start time of Event | integer as NTP time |
| EndTime | E4 | NO/TM | 1 | End time of Event | integer as NTP time |

**Table 14B**

| Name | Type | Category | Cardinality | Description | Format |
|---|---|---|---|---|---|
| Service Delivery | E2 | NO/TM | 0..N | When there is problem or change in service delivery in network, corresponding information is transmitted along with notification message. It has the following Attribute: - UsageType It has the following Elements - IP platform_ID - TS_ID - IP_Address - Service_ID - Time | |
| UsageType | A | NO/TM | 0..N | It is used for notifying whether usage is Network configuration or Service discontinuity. The UsageType is extendable according to service provider. | interger |
| IPplatform_ID | E3 | NO/TM | 1 | ID of IP platform corresponding to the service indicated by following Service ID | unsigned byte |
| TS_ID | E3 | NO/TM | 1 | ID of TS corresponding to the service indicated by following Service_ID | unsigned byte |
| IP_Address | E3 | NO/TM | 1 | IP Address to which the service indicated by following Service ID is transmitted. | unsigned byte |
| Service_ID | E3 | NO/TM | 1 | Same value as the value allocated in ESG with Service ID | unsigned byte |
| Time | E2 | NO/TM | 1 | Time the corresponding Event continues It has the following Elements: - StartTime - EndTime | |
| StartTime | E3 | NO/TM | 1..N | Start time of Event | integer as NTP time |
| EndTime | E3 | NO/TM | 1..N | End time of Event | integer as NTP time |

**Table 14C**

| Name | Type | Category | Cardinality | Description | Format |
|---|---|---|---|---|---|
| Service Delivery | E2 | NO/T M | 0..N | When there is problem or change in service delivery in network, corresponding information is transmitted along with notification message. It has the following Attribute: ™ - UsageType It has the following Elements: - Before - After - Time | |
| UsageType | A | NO/T M | 0..N | It is used for notifying whether usage is Network configuration or Service discontinuity. The UsageType is extendable according to service provider. | interger |
| Before | E3 | NO/T M | 1 | Values before change in Network configuration, or they are identification information of the service that will be temporarily stopped, when UsageType is service discontinuity. It has the following Elements: - IP platform_ID - TS_ID - IP_Address - Service_ID | |
| IP platform_ID | E4 | NO/T M | 1 | ID of IP platform corresponding to the service indicated by following Service_ID | unsigned byte |
| TS_ID | E4 | NO/T | 1 | ID of TS corresponding to the service indicated by following M Service_ID | unsigned byte |
| IP_Address | E4 | NO/T M | 1 | IP Address to which the service indicated by following Service_ID is transmitted. | unsigned byte |
| Service_ID | E4 | NO/T M | 1 | Same value as the value allocated in ESG with Service_ID | unsigned byte |
| Frequency | E4 | NO/T M | 1 | Information on Frequency at which the service is transmitted. | unsigned byte |
| After | E3 | NO/T M | 0..1 | Values after change in Network configuration, or they are unused or specific values are all inserted, when UsageType is service discontinuity. It has the following Elements: - IP platform_ID - TS_ID - IP_Address - Service_ID | |
| IP platform_ID | E4 | NO/TM | 1 | ID of IP platform corresponding to the service indicated by following Service_ID | unsigned byte |
| TS_ID | E4 | NO/TM | 1 | ID of TS corresponding to the service indicated by following Service_ID | unsigned byte |
| IP_Address | E4 | NO/TM | 1 | IP Address to which the service indicated by following Service_ID is transmitted. | unsigned byte |
| Service_ID | E4 | NO/TM | 1 | Same value as the value allocated in ESG with Service_ID | unsigned byte |
| Frequency | E4 | NO/TM | 1 | Information on Frequency at which the service is transmitted. | unsigned byte |
| Time | E3 | NO/TM | 1 | Time the Event continues It has the following Elements: - StartTime - EndTime | |
| StartTime | E4 | NO/TM | 1..N | Start time of Event | integer as NTP time |
| EndTime | E4 | NO/TM | 1..N | End time of Event | integer as NTP time |

It is not that Tables 14A-C are used only by a specific event type. For example, 'Time' indicating the time for which the event continues is not restrictively used only for 'Service Delivery problem', and can be used even in other event types. That is, in Table 14B, 'Time' can be independently used. For example, 'Time' can be used for performing an operation of displaying a corresponding notification message on the terminal screen for a specific time. When the notification message of Table 14B sends a request for a specific operation to the terminal, 'Time' indicates the time for which the specific operation should be performed, and a plurality of 'Time' elements can be provided according to type of the operation.

When 'ServiceDelivery' of Table 14A or Table 14B is included in a notification message, the notification message is composed of Generic field and 'ServiceDelivery'. 'EventType' of this notification message can be used for notifying stoppage of a specific service due to a specific cause for a predetermined time, or a change in network configuration during delivery of the service. That is, for the service, IP platform, Transport Stream (TS) and source IP address can be used for notifying addition of a new service, deletion of an old service, and service stop for a predetermined time. Table 14A and Table 14B deliver only the changed result of the service configuration, and the terminal can detect the changed part by comparing received information with its information. Compared to Table 14A and Table 14B, Table 14C shows service configuration information before and after the change, for the case where service configuration is changed using 'Before' and 'After'.

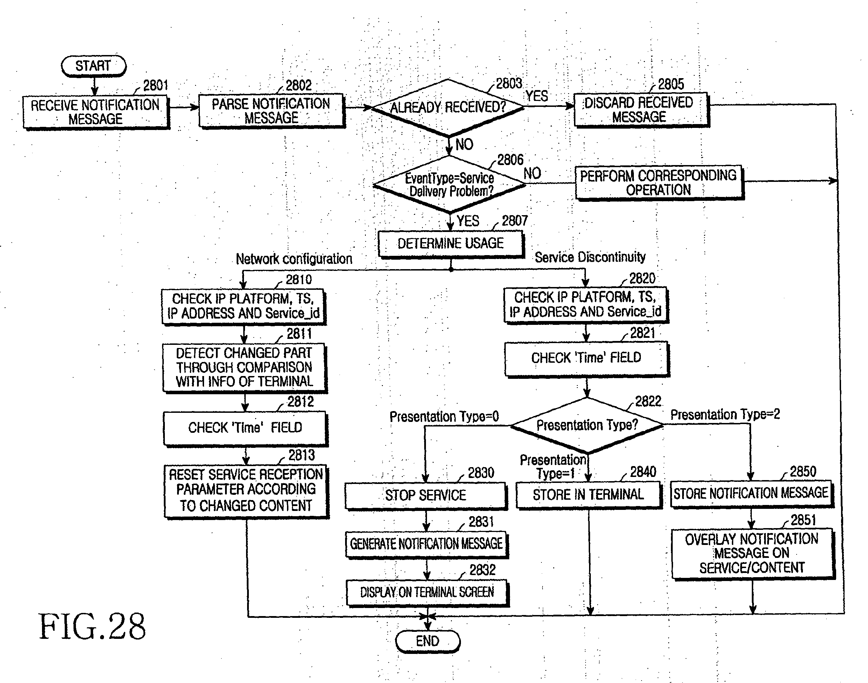

FIG. 28 is a flowchart illustrating an operation of receiving and processing a notification message depending on 'EventType' upon detecting a problem or a change in service delivery in a network according to another embodiment of the present invention. Referring to FIG. 28, a terminal receives a notification message in step 2801, and parses the notification message in step 2802. If it is determined in step 2803 that the notification message is an already received notification message, the terminal proceeds to step 2805 where it discards the notification message. In step 2806, the terminal examines Type of the notification message or 'EventType' included in the notification message and determines whether the notification message is caused by 'Service Delivery problem', and if so, the terminal proceeds to step 2807. However, if 'EventType' of the notification message is not the 'Service Delivery problem', the terminal performs an operation corresponding to the notification message. In this drawing, only the operation for 'EventType' = 'Service Delivery problem' is shown, and operations for the other event types are omitted. In step 2807, the terminal determines whether 'EventType' is 'Network configuration' or 'Service discontinuity', by simply checking 'UsageType' of the notification message.

If 'UsageType' is 'Network configuration', the terminal checks 'IP platform_ID', 'TS_ID', 'IP address' and 'Service_id' of the notification message in step 2810. The 'IP platform_ID', 'TS_ID', 'IP address' and 'Service_id' are identifiers for identifying one service in the DVB network. 'IP platform', generally having the same concept as the service provider, indicates a structure that manages a specific IP flow, and TS means a transport stream given as a result of multiplexing, i.e. means MPEG2 TS in the DVB network. In step 2811, the terminal compares the values checked in step 2810 with the values that it already has for the corresponding service, thereby detecting the changed part. Alternatively, only the changed part can be included in the notification message according to a format of the notification message.

In step 2812, the terminal determines the time at which the corresponding change is made, by checking 'Time' of the notification message. As shown in Table 17, the 'Time' is composed of 'StartTime' and 'EndTime', but for 'UsageType' = 'Network configuration', 'StartTime' indicates a time at which the change is made, and 'EndTime' is commonly given as '0'. In step 2813, the terminal resets service reception parameter values according to the changed content indicated by the notification message. The reset service reception parameter values are used for receiving broadcast contents from the time indicated by the 'StartTime'.

However, if 'UsageType' is 'Service discontinuity' in step 2807, the terminal determines in step 2820 which service is discontinued, by checking 'IP platform_ID', 'TS_ID', 'IP address' and 'Service_id' of the notification message. In step 2821, the terminal determines the time at which the discontinuity occurs, by checking 'Time' of the notification message. In step 2822, the terminal examines 'PresentationType' of the notification message.

If it is determined in step 2822 that 'PresentationType' of the notification message is '0', the terminal stops the currently received service in step 2830, generates the notification message in step 2831 such that it can be directly provided to the user, and outputs the generated notification message to the display in step 2832. If 'PresentationType' is '1', the terminal stores the notification message in a memory in step 2840. Finally, if 'PresentationType' is '2', the terminal reconfigures in step 2850 the notification message according to its supportable screen configuration scheme, in order to overlay the received notification message on the service/content currently provided through the display. In step 2851, the terminal overlays the generated notification message on the content currently provided to the user through the display. Specifically, the terminal displays name and end time of the discontinued service on the screen.

Table 15 shows fields of a notification message that can be shared with previously described embodiments. Elements and attributes not shown in Table 15 are similar to those previously described, so only the parts added or modified are shown herein.

**Table 15**

| Name | Type | Category | Cardinality | Description |
|---|---|---|---|---|
| Notification Message | E1 | NM/TM | 0..1 | Notification message It includes following attributes and elements. Attribute: - Service_id Elements: - Priority - Description - Mediainformation |
| Service_id | A | NO/TM | 0..1 | ID of service related to notification message |
| priority | E2 | NM/TM | 1 | Field indicating priority of notification message |
| Description | E2 | NO/TM | 0..N | Description of notification message Attribute: - Lang |
| Lang | A | NO/TM | 0..1 | language |
| mediaInformation | E2 | NO/TM | 0..1 | Media information contained in notification message Elements: - Text - Picture - Video - Audio |
| Text | E3 | NO/TM | 0..N | Text information Attribute: - Lang |
| Lang | A | NO/TM | 0..1 | language |
| Picture | E3 | NO/TM | 0..N | Picture information Attributes: -MIMEType - PictureURI |
| MIMEType | A | NO/TM | 0..1 | MIME type |
| PictureURI | A | NO/TM | 0..1 | URI indicating location of picture |
| Video | E3 | NO/TM | 0..N | Picture information Attributes: - MIMEType - VideoURI |
| MIMEType | A | NO/TM | 0..1 | MIME type |
| VideoURI | A | NO/TM | 0..1 | URI indicating location of video |
| Audio | E3 | NO/TM | 0..N | Picture information Attributes: - MIMEType - AudioURI |
| MIME Type | A | NO/TM | 0..1 | MIME Type |
| AudioURI | A | NO/TM | 0..1 | URI indicating location of audio |

'Service_id' of Table 15 is for indicating that no UDP port is allocated for a specific notification message and a corresponding notification message is related to a specific service as one of elements of the notification message. The UDP port allocation method is advantageous in that a terminal can recognize a notification message related to a specific service without parsing IP packets one by one, but the method should allocate a UDP port for every service undesirably. Therefore, if 'Service_id' is inserted into a body of the notification message as shown in Table 15, there is a disadvantage that all messages should be parsed, but there is an advantage that a UDP port should not necessarily be allocated for each individual service.

'Priority' is an element indicating priority of the notification message, and is set by the service provider. When the terminal receives more than two notification messages simultaneously, it determines priority for processing the notification messages depending on 'Priority' of the notification messages. That is, unlike the foregoing embodiments for indirectly expressing priority using 'PresentationType', priority can be determined even when it simultaneously receives more than two terminal-use notification messages.

Unlike the foregoing embodiments, 'Description' is an optional value used not for content of the notification message, but for a description of a terminal-use notification message, and 'MediaInformation' is an optional value including not only the audio and video type notification message contents but also the text type notification message contents.

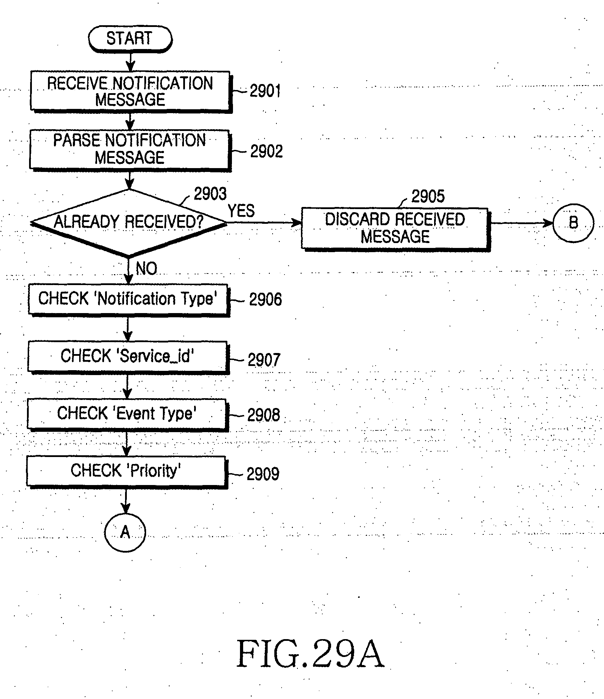

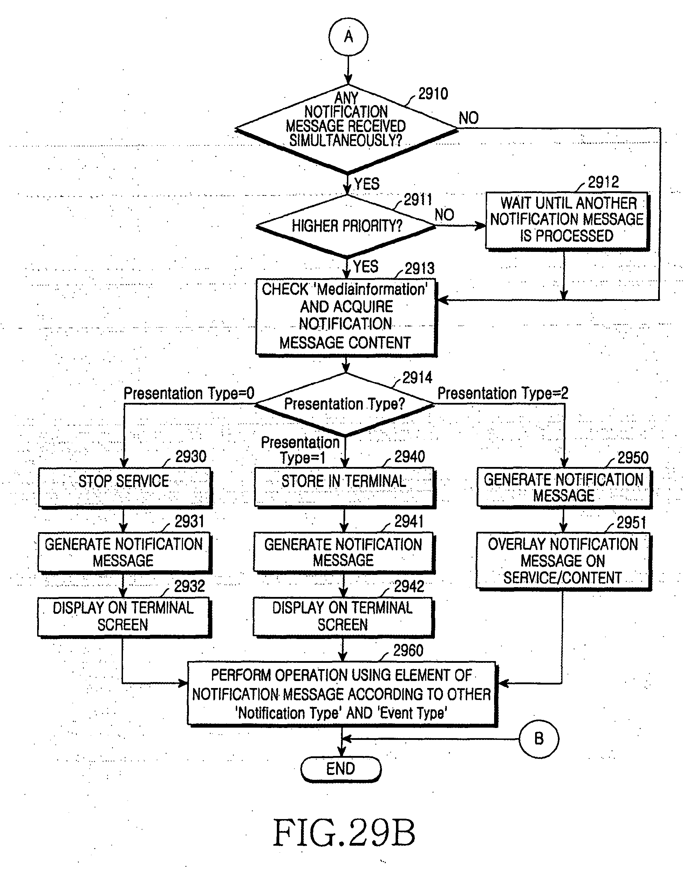

FIGs. 29A and 29B provide a flowchart illustrating an operation of receiving and processing a notification message by a terminal according to the present invention. Referring to FIG. 29, a terminal receives a notification message in step 2901, parses the notification message in step 2902, and determines in step 2903 whether the notification message is an already received message. If the notification message is a repeatedly received message, the terminal proceeds to step 2905 where it discards the notification message. Otherwise, the terminal proceeds to step 2906 where it checks 'NotificationType' of the notification message and performs the succeeding steps if necessary.

In step 2907, the terminal determines presence/absence of and a value of 'Service_id' of the notification message, thereby detecting a specific service related to the notification message. In step 2908, the terminal detects an event related to the notification message by checking 'EventType' of the notification message. Here, fields of the notification message can be parsed in several meanings according to type of the detected event.

The terminal checks 'Priority' of the notification message in step 2909, and then determines in step 2910 whether there is another notification message that arrived at the same time as that of the notification message. If there is another notification message, the terminal compares 'Priority's of the two notification message in step 2911 and determines whether priority of the notification message received in step 2901 is higher. If priority of the notification message is not higher, the terminal first processes another notification message in step 1912 and then proceeds to step 2913. In step 2913, the terminal checks content of the notification message from 'Medialnformation' of the notification message. Thereafter, in step 2914, the terminal performs steps 2930 to 2951 according to 'PresentationType' of the notification message.

If it is determined in step 2914 that 'PresentationType' of the notification message is '0', the terminal stops the currently received service in step 2930, generates the notification message in step 2931 such that it can be directly provided to the user, and outputs the generated notification message to the display in step 2932. If 'PresentationType' is '1', the terminal stores the notification message in a memory in step 2940, receives in step 2941 a user input if any, and displays content of the stored notification message on the screen in step 2942.

Finally, if 'PresentationType' is '2', the terminal proceeds to step 2950 where it reconfigures the notification message according to its supportable screen reconfiguration scheme, in order to overlay the received notification message on the service/content currently provided through the display. In step 2951, the terminal overlays the generated notification message on the content currently provided to the user through the display.

In step 2960, the terminal performs an operation using elements of the notification message based on the 'NotificationType' and 'EventType'.

Table 16 shows an embodiment of the present invention that uses 'EventType' instead of 'NotificationType', different from the prior embodiment in that elements of the ESG update notification message are changed. That is, ESG update information can be transmitted in either of the information forms of the prior embodiments. Elements and attributes of 'ESGAccessDescriptor' follow ESG specification (ETSI TS 102 471V1.1.1) of DVB-CBMS, and it should be considered that if the corresponding specification is changed, values of 'ESGAccessDescriptor' of Table 16 are also changed.

There are two possible changes in the ESG-related details: one is a change in ESG delivery-related part and another is a change in content of an ESG fragment. Because the terminal accesses an announcement session of each ESG entry with the use of 'ESGAccessDescriptor' of Table 16, the terminal can recognize a change in announcement carousel session, recognize a change in content of an ESG init container in an announcement carousel session, or recognize a change in multi-transport session of an ESG using partition declaration information of ESG init container, and can determine which container is updated using an index list and an index structure. That is, with the use of 'ESGAccessDescriptor', the terminal can detect both a change in ESG delivery and a change in ESG fragment content.

As 'ESGFragment' of Table 16 directly delivers an updated ESG fragment in a notification message, the terminal has no need to re-access the ESG transport session. For identification of the updated ESG fragment, the element 'ESGFragment' can be transmitted together with IP version, IP address to which a corresponding ESG fragment is transported, port number, and updated Transport Object Identifier (TOI) (which is a value for identifying each transport entity in a FLUTE protocol, and includes update information as TOI is composed of version information and container identifier), and it can be configured such that if there is a limitation on the length of the notification message, only the identification information except for the ESG fragment itself is transmitted so that the terminal can immediately access the corresponding session and receive only the corresponding fragment.

**Table 16**

| Name | Type | Category | Cardinality | Description |
|---|---|---|---|---|
| Notification Message | E1 | NM/TM | 0..1 | Notification message It includes following attributes and elements. Attributes: - Id - Validity - Version - EventType Elements: - ESGAccessDescriptor - ESGFragment |
| id | A | NM/TM | 1 | ID of notification message |
| Validity | A | NM/TM | 1 | Valid period of notification message |
| Version | A | NM/TM | 1..N | Version information of notification message |
| EventType | A | NM/TM | 1 | event type of notification message |
| ESGAccessDescript or | E2 | NO/TM | 0..1 | Information for indicating ESG update of notification message Elements: - N_o_ESGEntries - ESGEntry |
| N_o_ESGEntries | E3 | NO/TM | 0..1 | Number of entries containing access information of each ESG |
| ESGEntry | E3 | NO/TM | 0..N | Access information of each ESG Elements: - ESGEntryVersion - ESGEntryLength - MultipleStreamTransport - IPversion6 - ProviderID - SourceIPAddress - DestinationIPAddress - Port - TSI |
| ESGEntryVersion | E4 | NO/TM | 0..1 | Version information of ESGEntry |
| ESGEntryLength | E4 | NO/TM | 0..1 | Size of remaining information except for ESGEntryVersion and ESGEntryLenth |
| MultipleStreamTransport | E4 | NO/TM | 0..1 | Information indicating whether each ESG is transmitted with a plurality of stream or a single stream. |
| IPversion6 | E4 | NO/TM | 0..N | Information indicating whether IP address follows IP ver 6 |
| ProviderID | E4 | NO/TM | 0..1 | ESG provider ID |
| SourceIPAddress | E4 | NO/TM | 0..1 | Source address of each ESG |
| DestinationIPAddress | E4 | NO/TM | 0..1 | Destination address of each ESG |
| Port | E4 | NO/TM | 0..1 | Port number of FLUTE session where ESG is transported. |
| TSI | E4 | NO/TM | 0..1 | Transport session identifier (TSI) of FLUTE session where ESG is transported. |
| ESGFragment | E2 | NO/TM | 0..N | Updated ESG fragment Attributes: - IPVersion6 - IPAddress - Port - TOI Element: - Fragment |
| IPVersion6 | A | NO/TM | 0..1 | Information indicating whether IP address follows IP ver 6 |
| IPAddress | A | NO/TM | 0..1 | IP address to which updated ESG container is transported. |
| Port | A | NO/TM | 0..1 | Port number where updated ESG container is transported. |
| TOI | A | NO/TM | 0..1 | TOI value of updated ESG container, for which updated details are taken into account. |
| Fragment | E3 | NO/TM | 0..1 | Actually updated ESG fragment |

As another example, it is also possible to extend 'ESGFragment' in a general way, and use it for a change in delivery path of information in all file formats and in the information itself, transmitted using not only the ESG but also the FLUTE session. In this case, the TOI attribute can be replaced with a general File Delivery Table (FDT) instance. The FDT instance is a table with which basic information of file entities, transmitted in a FLUTE session, i.e. valid period, content-type, content-encoding, FEC code information, and the like, is transmitted. That is, the 'ESGFragment' can be configured as shown in Table 17.

**Table 17**

| Name | Type | Category | Cardinality | Description |
|---|---|---|---|---|
| TransportObject | E2 | NO/TM | 0..N | TransportObject updated in FLUTE session Attributes: - IPVersion6 - IPAddress - Port -TOI Element: - TransportObject |
| IPVersion6 | A | NO/TM | 0..1 | Information indicating whether IP address follows IPv6. |
| IPAddress | A | NO/TM | 0..1 | IP address to which updated Transport Object is transported. |
| Port | A | NO/TM | 0..1 | Port number where updated Transport Object is transported. |
| TOI | A | NO/TM | 0..1 | TOI value of updated Transport Object, for which updated details are taken into account. |
| Transport Object | E3 | NO/TM | 0..1 | Actually updated Transport Object |

FIGs. 30A and 30B provide a flowchart illustrating a reception operation of a terminal according to the present invention. Referring to FIG. 30, a terminal receives a notification message in step 3001, parses the notification message in step 3003, and then detects service identification information included in the notification message in step 3006. The service identification information includes identification information indicating the specific service, and the terminal can distinguish a service with a port number, as done in Operation A 410, or can distinguish services with Service_id directly included in the notification message as described in regard to FIGs. 29A-B and related description. Herein, a combination of the two methods is shown by service identification information check.

The terminal checks version information of the notification message in step 3010, checks a 'Validity' value indicating a valid period of the notification message in step 3013, and checks priority in step 3016. Next, the terminal determines in step 3020 whether another notification message other than the received notification message has been received. If there is no another received notification message, the terminal proceeds to step 3033 to check an 'EventType' field value of the notification message. However, if there is another received notification message, the terminal determines in step 3023 whether the notification message received in step 3001 is higher in priority than another received notification message. If the received notification message is not higher in priority, the terminal waits in step 3030 until another notification message with higher priority is processed, and then proceeds to step 3033. However, if the notification message received in step 3001 is higher in priority, the terminal directly proceeds to step 3033.

In step 3033, the terminal checks 'EventType' of the notification message. The notification message may have a different format according to 'EventType'. Thereafter, in step 3036, the terminal receives the notification message by detecting a 'Time Window' value of the notification message, and then checks a 'Time Window' value for the case where it should take a certain action. In step 3040, the terminal checks content of the notification message for each individual medium by determining presence/absence of and content of a 'MediaInformation' field.

In step 3043, the terminal determines presence/absence of and a value of a 'PresentationType' field of the notification message, and operates depending on the notification message rendering method and time for each individual type. For example, for 'PresentationType'='0', the terminal stops the currently received service in step 3046, generates a notification message for the user in step 3050, and displays the notification message on the terminal screen or reproduces voice information in step 3053. For 'PresentationType'='1', the terminal first stores the notification message in step 3060, and renders the stored notification message according to user input or renders the stored notification message at a specific time according to the 'Time Window' value in step 3062. Finally, for 'PresentationType'='2', the terminal generates a notification message for the user in step 3063, and overrides the generated notification message on the screen of the currently received service in step 3066.

In step 3070, the terminal determines presence/absence of and content of session information in the notification message. In the presence of the session information, the terminal accesses in step 3073 the session indicated by the session information and receives the corresponding information. In step 3076, the terminal checks ESG update or FLUTE update information according to the received information. In step 3080, the terminal updates FLUTE session transport information like the ESG according to the received information, or accesses the corresponding FLUTE session, and receives an updated ESG fragment and a file object. Alternatively, if an ESG fragment or another Transport object of the FLUTE session is included the notification message, the terminal updates a corresponding file and an ESG fragment stored therein, using IP address, port number and updated TOI information. Finally, in step 3083, the terminal checks the notification message content defined by the Service Provider (SP) and performs a necessary terminal operation.

### IV. Apparatus

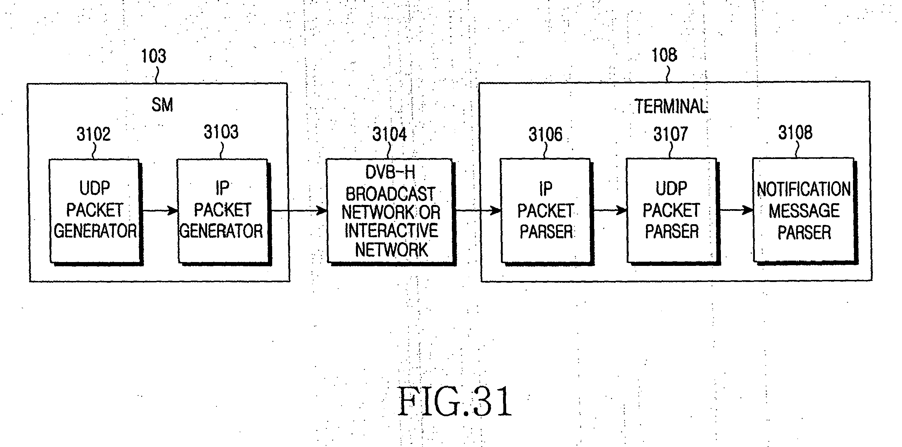

FIG. 31 is a block diagram illustrating a broadcast system for delivering a notification message, and a terminal according to the present invention. Herein, for a service management block 103 and a terminal 108, reference will be made to FIG. 1. Specifically, transmission and reception of a notification message can be performed by a NDAF block 103b of the service management block 103, and a notification client function block 108a of the terminal 108.

Referring to FIG. 31, the service management block 103 takes charge of delivering a notification message to one terminal or one group of terminals, and includes UDP packet generator 3102 and an IP packet generator 3103. The UDP packet generator 3102, if it has notification message information delivered from the notification event function block 102a, generates a UDP packet including the notification message information using a predetermined notification port number, and then transports the UDP packet to the IP packet generator 3103. To avoid a decrease of efficiency, the notification message information is directly input to the UDP packet generator 3102, since when a transport protocol of another upper layer is used, a protocol header size is relatively greater than a message size that the terminal desires to actually transmit.

The IP packet generator 3103 generates an IP packet from the UDP packet transported from the UDP packet generator 3102 using an IP address of the ongoing session related to the notification message information. It is generally possible to packetize a common notification message simply with the UDP port number, but there is a need for a separate IP session in order to wake up a sleeping terminal and allow the terminal to receive the common notification message. This is because the terminal awaken from sleeping has no ongoing session. Taking this situation into account, the IP packet generator 3103 generates not only the packet for the IP address of the ongoing session, but also the packet for an IP address of a predetermined 'NotificationAddress'.

The generated IP packets are transmitted to the terminal 108 via a Broadcast Distribution System (BDS) such as a DVB-H broadcast network, or a transport network 3104 such as an interactive network. The terminal 108 acquires a notification message by decapsulating the IP packets. To this end, the terminal 108 includes an IP packet parser 3106, a UDP packet parser 3107, and a notification message parser 3108. The IP packet parser 3106 determines whether each of the IP packets received via the transport network 3104 corresponds to the ongoing session, or is designated to a notification message reception address 'NotificationAddress'. If the IP packet has an IP address corresponding to the 'NotificationAddress', the IP packet parser 3106 acquires a UDP packet by decapsulating the IP header with the IP address, and then delivers the UDP packet to the UDP packet parser 3107. However, if the IP packet does not have an IP address corresponding to the 'NotificationAddress', the IP packet parser 3106 discards or disregards the IP packet.

The UDP packet parser 3107 delivers the UDP packet transported from the IP packet parser 3106 to an upper layer (i.e. application) only when the UDP packet is a packet corresponding to the ongoing session. However, if the UDP packet has a notification message port number preset through 'NotificationPort', the UDP packet parser 3107 acquires a notification message by decapsulating the UDP packet, and then delivers the notification message to the notification message parser 3108 without delivering it to the application. The notification message parser 3108 parses the notification message and determines a future operation of the terminal according thereto.

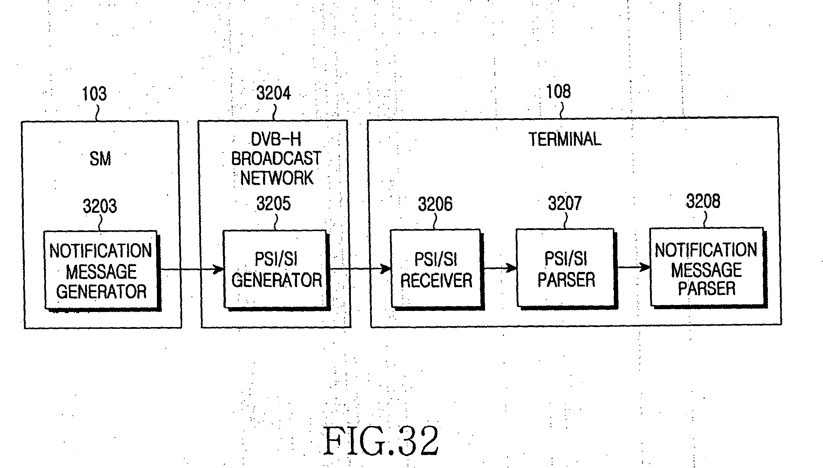

FIG. 32 is a block diagram illustrating a mobile broadcast system for delivering a notification message, and a terminal according to the present invention. Herein, the system configuration according to the embodiment described in regard to FIGs. 14-16 is shown as an example of a detailed configuration of the mobile broadcast system. In addition, a DVB-H broadcast network is shown as an example of a transport network.

Referring to FIG. 32, a notification message generator 3203 of a service management block 103 generates a notification message using gathered notification message information, and delivers the notification message to a PSI/SI generator 3205 of a DVB-H broadcast network 3204. The PSI/SI generator 3205 generates a PSI/SI signal with the notification message and other control information together, and transmits the PSI/SI signal to terminal 108. A PSI/SI receiver 3206 of terminal 108 receives the PSI/SI signal, and a PSI/SI parser 3207 parses the PSI/SI signal thereby extracting the notification message. Thereafter, a notification message parser 3208 parses the notification message and performs an operation according thereto.

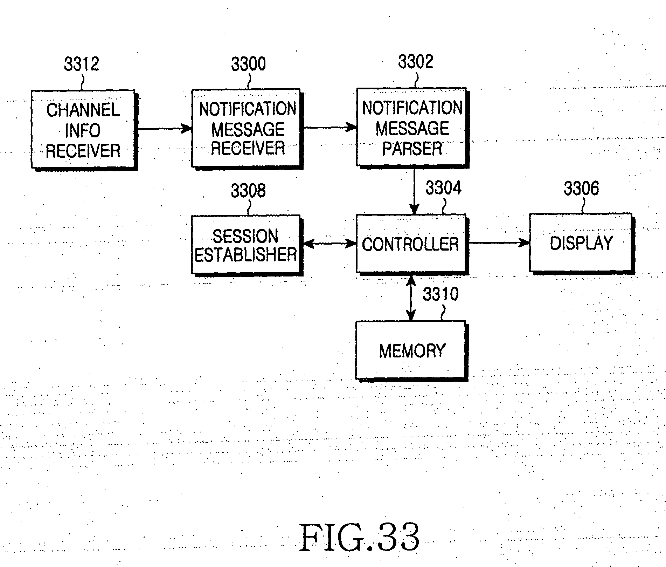

FIG. 33 is a block diagram illustrating a detailed structure of a terminal according to the present invention. Referring to FIG. 33, a channel information receiver 3312 receives notification message channel information and provides the notification message channel information to a notification message receiver 3300. The notification message receiver 3300 receives the notification message from a mobile broadcast system using the channel information, and delivers the received notification message to a notification message parser 3302. To this end, the notification message receiver 3300 includes an IP packet parser 3106 and a UDP packet parser 3107 as shown in FIG. 31, or includes a PSI/SI receiver 3206 and a PSI/SI parser 3207 as shown in FIG. 32.

The notification message parser 3302 parses the notification message received from the mobile broadcast system via the notification message receiver 3300 according to a corresponding message format. If the notification message parser 3302 receives the notification message from the mobile broadcast system in a binary format, it includes a predetermined function block (not shown) for parsing the notification message in the binary format. In another case, if the notification message is configured in the XML form, the notification message parser 3302 parses the notification message using an XML parser (not shown) included therein.

The notification message parser 3302 parses the notification message received via the notification message receiver 3300, checks 'NotificationType', which is one of attributes of the notification message, and delivers the content to a controller 3304. For example, if 'NotificationType' is '0' indicating a user-use notification message, the notification message parser 3302 delivers the content to the controller 3304. The controller 3304 controls an operation of the terminal depending on 'NotificationType' of the notification message passed by the notification message parser 3302 according to at least one of the embodiments of the present invention.

For example, in the embodiment described in regard to FIGs. 21-22, if 'NotificationType' is '0', the controller 3304 provides the notification message to the user through a display 3306. Here, the notification message can be a short message or a multimedia message. However, if 'NotificationType' is '1', the controller 3304 recognizes that the notification message is an update notice for the ESG and service. Therefore, in order to check the changed or updated session information content, the controller 3304 accesses a corresponding session indicated by the notification message through a session establisher 3308, receives designated contents such as ESG, file, object, and the like, through the session, and stores the received contents in a memory 3310. Herein, the phrase "accessing a corresponding session" refers to an operation of accessing the mobile broadcast system using session information specified in the notification message.

As another example, if a version of the notification message is equal to a version of the previously received notification message, the controller 3304 discards the notification message described in regard to FIGs. 21-22. However, if the versions are not equal to each other, i.e. if the notification message is a new one, the controller 3304 performs a corresponding operation according to content of the notification message. Specifically, through the 'id' of Table 3 and the 'NotificationVersion' described in regard to FIGs. 21-22.

If 'PresentationType' of the notification message passed by the notification message parser 3302 is '1', the controller 3304 stores content of the notification message in the memory 3310 so that the user can use it later.

If 'NotificationType' of the notification message passed by the notification message parser 3302 is '1', the session establisher 3308 accesses a corresponding session indicated by session information of the notification message under the control of the controller 3304, and receives the designated contents such as ESG, file, object, and the like, through the accessed session. The memory 3310 stores the ESG, file and object received via the session establisher 3308, and stores a notification message with 'PresentationType'='1'.

The display 3306 generally displays text, picture, video and image under the control of the controller 3304. If 'PresentationType' is '0', the display 3306, under the control of the controller 3304, stops the content in service, and outputs content of the notification message. However, if 'PresentationType' of the notification message is '2', the display 3306, under the control of the controller 3304, overlays content of the received notification message on the content in service.

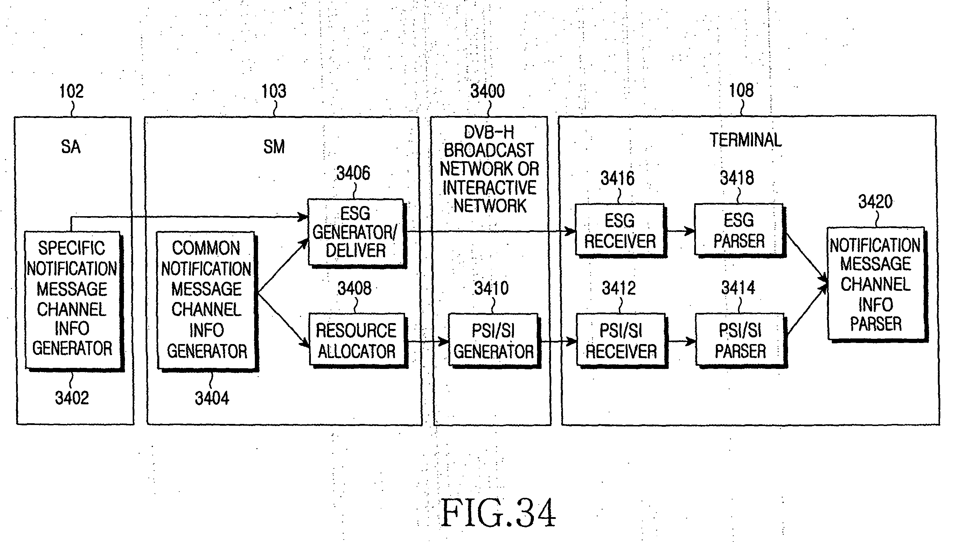

FIG. 34 is a block diagram illustrating a broadcast system and a terminal for transmitting/receiving notification message channel information according to the present invention. Herein, functional entities related to transmission/reception of notification message channel information are shown for the case where PSI/SI scheme and ESG scheme are used.

Referring to FIG. 34, a specific notification message channel information generator 3402 of a service application (SA) 102 generates specific notification message channel information, and a common notification message channel information generator 3404 of a service management block (SM) 103 generates common notification message channel information. Because the service application 102 is an entity that transmits file and streaming service of DVB-CBMS, the specific notification message channel information related to a specific service is generated therein.

When channel information is transmitted using the ESG scheme, the channel information is inserted into an ESG by an ESG generation/delivery unit 3406, and the ESG is delivered to Terminal 108 via a transport network 3400. An ESG receiver 3416 of Terminal 108 receives information on an ESG bootstrap session in the ESG and fragments of an ESG data model, and an ESG parser 3418 decodes the information delivered from the ESG receiver 3416 and extracts notification message channel information therefrom. Then a notification message channel information parser 3420 parses the extracted channel information and delivers it to a notification message receiver 3300 of FIG. 33.

When channel information is transmitted using the PSI/SI scheme, the common notification message channel information is especially delivered to a resource allocator 3408. The resource allocator 3408 transmits the common notification message channel information along with other PSI/SI information to a transport network 3400, in particular, to a PSI/SI generator 3410 of a DVB-H broadcast network. The PSI/SI generator 3410 generates a PSI/SI signal including the common notification message channel information, and transports the PSI/SI signal to the Terminal 108 via a broadcast network.

A PSI/SI receiver 3412 of terminal 108 receives the PSI/SI signal, and delivers the received PSI/SI signal to a PSI/SI parser 3414. The PSI/SI parser 3414 parses the PSI/SI signal, and extracts the common notification message channel information therefrom. Then the notification message channel information parser 3420 parses the extracted channel information, and delivers it to the notification message receiver 3300 of FIG. 33.

As can be understood from the foregoing description, the present invention sets and transmits channel information such as IP address and UDP port for delivery of a notification message, through a fragment or a PSI/SI signal in an ESG bootstrap descriptor or an ESG, so the terminal has no need to parse all headers for received packets in order to receive the notification message, making it possible to reduce overhead and deliver a notification message even to the terminals which are sleeping or interworking with another system.

In addition, the present invention delivers a notification message with a scheme suitable for a broadcast service using a UDP packet, or carries the notification message on a PSI/SI signal which is a DVB-H specific control signal, thereby delivering the notification message with a reliable scheme. Further, as a DVB-CBMS network delivers a notification message suitable for each notification event type, the terminal can receive the notification message with which it can receive unscheduled abrupt events or notices from the service provider.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for transmitting a notification message in a mobile broadcast system, the method comprising:
transmitting common notification message channel information necessary for receiving a common notification message for all users capable of receiving broadcast services, along with an Electronic Service Guide (ESG) for the broadcast services or a control signal for the broadcast services;
transmitting specific notification message channel information necessary for receiving a specific notification message for a specific user group to a terminal in the specific user group along with the ESG;
generating at least one of the common notification message and the specific notification message; and
transmitting the generated notification message to the terminal using corresponding channel information.

2. The method of claim 1, wherein the channel information comprises at least one of an Internet Protocol (IP) address, a User Datagram Protocol (UDP) port, and a Transmission Control Protocol (TCP) port, used for transmission of the corresponding notification message.

3. The method of claim 1, wherein the common notification message channel information is transmitted using at least one of an ESG provider discovery descriptor, an ESG access descriptor and a notification descriptor, transported through a bootstrap session of the ESG.

4. The method of claim 1, wherein the common notification message channel information is transmitted using at least one of an ESG initialization container and an ESG index container including a notification descriptor, transported through an announcement carousel session of the ESG.

5. The method of claim 1, wherein the common notification message channel information is transmitted using Program Specific Information/Service Information (PSI/SI) indicative of a control signal of a Digital Video Broadcasting-Handheld (DVB-H) network.

6. The method of claim 1, wherein the specific notification message channel information is transmitted using at least one of an acquisition fragment and a notification fragment of the ESG.

7. The method of claim 1, wherein the specific user group comprises users who receive a specific broadcast service.

8. A method for receiving a notification message in a mobile broadcast system, the method comprising:
receiving a control signal for broadcast services via a broadcast network;
receiving an Electronic Service Guide (ESG) for the broadcast services;
extracting, from the ESG or the control signal, common notification message channel information necessary for receiving a common notification message for all users capable of receiving the broadcast services;
extracting, from the ESG, specific notification message channel information necessary for receiving a specific notification message for a specific user group; and
receiving at least one of the common notification message and the specific notification message depending on the channel information.

9. The method of claim 8, wherein the channel information comprises at least one of an Internet Protocol (IP) address, a User Datagram Protocol (UDP) port, and a Transmission Control Protocol (TCP) port, used for transmission of a corresponding notification message.

10. The method of claim 8, wherein the common notification message channel information is received using at least one of an ESG provider discovery descriptor, an ESG access descriptor and a notification descriptor, transported through a bootstrap session of the ESG.

11. The method of claim 8, wherein the common notification message channel information is received using at least one of an ESG initialization container and an ESG index container including a notification descriptor, transported through an announcement carousel session of the ESG.

12. The method of claim 8, wherein the common notification message channel information is received using Program Specific Information/Service Information (PSI/SI) indicative of a control signal of a Digital Video Broadcasting-Handheld (DVB-H) network.

13. The method of claim 8, wherein the specific notification message channel information is received using at least one of an acquisition fragment and a notification fragment of the ESG.

14. The method of claim 8, wherein the specific user group comprises users who receive a specific broadcast service.

15. An apparatus for transmitting a notification message in a mobile broadcast system, the apparatus comprising:
a common notification message channel information generator for generating common notification message channel information necessary for receiving a common notification message for all users capable of receiving broadcast services;
a specific notification message channel information generator for generating specific notification message channel information necessary for receiving a specific notification message for a specific user group;
an Electronic Service Guide (ESG) generation/delivery unit for transmitting at least one of the common notification message channel information and the specific notification message channel information to a terminal along with an ESG;
a control signal generator for including the common notification message channel information in a control signal for the broadcast services, and transmitting the control signal to the terminal via a broadcast network;
a notification message generator for generating at least one of the common notification message and the specific notification message; and
a notification message transmitter for transmitting the generated notification message to the terminal using corresponding channel information.

16. The apparatus of claim 15, wherein the channel information comprises at least one of an Internet Protocol (IP) address, a User Datagram Protocol (UDP) port, and a Transmission Control Protocol (TCP) port, used for transmission of a corresponding notification message.

17. The apparatus of claim 15, wherein the common notification message channel information is transmitted using at least one of an ESG provider discovery descriptor, an ESG access descriptor and a notification descriptor, transported through a bootstrap session of the ESG.

18. The apparatus of claim 15, wherein the common notification message channel information is transmitted using at least one of an ESG initialization container and an ESG index container including a notification descriptor, transported through an announcement carousel session of the ESG.

19. The apparatus of claim 15, wherein the common notification message channel information is transmitted using Program Specific Information/Service Information (PSI/SI) indicative of a control signal of a Digital Video Broadcasting-Handheld (DVB-H) network.

20. The apparatus of claim 15, wherein the specific notification message channel information is transmitted using at least one of an acquisition fragment and a notification fragment of the ESG.

21. The apparatus of claim 15, wherein the specific user group comprises users who receive a specific broadcast service.

22. An apparatus for receiving a notification message in a mobile broadcast system, the apparatus comprising:
a control signal receiver for receiving a control signal for broadcast services via a broadcast network;
an Electronic Service Guide (ESG) receiver for receiving an ESG for the broadcast services;
a notification message channel information parser for extracting, from the ESG or the control signal, common notification message channel information necessary for receiving a common notification message for all users capable of receiving the broadcast services, and extracting, from the ESG, specific notification message channel information necessary for receiving a specific notification message for a specific user group; and
a notification message receiver for receiving at least one of the common notification message and the specific notification message depending on the channel information.

23. The apparatus of claim 22, wherein the channel information comprises at least one of an Internet Protocol (IP) address, a User Datagram Protocol (UDP) port, and a Transmission Control Protocol (TCP) port, used for transmission of a corresponding notification message.

24. The apparatus of claim 22, wherein the common notification message channel information is received using at least one of an ESG provider discovery descriptor, an ESG access descriptor and a notification descriptor, transported through a bootstrap session of the ESG.

25. The apparatus of claim 22, wherein the common notification message channel information is received using at least one of an ESG initialization container and an ESG index container including a notification descriptor, transported through an announcement carousel session of the ESG.

26. The apparatus of claim 22, wherein the common notification message channel information is received using Program Specific Information/Service Information (PSI/SI) indicative of a control signal of a Digital Video Broadcasting-Handheld (DVB-H) network.

27. The apparatus of claim 22, wherein the specific notification message channel information is received using at least one of an acquisition fragment and a notification fragment of the ESG.

28. The apparatus of claim 22, wherein the specific user group comprises users who receive a specific broadcast service.
